# EUROPEAN PATENT SPECIFICATION

(11) **EP 4 492 219 B1**
(45) Date of publication and mention of the grant of the patent: **25.11.2026**
(21) Application number: 23819181.1
(22) Date of filing: 07.06.2023
(51) Int. Cl.: G06F 3/14, G06F 1/16, G06F 3/04886

(54) **FOLDABLE-SCREEN ELECTRONIC DEVICE DISPLAY AND CONTROL METHOD, AND FOLDABLE-SCREEN ELECTRONIC DEVICE**
ANZEIGE UND STEUERUNGSVERFAHREN FÜR ELEKTRONISCHE VORRICHTUNG MIT FALTBAREM BILDSCHIRM UND ELEKTRONISCHE VORRICHTUNG MIT FALTBAREM BILDSCHIRM
PROCÉDÉ D'AFFICHAGE ET DE COMMANDE DE DISPOSITIF ÉLECTRONIQUE À ÉCRAN PLIABLE, ET DISPOSITIF ÉLECTRONIQUE À ÉCRAN PLIABLE

(30) Priority: 10.06.2022 CN 202210657994
(43) Date of publication of application: 15.01.2025
(73) Proprietor: Huawei Technologies Co., Ltd., Shenzhen, Guangdong 518129 (CN)
(72) Inventor: YANG, Wanyi, Shenzhen, Guangdong 518129 (CN); XU, Liang, Shenzhen, Guangdong 518129 (CN)
(74) Representative: Grünecker Patent- und Rechtsanwälte PartG mbB
(86) International application number: PCT/CN2023/098940
(87) International publication number: WO 2023/237016

(56) References cited:
- EP-B1- 4 020 152
- CN-A- 107 765 775
- CN-A- 109 947 508
- CN-A- 110 806 829
- CN-A- 110 806 829
- CN-A- 111 475 077
- CN-A- 113 645 351
- US-A1- 2023 046 708

## Description

### TECHNICAL FIELD

This application relates to the field of terminal technologies, and in particular, to a display and control method for a foldable electronic device, and a foldable electronic device.

### BACKGROUND

With the development of screen technologies, a foldable electronic device (for example, a foldable mobile phone or a foldable tablet computer) inevitably has a plurality of folding manners in the future, and different folding manners bring more changes in layouts and use manners.

However, although a current foldable electronic device can separately display a same interface in different screen areas after folding, a direction of an interface displayed in each screen area does not change, and switching between interfaces displayed in different screen areas is not involved. This is not applicable to a use scenario with a plurality of users, and user experience is reduced.
CN 110806829 A discloses a display method including detecting a status of the foldable screen; displaying at least one application interface on the first screen and/or the second screen according to a corresponding first display policy if the status of the foldable screen is a support state or a folded state; or if the status of the foldable screen is an unfolded state, displaying at least one application interface on the foldable screen in the unfolded state according to a corresponding second display policy, where in the unfolded state, the first screen and the second screen form a same plane or form an approximately same plane, and the first display policy is different from the second display policy. The same content can be displayed on two screens in the unfolded state. CN 113645351 A discloses a display device that allows display on two in-folded screens and one out-folded screen.

### SUMMARY

This application provides a display and control method for a foldable electronic device, and a foldable electronic device, so that a plurality of users can use a same application or different applications on a same foldable electronic device, requirements of the plurality of users for simultaneously using and controlling the foldable electronic device are met, user operations are simplified, and user experience is improved.
The word "invention" as used in the present description refers to the inventive concept as understood by the applicant at the time of filing the patent application. The matter for which protection is sought is defined in the appended claims. All following occurrences of the word "embodiment(s)", if referring to feature combinations different from those defined by the independent claims, refer to examples which were originally disclosed but which do not represent embodiments of the presently claimed invention; these examples are still shown for illustrative purposes only.

According to a first aspect, a display and control method for a foldable electronic device is provided. The method is applied to a foldable electronic device, and the method includes:
receiving a first operation of a user, where the first operation is used to fold a screen of the foldable electronic device; and determining display content and display directions of different screen areas of the foldable electronic device based on a placement manner and a folding manner of the foldable electronic device, where any two screen areas are located on two sides of a folding area of the foldable electronic device.

According to the display and control method for a foldable electronic device provided in the first aspect, the foldable electronic device may determine the folding manner and the placement manner of the foldable electronic device based on data detected by a sensor (for example, an angle sensor, a gravity sensor, a folding sensor, or a gyroscope) in the foldable electronic device, so as to adjust display content and a display direction of each screen area based on the folding manner and the placement manner of the foldable electronic device, so that requirements of a plurality of users for simultaneously using and controlling the foldable electronic device are met, user operations are simplified, and user experience is improved.

For example, the foldable electronic device may include a foldable mobile phone, a foldable tablet computer, or the like.

For example, the foldable electronic device may determine the folding manner and the placement manner of the foldable electronic device based on the data detected by the sensor (for example, the angle sensor, the gravity sensor, the folding sensor, or the gyroscope). A processor of the foldable electronic device may determine the display content and the display directions of the different screen areas of the foldable electronic device based on the placement manner and the folding manner of the foldable electronic device.

Optionally, in some embodiments of this application, based on a folding manner (for example, an inward folding manner or an outward folding manner) and a placement manner of a user for a foldable mobile phone, a quantity of users, and the like, use statuses (modes) of the foldable mobile phone may be classified into four modes: a sharing mode, an efficiency mode, an immersive mode, and a privacy mode.

The sharing mode is mainly used for a plurality of users to simultaneously view or use a same interface in different screen areas, that is, at least one same display interface is shared between different users, so that a plurality of users can simultaneously view a same page (interface) from different angles.

The efficiency mode is mainly used for one user to simultaneously use different applications in different display areas, or for a plurality of users to simultaneously use different applications in different display areas. In this way, a plurality of users can simultaneously use different applications, or one user can simultaneously use different applications.

The immersive mode is mainly used for one user to immersively use one application in one screen area, or for one user to immersively use different pages of one application in a plurality of screen areas. Optionally, a screen display area that cannot be seen by the user may be screen-off, and display no interface. This is convenient for one user to immersively use different pages of one application, and power of the electronic device can be saved.

The privacy mode is mainly used to ensure that main application information that pops up in a screen area for a main user and that is not displayed in the screen area is not shared with another user in the sharing mode. For example, the main application information that is not displayed in the screen area may include a system notification message, an application layer input notification message, a floating window, a floating bubble, or the like. That is, only a main application displayed in the screen area is shared with another user, so as to better protect privacy of the main user.

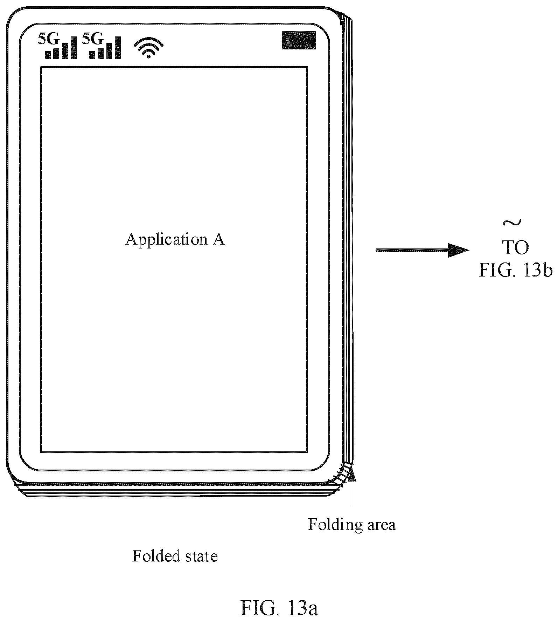

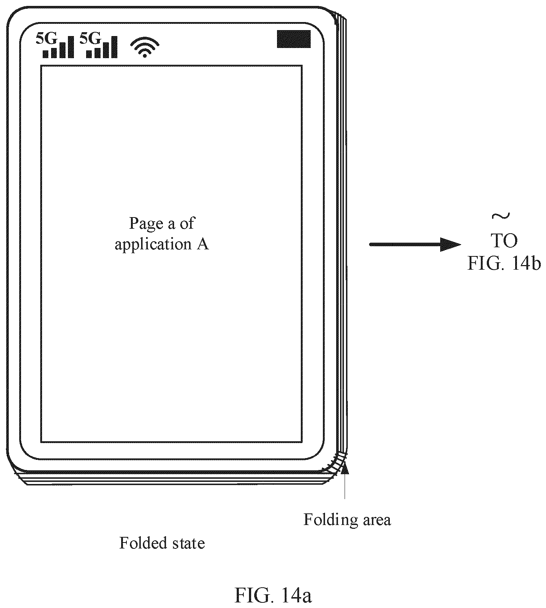

In a possible implementation of the first aspect, the foldable electronic device includes a first screen area and a second screen area, a manner of folding the first screen area and the second screen area around a hinge in a folding area is an outward folding manner, the hinge in the folding area is parallel to a placement plane, and the first screen area and the second screen area display a same interface and have opposite display directions. For example, refer to specific descriptions corresponding to FIG. 13a to FIG. 13d and FIG. 14a to FIG. 14f. In this implementation, two or more users can simultaneously view a same page (interface) from different angles (directions), thereby improving user experience.

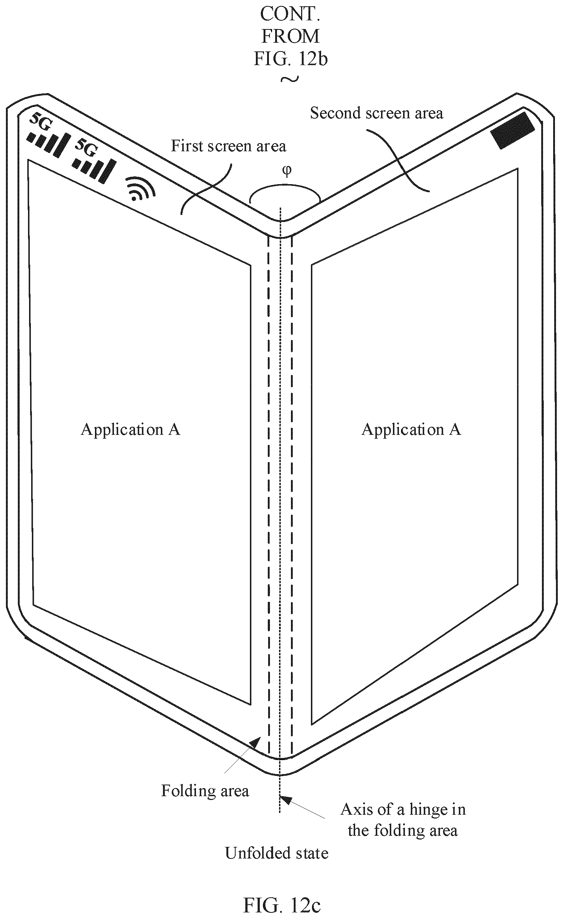

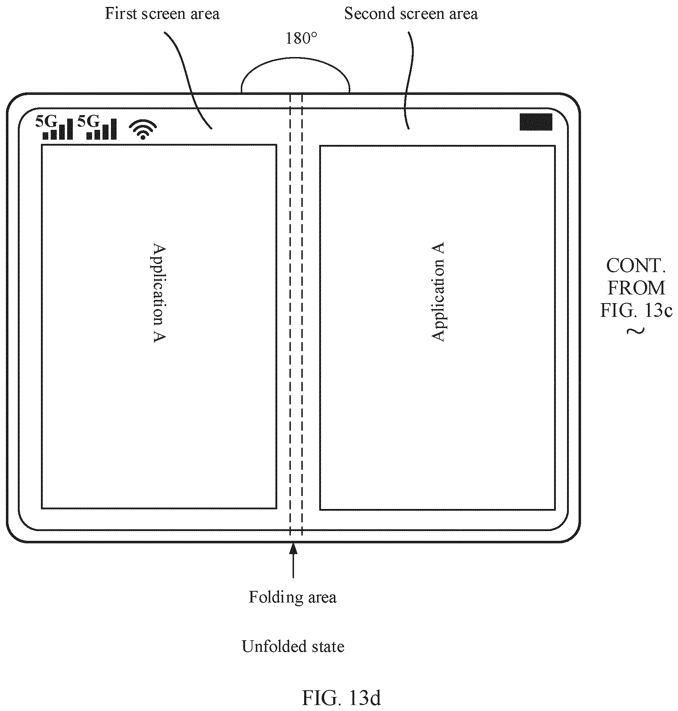

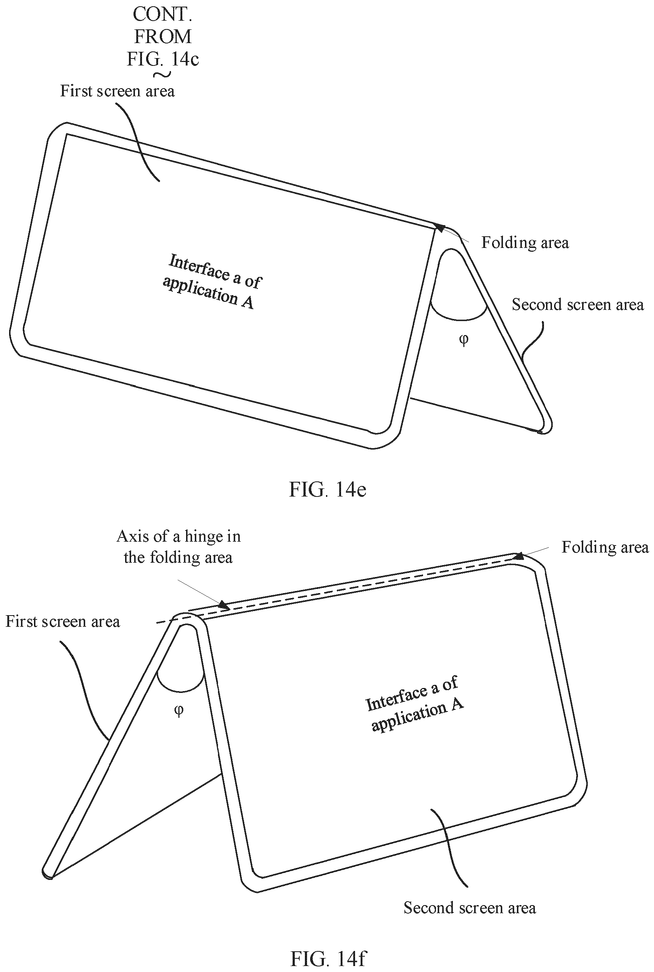

For example, "the hinge in the folding area is perpendicular to a desktop (placement plane)" may be understood as that an axis of the hinge in the folding area is perpendicular to the desktop (placement plane), for example, a placement manner shown in FIG. 12c. That the hinge in the folding area is parallel to a desktop (placement plane) may be understood as that an axis of the hinge in the folding area is parallel to the desktop (placement plane), and may be understood as that an axis of the hinge in the folding area is parallel to the desktop (placement plane), for example, a placement manner shown in FIG. 14f or a placement manner shown in FIG. 13d.

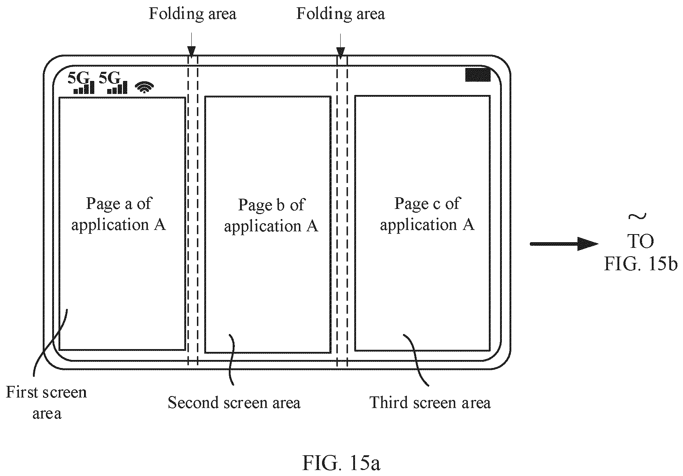

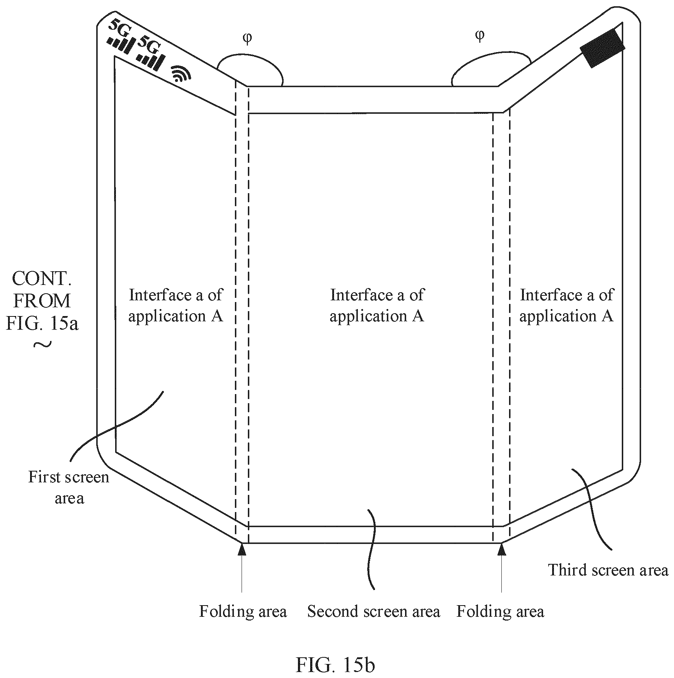

In a possible implementation of the first aspect, the foldable electronic device includes a first screen area and a second screen area, a manner of folding the first screen area and the second screen area around a hinge in a folding area is an outward folding manner, the hinge in the folding area is parallel to a placement plane, and the first screen area and the second screen area display a same interface and have opposite display directions. For example, refer to specific descriptions corresponding to FIG. 15a and FIG. 15b. In this implementation, two or more users can simultaneously view a same page (interface) from different angles (directions), thereby improving user experience.

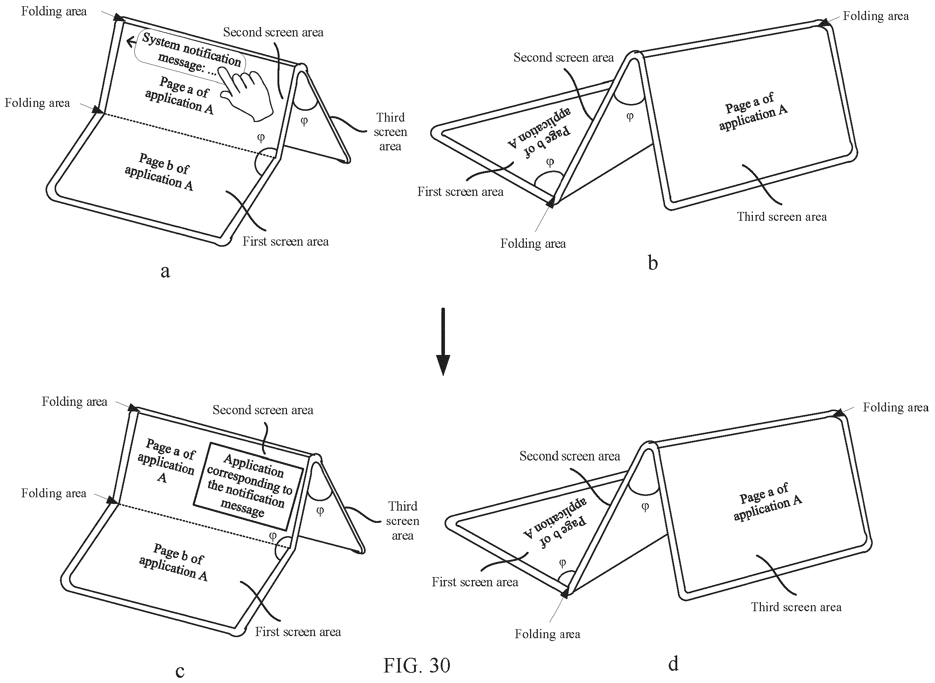

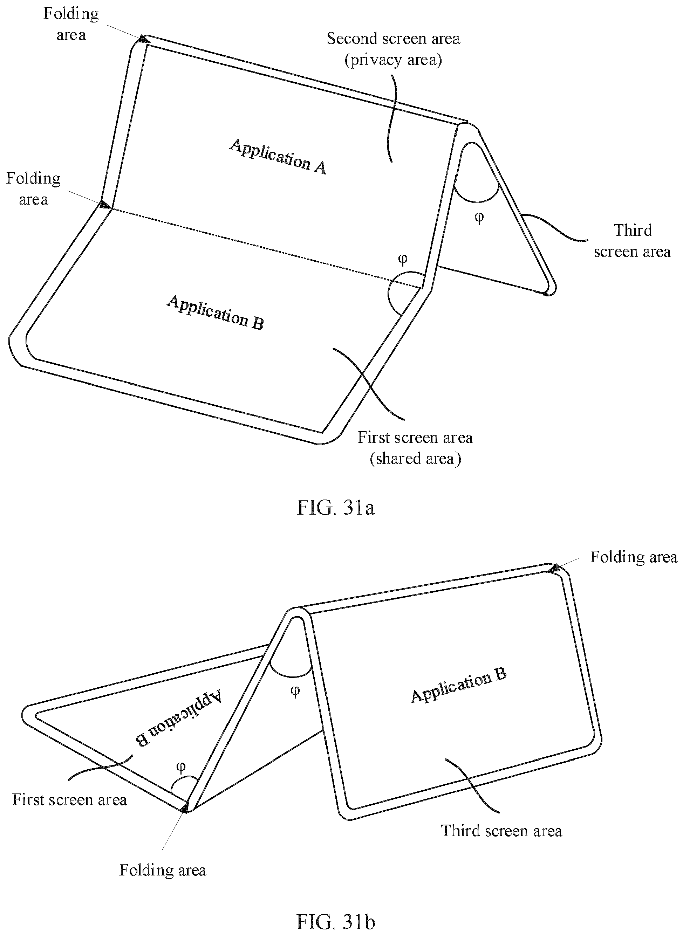

In a possible implementation of the first aspect, the foldable electronic device further includes a third screen area, a manner of folding the second screen area and the third screen area around a hinge in a folding area is an outward folding manner, and the third screen area and the second screen area display a same interface and have a same display direction. For example, refer to specific descriptions corresponding to FIG. 30 or FIG. 31a and FIG. 31b. In this implementation, privacy of a main user can be better protected.

In a possible implementation of the first aspect, in a process in which a first application is displayed in the first screen area, when a first message is displayed in the first screen area, the first message is not displayed in the second screen area or the third screen area. For example, refer to specific descriptions corresponding to FIG. 30 or FIG. 31a and FIG. 31b. In this implementation, privacy of a main user can be better protected.

For example, the first message includes at least one of a system notification message, an application layer input notification message, a floating window, and a floating bubble.

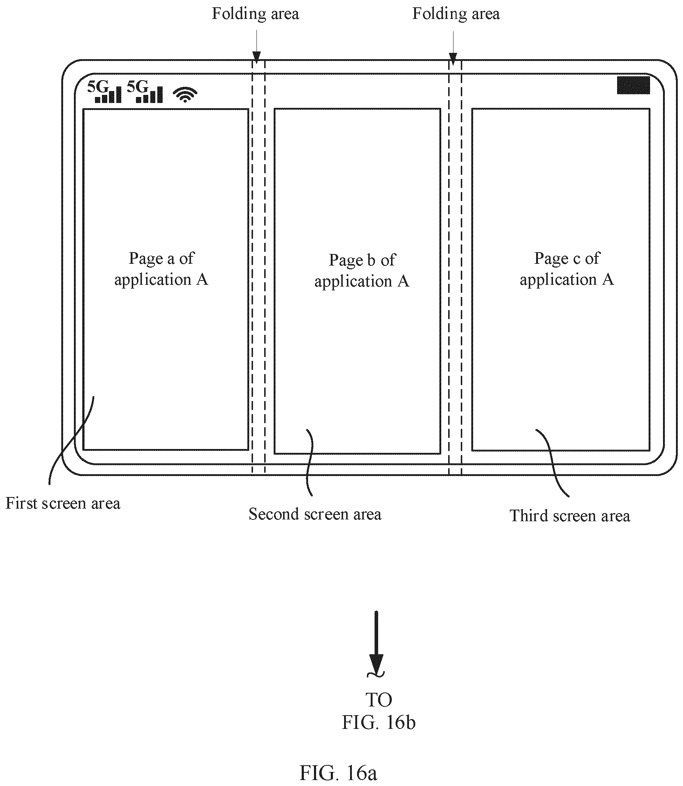

In a possible implementation of the first aspect, the foldable electronic device includes a first screen area, a second screen area, and a third screen area, a manner of folding the first screen area and the second screen area around a hinge in a folding area is an inward folding manner, a manner of folding the second screen area and the third screen area around a hinge in a folding area is an outward folding manner, the hinge in the folding area is parallel to a placement plane, the first screen area and the second screen area display a same application or different applications and have a same display direction, and the third screen area and the second screen area display a same interface and have opposite display directions. For example, refer to specific descriptions corresponding to FIG. 16a to FIG. 16c. In this implementation, a plurality of users can simultaneously view a same page (interface) from different angles (directions), thereby improving user experience.

In a possible implementation of the first aspect, in a process in which a first application is displayed in the first screen area or the second screen area, when a first message is displayed in the first screen area or the second screen area, the first message is not displayed in the third screen area. For example, refer to specific descriptions corresponding to FIG. 30 or FIG. 31a and FIG. 31b. In this implementation, privacy of a main user can be better protected, and user experience can be improved.

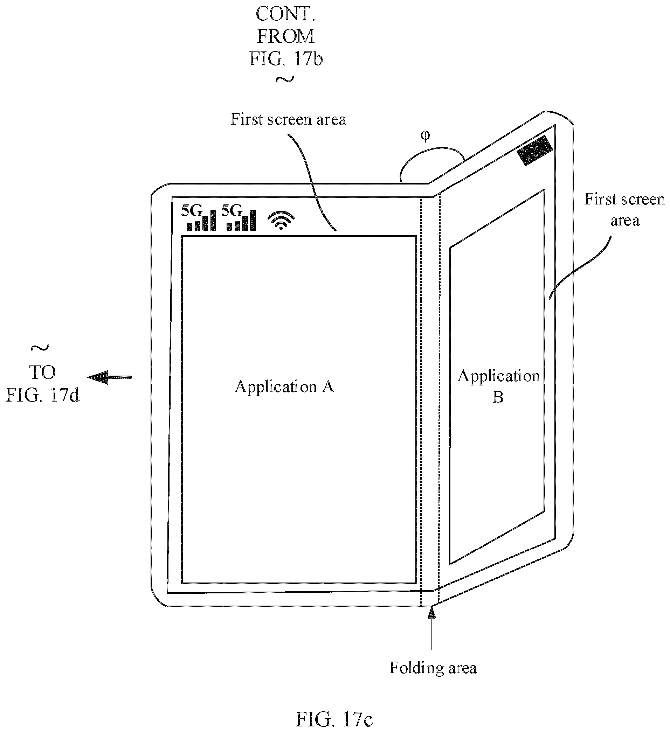

In a possible implementation of the first aspect, the foldable electronic device includes a first screen area and a second screen area, a manner of folding the first screen area and the second screen area around a hinge in a folding area is an outward folding manner, the hinge in the folding area is perpendicular to a placement plane, and the first screen area and the second screen area separately display interfaces of different applications and have a same display direction. For example, refer to specific descriptions corresponding to FIG. 17c. In this implementation, a plurality of users can simultaneously use different applications, thereby improving user experience.

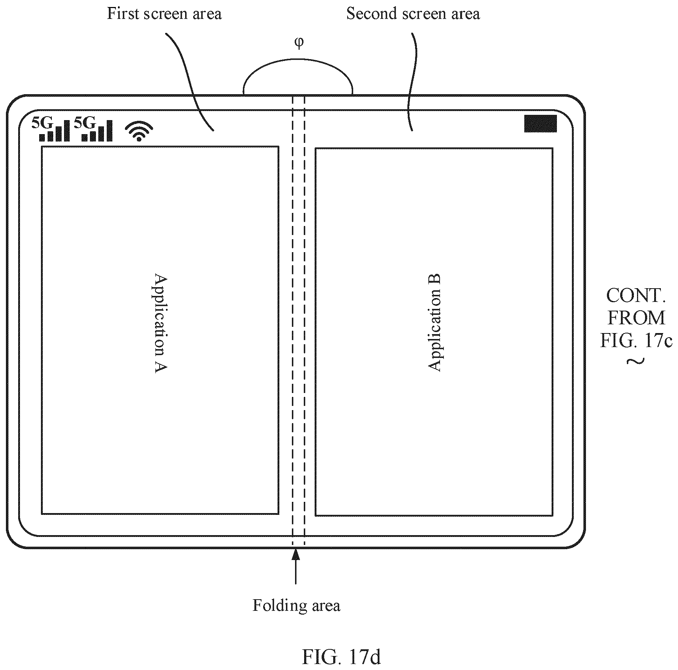

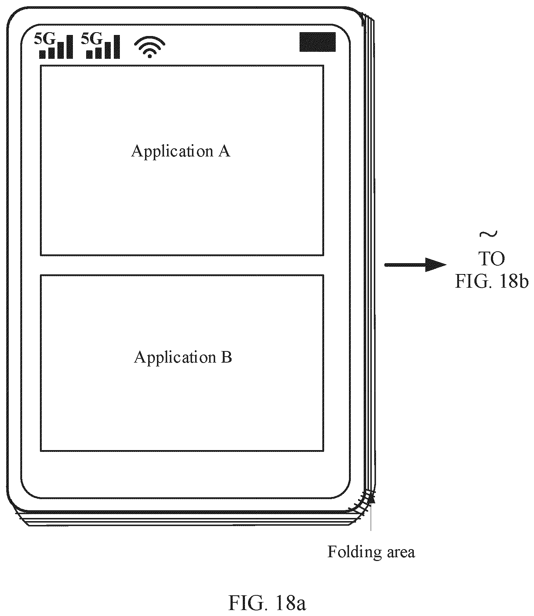

In a possible implementation of the first aspect, the foldable electronic device includes a first screen area and a second screen area, a manner of folding the first screen area and the second screen area around a hinge in a folding area is an outward folding manner, the hinge in the folding area is parallel to a placement plane, and the first screen area and the second screen area separately display interfaces of different applications and have opposite display directions. For example, refer to specific descriptions corresponding to FIG. 17d and FIG. 18a to FIG. 18d. In this implementation, a plurality of users can simultaneously use different applications, thereby improving user experience.

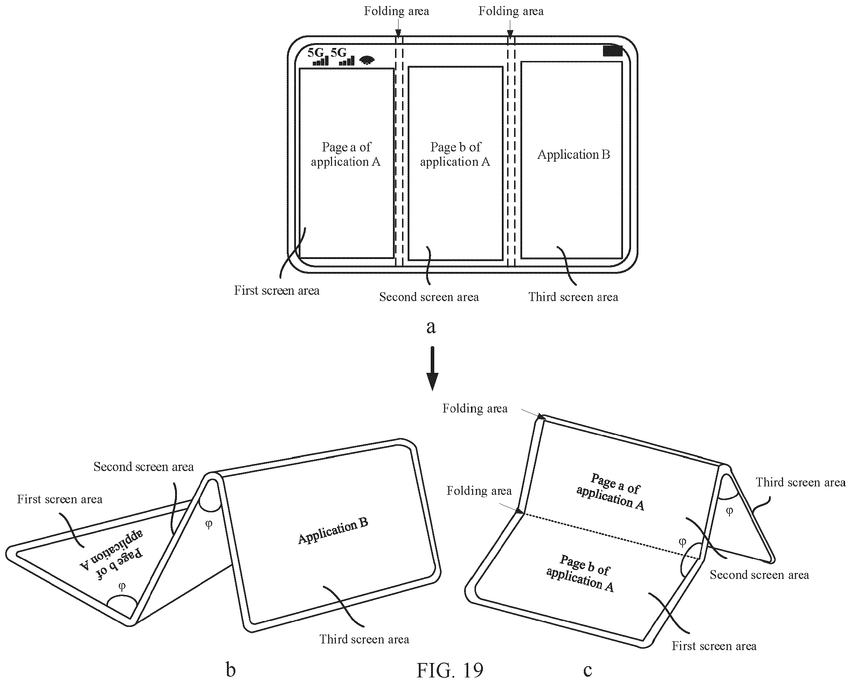

In a possible implementation of the first aspect, the foldable electronic device includes a first screen area, a second screen area, and a third screen area, a manner of folding the first screen area and the second screen area around a hinge in a folding area is an inward folding manner, a manner of folding the second screen area and the third screen area around a hinge in a folding area is an outward folding manner, the hinge in the folding area is parallel to a placement plane, the first screen area and the second screen area display a same application or different applications and have a same display direction, and the third screen area and the second screen area separately display interfaces of different applications and have opposite display directions. For example, refer to specific descriptions corresponding to FIG. 19. In this implementation, a plurality of users can simultaneously use different applications, thereby improving user experience.

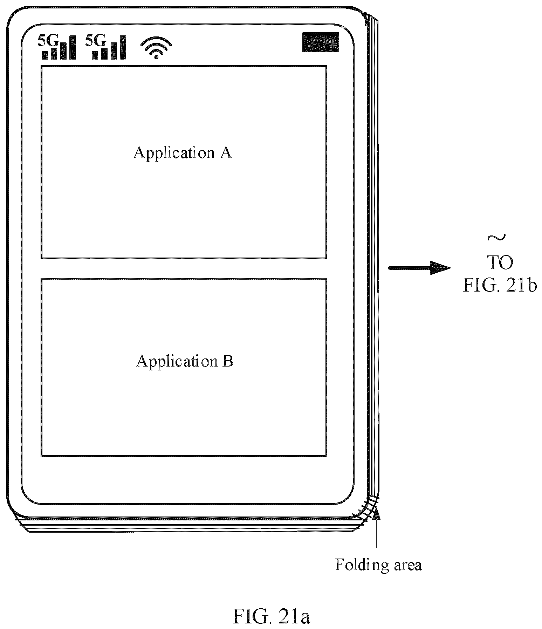

In a possible implementation of the first aspect, the foldable electronic device includes a first screen area and a second screen area, a manner of folding the first screen area and the second screen area around a hinge in a folding area is an inward folding manner, the hinge in the folding area is parallel to a placement plane, and the first screen area and the second screen area separately display interfaces of different applications and have a same display direction. For example, refer to specific descriptions corresponding to FIG. 21a to FIG. 21c. In this implementation, one user can simultaneously use different applications, thereby improving user experience.

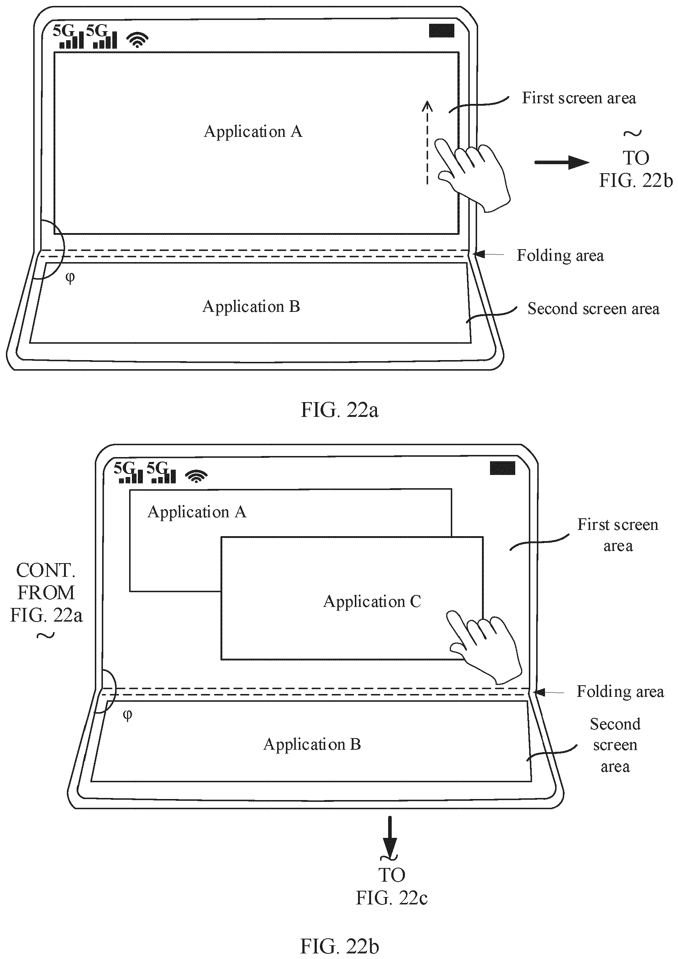

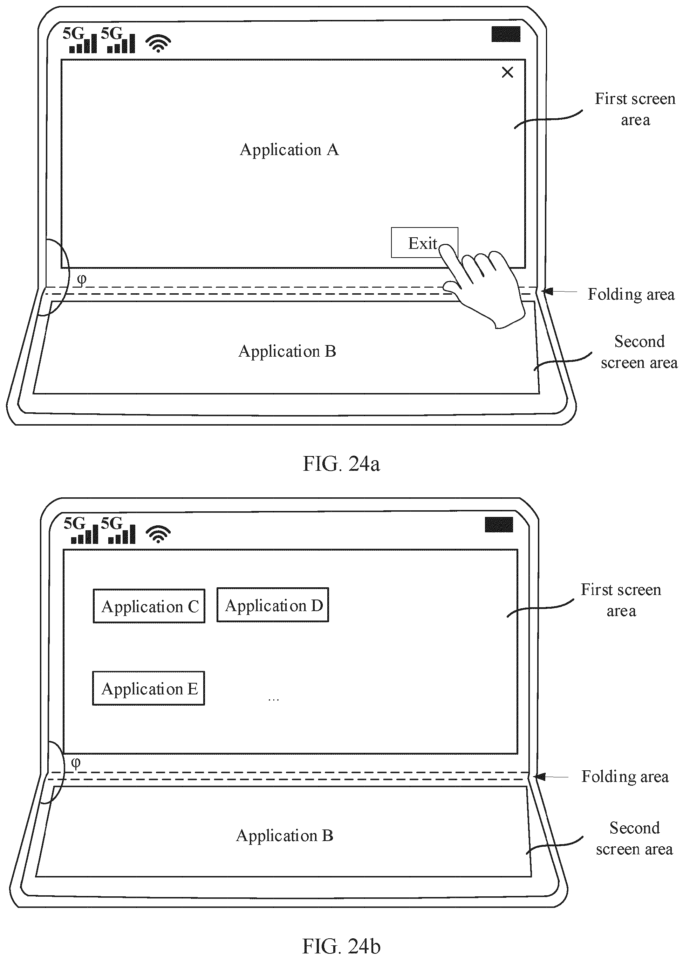

In a possible implementation of the first aspect, the method further includes: receiving a second operation performed by the user on the first screen area or the second screen area; and in response to the second operation, displaying, in the first screen area or the second screen area, another application running in a background of the foldable electronic device, or another application associated with an application displayed in the first screen area or the second screen area. For example, refer to specific descriptions corresponding to FIG. 22a to FIG. 22c to FIG. 24a and FIG. 24b. In this implementation, a currently used application can be quickly switched, and an operation is simple and easy to implement, thereby improving user experience.

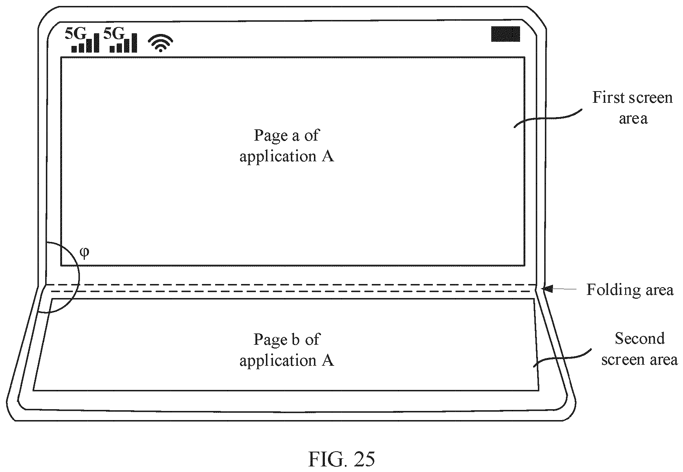

In a possible implementation of the first aspect, the foldable electronic device includes a first screen area and a second screen area, a manner of folding the first screen area and the second screen area around a hinge in a folding area is an inward folding manner, the hinge in the folding area is parallel to a placement plane, and the first screen area and the second screen area display different interfaces of a same application and have a same display direction. For example, refer to specific descriptions corresponding to FIG. 25. In this implementation, one user can simultaneously view or use different interfaces of a same application, thereby improving user experience.

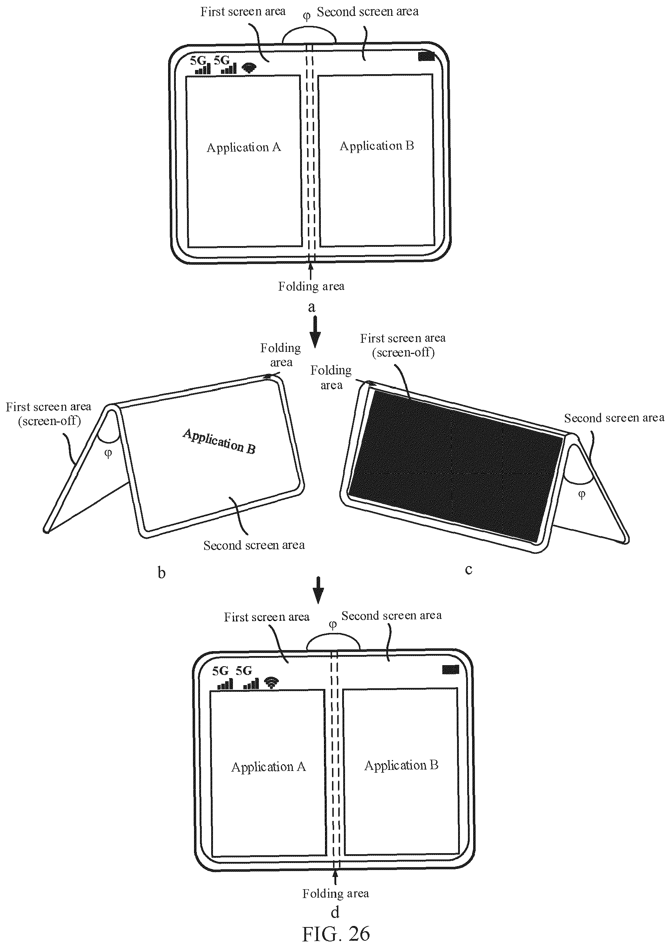

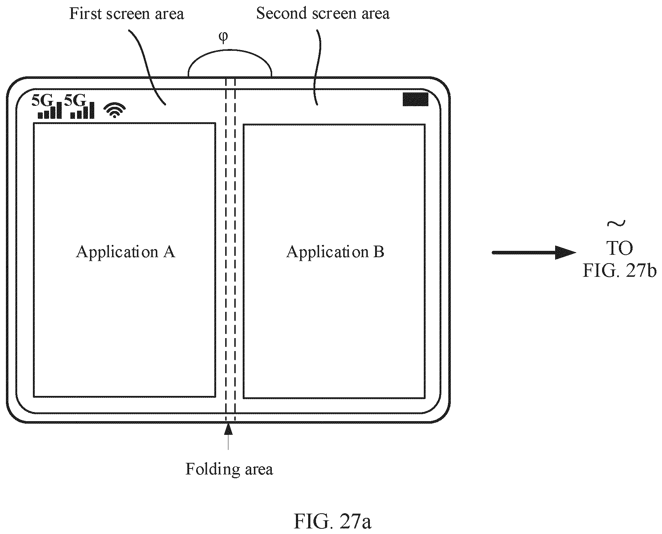

In a possible implementation of the first aspect, the foldable electronic device includes a first screen area and a second screen area, a manner of folding the first screen area and the second screen area around a hinge in a folding area is an outward folding manner, the hinge in the folding area is parallel to a placement plane, the first screen area displays a first interface, and the second screen area is screen-off. For example, refer to specific descriptions corresponding to FIG. 26 and FIG. 27a to FIG. 27c. In this implementation, one user can immersively use one application, thereby improving user experience, and saving power of the foldable electronic device.

In a possible implementation of the first aspect, the method further includes: after the foldable electronic device is restored to a flattened state, separately displaying interfaces of different applications or displaying different interfaces of a same application in the first screen area and the first screen area. For example, refer to specific descriptions corresponding to FIG. 26 and FIG. 27a to FIG. 27c. In this implementation, after the foldable electronic device is restored to the flattened state, one user can simultaneously view or use different applications, and an operation is simple and easy to implement, thereby improving user experience.

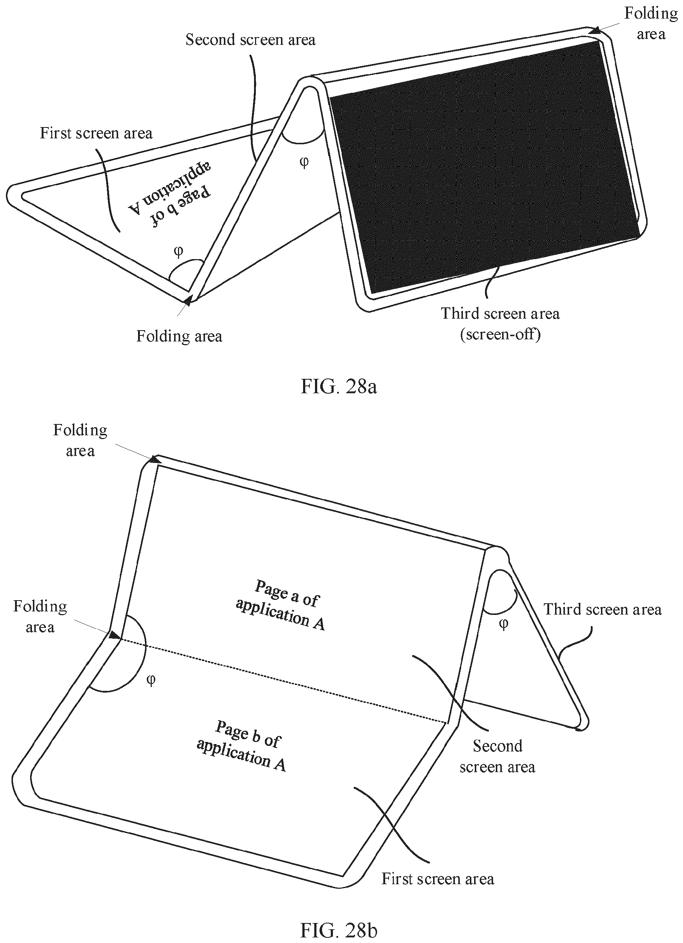

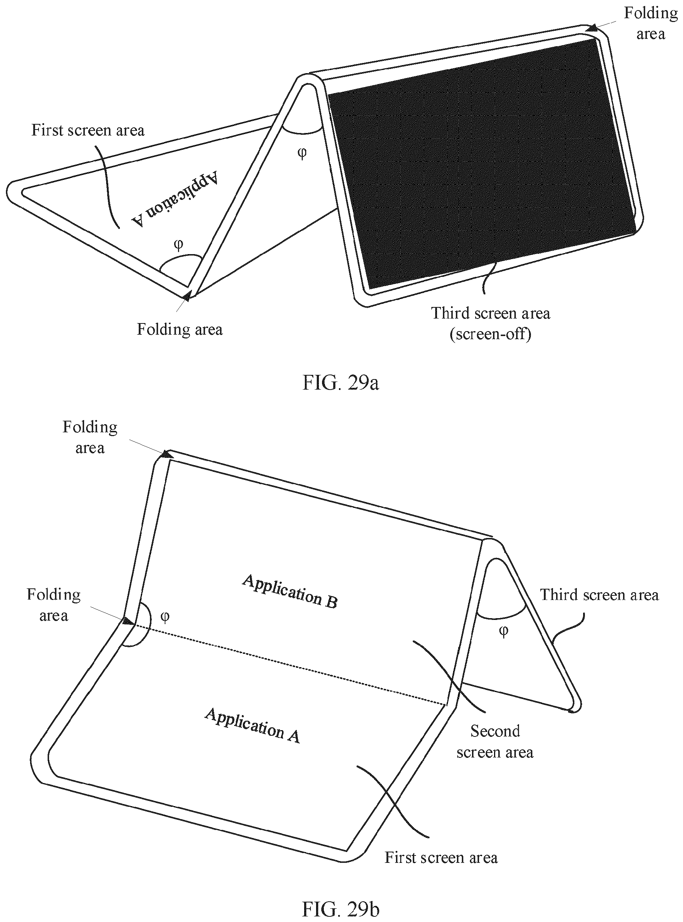

In a possible implementation of the first aspect, the foldable electronic device includes a first screen area, a second screen area, and a third screen area, a manner of folding the first screen area and the second screen area around a hinge in a folding area is an inward folding manner, a manner of folding the second screen area and the third screen area around a hinge in a folding area is an outward folding manner, the hinge in the folding area is parallel to a placement plane, the first screen area and the second screen area separately display different interfaces of a same application or the first screen area and the second screen area separately display interfaces of different applications and have a same display direction, and the third screen area is screen-off. For example, refer to specific descriptions corresponding to FIG. 28a and FIG. 28b and FIG. 29a and FIG. 29b. In this implementation, one user can simultaneously use a same application or different applications, and an operation is simple and easy to implement, thereby improving user experience, and saving power of the foldable electronic device.

According to a second aspect, a communication apparatus is provided. The communication apparatus includes units used for steps of the method in any one of the first aspect or the possible implementations of the first aspect.

According to a third aspect, a communication apparatus is provided. The communication apparatus includes at least one processor and a memory. The processor is coupled to the memory, the memory stores program instructions, and when the program instructions stored in the memory are executed by the processor, the method in any one of the first aspect or the possible implementations of the first aspect is performed.

According to a fourth aspect, a communication apparatus is provided. The communication apparatus includes at least one processor and an interface circuit. The at least one processor is configured to perform the method in any one of the first aspect or the possible implementations of the first aspect.

According to a fifth aspect, a foldable electronic device is provided. The foldable electronic device includes any communication apparatus provided in the second aspect, the third aspect, or the fourth aspect.

In a possible implementation of the fifth aspect, the foldable electronic device further includes one or more of sensors such as an angle sensor, a gravity sensor, a folding sensor, a gyroscope, an acceleration sensor, a touch sensor, and a pressure sensor.

For example, the foldable electronic device may include a foldable mobile phone, a foldable tablet computer, or the like.

According to a sixth aspect, a computer program product is provided. The computer program product includes a computer program. When the computer program is executed by a processor, the computer program is used to perform the method in any one of the first aspect or the possible implementations of the first aspect.

According to a seventh aspect, a computer-readable storage medium is provided. The computer-readable storage medium stores a computer program, and when being executed, the computer program is used to perform the method in any one of the first aspect or the possible implementations of the first aspect.

According to an eighth aspect, a chip is provided. The chip includes a processor, configured to invoke a computer program from a memory and run the computer program, so that a foldable electronic device in which the chip is installed performs the method in any one of the first aspect or the possible implementations of the first aspect.

### BRIEF DESCRIPTION OF DRAWINGS

FIG. 1a to FIG. 1c are a diagram of an example of a structure of a foldable mobile phone according to an embodiment of this application;
FIG. 2 is a diagram of another example of a structure of a foldable mobile phone according to an embodiment of this application;
FIG. 3 is a diagram of another example of a structure of a foldable mobile phone according to an embodiment of this application;
FIG. 4 is a diagram of another example of a structure of a foldable mobile phone according to an embodiment of this application;
FIG. 5 is a diagram of using a foldable mobile phone in a vertical interaction mode;
FIG. 6 is a diagram of interfaces in a first screen area and a second screen area when a foldable mobile phone is used in a vertical interaction mode;
FIG. 7a to FIG. 7c are a diagram of an example of interfaces displayed after a foldable mobile phone is unfolded and folded according to an embodiment of this application;
FIG. 8a to FIG. 8c are a diagram of another example of interfaces displayed after a foldable mobile phone is unfolded and folded according to an embodiment of this application;
FIG. 9a to FIG. 9c are a diagram of another example of interfaces displayed after a foldable mobile phone is unfolded and folded according to an embodiment of this application;
FIG. 10 is a diagram of another example of interfaces displayed after a foldable mobile phone is unfolded and folded according to an embodiment of this application;
FIG. 11 is a diagram of another example of interfaces displayed after a foldable mobile phone is unfolded and folded according to an embodiment of this application;
FIG. 12a to FIG. 12c are a diagram of an example of interfaces displayed by a one-fold foldable mobile phone in a sharing mode according to an embodiment of this application;
FIG. 13a to FIG. 13d are a diagram of another example of interfaces displayed by a one-fold foldable mobile phone in a sharing mode according to an embodiment of this application;
FIG. 14a to FIG. 14f are a diagram of another example of interfaces displayed by a one-fold foldable mobile phone in a sharing mode according to an embodiment of this application;
FIG. 15a and FIG. 15b are a diagram of an example of interfaces displayed by a two-fold foldable mobile phone in a sharing mode according to an embodiment of this application;
FIG. 16a to FIG. 16c are a diagram of another example of interfaces displayed by a two-fold foldable mobile phone in a sharing mode according to an embodiment of this application;
FIG. 17a to FIG. 17d are a diagram of an example of interfaces displayed by a one-fold foldable mobile phone in an efficiency mode according to an embodiment of this application;
FIG. 18a to FIG. 18d are a diagram of another example of interfaces displayed by a one-fold foldable mobile phone in an efficiency mode according to an embodiment of this application;
FIG. 19 is a diagram of an example of interfaces displayed by a two-fold foldable mobile phone in an efficiency mode according to an embodiment of this application;
FIG. 20 is a diagram of an example of interfaces displayed after a two-fold foldable mobile phone is restored from a folded state to a flattened state according to an embodiment of this application;
FIG. 21a to FIG. 21c are a diagram of another example of interfaces displayed by a one-fold foldable mobile phone in an efficiency mode according to an embodiment of this application;
FIG. 22a to FIG. 22c are a diagram of an example of a user operation and displayed interfaces when a one-fold foldable mobile phone switches a running application in an efficiency mode according to an embodiment of this application;
FIG. 23a to FIG. 23c are a diagram of another example of a user operation and displayed interfaces when a one-fold foldable mobile phone switches a running application in an efficiency mode according to an embodiment of this application;
FIG. 24a and FIG. 24b are a diagram of an example of a user operation and displayed interfaces when a one-fold foldable mobile phone exits an application in an efficiency mode according to an embodiment of this application;
FIG. 25 is a diagram of another example of interfaces displayed by a one-fold foldable mobile phone in an efficiency mode according to an embodiment of this application;
FIG. 26 is a diagram of an example of interfaces displayed by a one-fold foldable mobile phone in an immersive mode according to an embodiment of this application;
FIG. 27a to FIG. 27c are a diagram of another example of interfaces displayed by a one-fold foldable mobile phone in an immersive mode according to an embodiment of this application;
FIG. 28a and FIG. 28b are a diagram of an example of interfaces displayed by a two-fold foldable mobile phone in an immersive mode according to an embodiment of this application;
FIG. 29a and FIG. 29b are a diagram of another example of interfaces displayed by a two-fold foldable mobile phone in an immersive mode according to an embodiment of this application;
FIG. 30 is a diagram of an example of interfaces displayed by a two-fold foldable mobile phone in a privacy mode according to an embodiment of this application;
FIG. 31a and FIG. 31b are a diagram of another example of interfaces displayed by a two-fold foldable mobile phone in a privacy mode according to an embodiment of this application;
FIG. 32 is a diagram of an example of interfaces displayed in different modes according to an embodiment of this application;
FIG. 33 is a diagram of an example of interfaces displayed by a foldable mobile phone in a sharing mode according to an embodiment of this application;
FIG. 34a and FIG. 34b are a diagram of an example of interfaces displayed by a foldable mobile phone in an efficiency mode according to an embodiment of this application;
FIG. 35a and FIG. 35b are a diagram of an example of interfaces displayed by a foldable mobile phone in an immersive mode according to an embodiment of this application;
FIG. 36 is a schematic flowchart of an example of a display and control method for a foldable electronic device according to this application;
FIG. 37 is a block diagram of an example of a hardware structure of a foldable electronic device according to this application;
FIG. 38 is a block diagram of another example of a software structure of a foldable electronic device according to this application;
FIG. 39 is a diagram of an example of software and hardware structures of a foldable electronic device according to this application; and
FIG. 40 is a diagram of a chip system according to this application.

### DESCRIPTION OF EMBODIMENTS

With the development of screen technologies, a larger screen becomes possible. A foldable electronic device (for example, a foldable mobile phone or a foldable tablet computer) inevitably has a plurality of folding manners in the future, and different folding manners bring more changes in layouts and use manners.

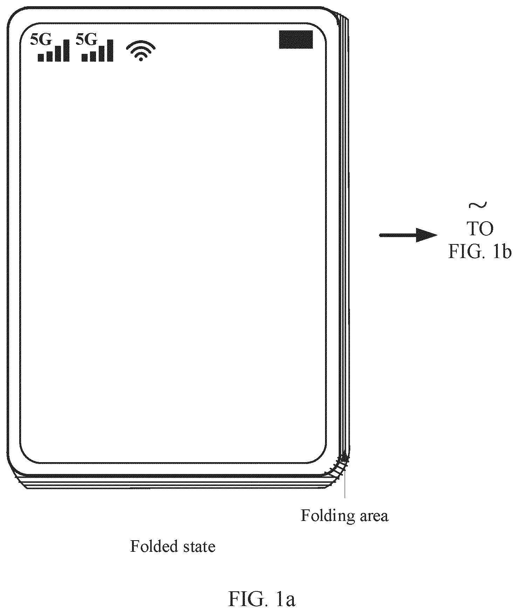

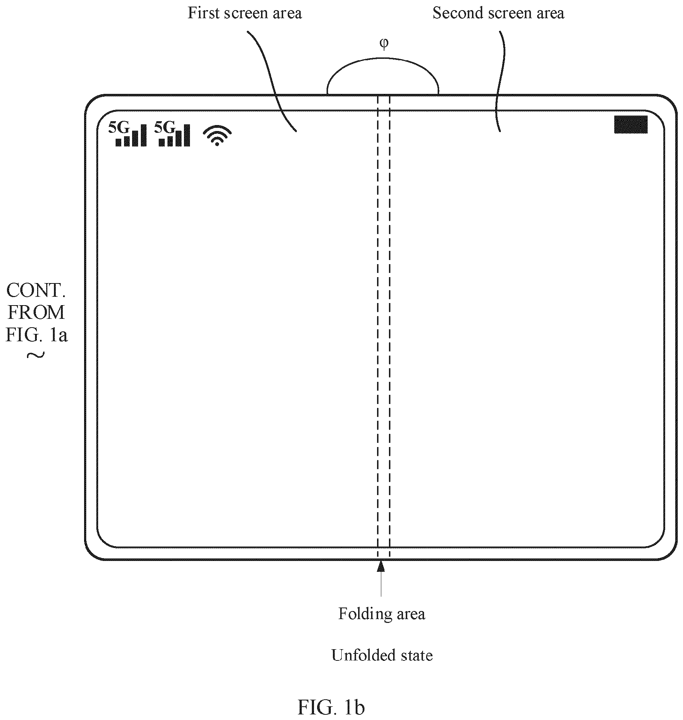

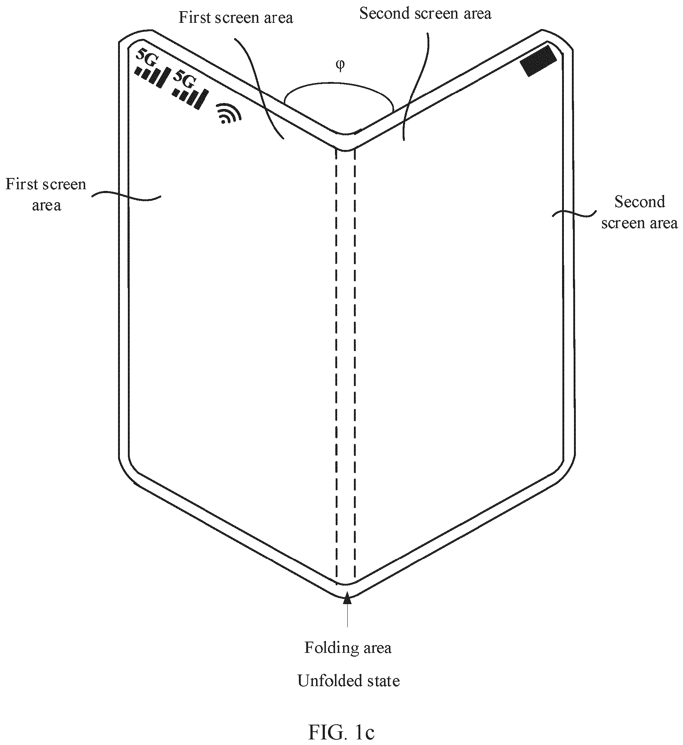

For example, FIG. 1a to FIG. 1c are a diagram of an example of a structure of a foldable mobile phone according to an embodiment of this application. FIG. 1a is a diagram of the foldable mobile phone in a folded state. FIG. 1b is a diagram of unfolding the mobile phone shown in FIG. 1a to an unfolded state (a flattened state) around a hinge in a folding area. As shown in FIG. 1b, there is the folding area on a screen, and screens located on left and right sides of the folding area may be unfolded or folded through rotation around the hinge in the folding area. For example, a component such as a hinge may be disposed in the folding area, so that the screens on the left and right sides of the folding area can rotate around the hinge in the folding area. After the mobile phone (unless otherwise specified, the mobile phone in embodiments of this application is a foldable mobile phone) is unfolded through rotation around the hinge in the folding area, the screen of the mobile phone is divided by the folding area into two parts: a first screen area (or referred to as a first display area, a first window, or the like) and a second screen area (or referred to as a second display area, a second window, or the like), as shown in FIG. 1b. In an unfolded form, a foldable display may be folded in directions in which the first screen area and the second screen area face away from each other (that is, in an outward folding manner), to fold the screen to different angles. FIG. 1b is a diagram of unfolding the mobile phone shown in FIG. 1a to an unfolded state (a flattened state) around a hinge in a folding area. After flattening, an angle between rear surfaces of the first screen area and the second screen area is φ (that is, an inward folding angle of a rear surface of the screen is φ). For example, a value of φ may be 180°, or a difference between a value of φ and 180° is less than a preset threshold (that is, the value of φ may be a value close to 180°). FIG. 1c is a diagram in which a folding angle φ (that is, an inward folding angle of the rear surface of the screen is φ) is formed after the mobile phone shown in FIG. 1b is folded around the hinge in the folding area in directions in which the first screen area and the second screen area face away from each other (outward folding manner). As shown in FIG. 1c, the folding angle φ is less than 180°.

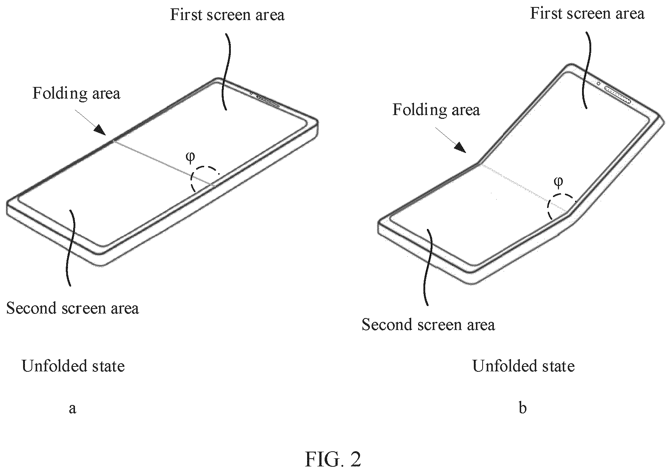

It may be understood that FIG. 1a to FIG. 1c show a case in which a one-fold foldable mobile phone is folded left and right. In embodiments of this application, a foldable mobile phone may alternatively be folded up and down. For example, as shown in FIG. 2, a in FIG. 2 is a diagram of a foldable mobile phone in an unfolded state according to an embodiment of this application. A folding area exists on a screen, and screens located on upper and lower sides of the folding area may be unfolded or folded through rotation around a hinge in the folding area. In an unfolded form, a foldable display may be folded in directions in which a first screen area and a second screen area face each other (that is, in an inward folding manner), to fold the screen to different angles. a in FIG. 2 is a diagram of a mobile phone in an unfolded state (a flattened state). An angle between front surfaces of screens in the first screen area and the second screen area is φ. For example, a value of φ may be 180°, or a difference between a value of φ and 180° is less than a preset threshold (that is, the value of φ may be a value close to 180°). b in FIG. 2 is a diagram in which a folding angle φ is formed after folding around the hinge in the folding area in directions in which the first screen area and the second screen area face each other (inward folding manner). The folding angle φ is less than 180°.

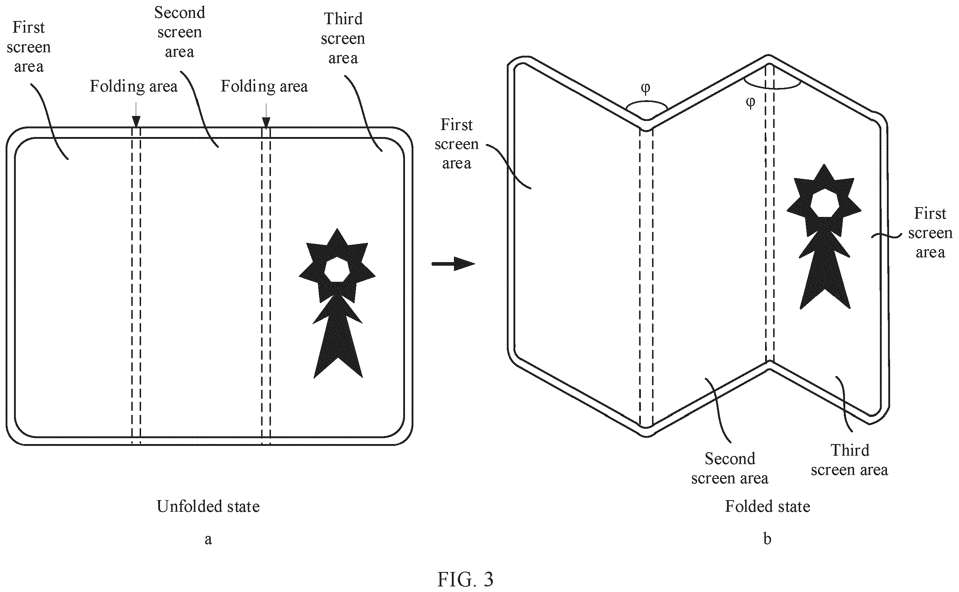

For another example, FIG. 3 is a diagram of a structure of a two-fold foldable mobile phone according to an embodiment of this application. a in FIG. 3 is a diagram of a foldable mobile phone in an unfolded state (that is, in a flattened state), and b in FIG. 3 is a diagram of a foldable mobile phone in a folded state. As shown in a in FIG. 3, there are two folding areas on a screen, and screens located on left and right sides of any folding area may be unfolded or folded through rotation around a hinge in the folding area. The screen of the mobile phone is divided by the folding areas into three parts: a first screen area (or referred to as a first display area, a first window, or the like), a second screen area (or referred to as a second display area, a second window, or the like), and a third screen area (or referred to as a third display area, a third window, or the like). b in FIG. 3 is a diagram in which a folding angle φ (that is, an inward folding angle of a rear surface of the screen is φ) is formed after the foldable mobile phone shown in a in FIG. 3 is folded around the hinge in the folding area in directions in which the first screen area and the second screen area face away from each other (that is, in an outward folding manner), and a folding angle φ (that is, an inward folding angle of a front surface of the screen is φ) is formed after the foldable mobile phone shown in a in FIG. 3 is folded around the hinge in the folding area in directions in which the second screen area and the third screen area face each other (that is, in an inward folding manner). In another embodiment of this application, the foldable mobile phone shown in a in FIG. 3 may alternatively be folded in directions in which the first screen area and the second screen area face each other (that is, in an inward folding manner) and in directions in which the second screen area and the third screen area face away from each other (that is, in an outward folding manner). This is not limited in embodiments of this application.

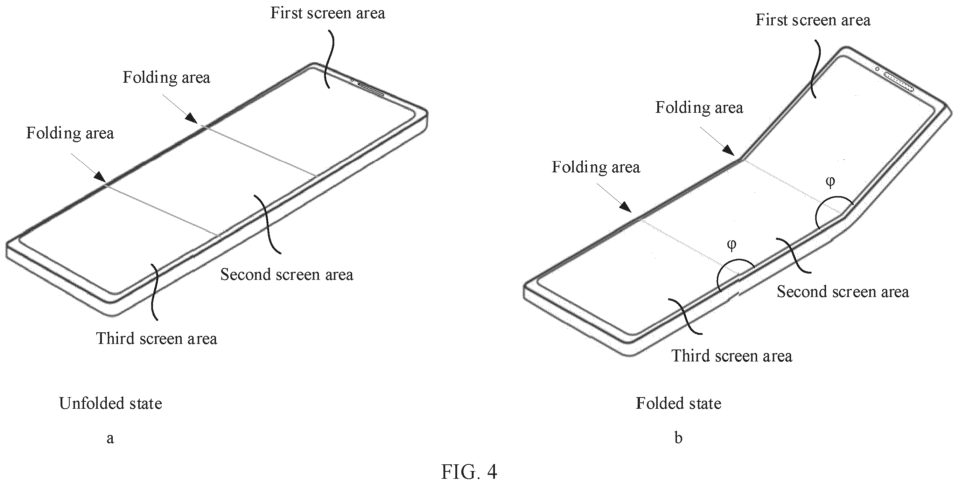

It may be understood that FIG. 3 shows a case in which a two-fold foldable mobile phone is folded left and right. In embodiments of this application, a two-fold or multi-fold foldable mobile phone may alternatively be folded up and down. For example, FIG. 4 shows a case in which a two-fold foldable mobile phone is folded up and down. a in FIG. 4 is a diagram of a two-fold foldable mobile phone in an unfolded state (that is, a flattened state). There are two folding areas on a screen, and screens located on upper and lower sides of any folding area may be unfolded or folded through rotation around a hinge in the folding area. As shown in b in FIG. 4, in an unfolded form, a folding angle φ may be formed after a foldable display is folded in directions in which the first screen area and the second screen area face each other (that is, in an inward folding manner), and the folding angle φ is less than 180°. The second screen area and the third screen area are in a flattened state relative to the folding area, that is, a folding angle between front surfaces of screens in the second screen area and the third screen area is φ. For example, a value of φ may be 180°, or a difference between a value of φ and 180° is less than a preset threshold.

It should be understood that, in another embodiment of this application, in an unfolded form, the foldable display may alternatively be folded in directions in which the first screen area and the second screen area face away from each other (that is, in an outward folding manner) and in directions in which the second screen area and the third screen area face each other (that is, in an inward folding manner); or may be folded in directions in which the first screen area and the second screen area face each other (that is, in an inward folding manner) and in directions in which the second screen area and the third screen area face away from each other (that is, in an outward folding manner); or may be folded in directions in which the first screen area and the second screen area face away from each other (that is, in an outward folding manner) and in directions in which the second screen area and the third screen area face away from each other (that is, in an outward folding manner). This is not limited in embodiments of this application.

In other words, in various foldable electronic devices (for example, including a foldable mobile phone and a foldable tablet computer) provided in this application, a folding manner of screens on two sides of any folding area may be an outward folding manner, or may be an inward folding manner. This is not limited in embodiments of this application.

It should be noted that the one-fold foldable mobile phone described in embodiments of this application may be understood as a foldable mobile phone with one hinge shown in FIG. 1a to FIG. 1c or FIG. 2, and the two-fold foldable mobile phone described in embodiments of this application may be understood as a foldable mobile phone with two hinges shown in FIG. 3. In another embodiment, the one-fold foldable mobile phone and the two-fold foldable mobile phone may alternatively have other names. For example, the foldable mobile phone shown in FIG. 3 may also be referred to as a three-fold mobile phone because there are three screen areas. A name of the foldable mobile phone is not limited in this application.

It should be further understood that, in embodiments of this application, the inward folding manner may be understood as folding, around a hinge in a folding area, two screen areas on left and right sides or upper and lower sides of the hinge in directions in which front surfaces of the two screens face each other. The front surface of the screen may be understood as a surface that is of a larger display (that is, a foldable flexible display) of the foldable mobile phone and on which an image or a picture is displayed. In a folding process, an angle between front surfaces of the two screens (that is, an inward folding angle of the front surfaces of the screens) becomes smaller in such a folding manner.

In embodiments of this application, the outward folding manner may be understood as folding, around a hinge in a folding area, two screen areas on left and right sides or upper and lower sides of the hinge in directions in which rear surfaces of the two screens face each other. The rear surface of the screen may be understood as a surface opposite to the front surface of the screen, for example, may be a surface on which a rear cover of the mobile phone is located. In a folding process, an angle between rear surfaces of the two screens (that is, an inward folding angle of the rear surfaces of the screens) becomes smaller in such a folding manner.

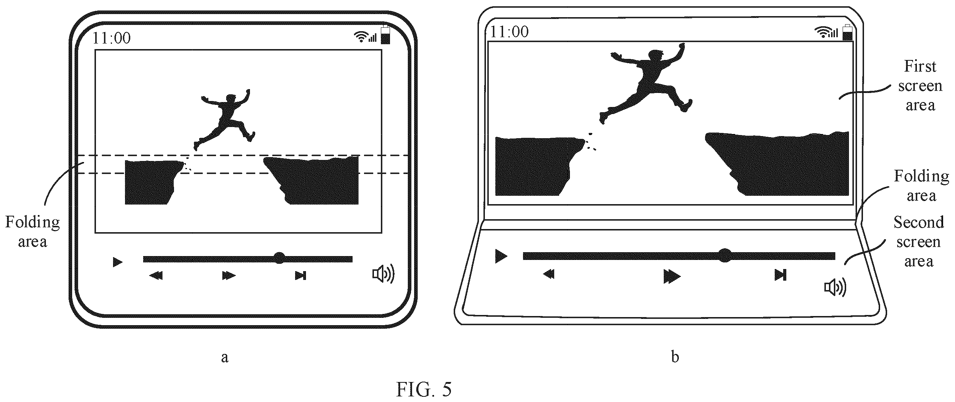

Currently, for a foldable mobile phone, when the mobile phone is folded for use, a display manner is adjusted based on a folding manner for interface layouts in different screen areas. For example, FIG. 5 is a diagram of using a foldable mobile phone in a vertical interaction mode. a in FIG. 5 is a diagram of interfaces displayed when a user uses the mobile phone to watch a video in an unfolded state. After the user folds the mobile phone around a folding area (in an inward folding manner) to an appropriate angle, as shown in b in FIG. 5, a screen of the mobile phone is divided by the folding area into a first screen area (that is, an upper half screen) and a second screen area (that is, a lower half screen). The foldable mobile phone may enable an adaptive screen splitting function, use the upper half screen to play a video picture, and use the lower half screen to perform operations such as pause and fast forward. That is, an interface of an application is divided into two parts, and the two parts are respectively displayed in two screen areas. This is applicable to horizontal placement for use on a desktop.

However, although a current foldable mobile phone can divide a same interface into different parts, and the parts are respectively displayed in different screen areas after folding, a direction of an interface displayed in each screen area does not change, and switching between interfaces displayed in different screen areas is not involved. This is not applicable to a use scenario with a plurality of users.

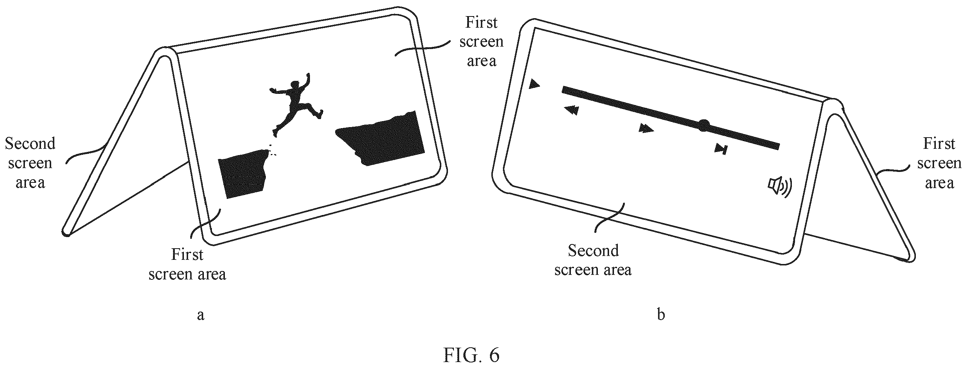

For example, FIG. 6 is a diagram of an example of interfaces in a first screen area and a second screen area after the foldable mobile phone shown in FIG. 5 is folded outward up and down around a folding area and then placed on a desktop. a in FIG. 6 shows an interface displayed in the first screen area, and b in FIG. 6 shows an interface displayed in the second screen area. In this case, if two users watch a video in different directions (for example, a scenario in which the two users are face-to-face), one user faces the first screen area, and the other user faces the second screen area, one of the users cannot watch the video, reducing user experience.

In view of this, this application provides a display and control method for a foldable electronic device, so that a plurality of users can use a same application or different applications on a same foldable electronic device, requirements of the plurality of users for simultaneously using and controlling the foldable electronic device are met, user operations are simplified, and user experience is improved.

The following specifically describes the display and control method for a foldable electronic device provided in this application.

It should be understood that, the display and control method for a foldable electronic device provided in this application may be applied to an electronic device having a foldable screen. For example, the electronic device having a foldable screen may include a foldable mobile phone, a foldable tablet computer, or the like. A specific form of the foldable electronic device is not limited in embodiments of this application. In addition, in embodiments of this application, the electronic device having a foldable screen may include one or more folding areas, that is, may be a one-fold or multi-fold foldable screen. A folding manner of the foldable screen may be an inward folding manner, or may be an outward folding manner, or may include an inward folding manner and an outward folding manner, or the like. This is not limited in embodiments of this application.

In the following examples, a foldable mobile phone is used as an example for description.

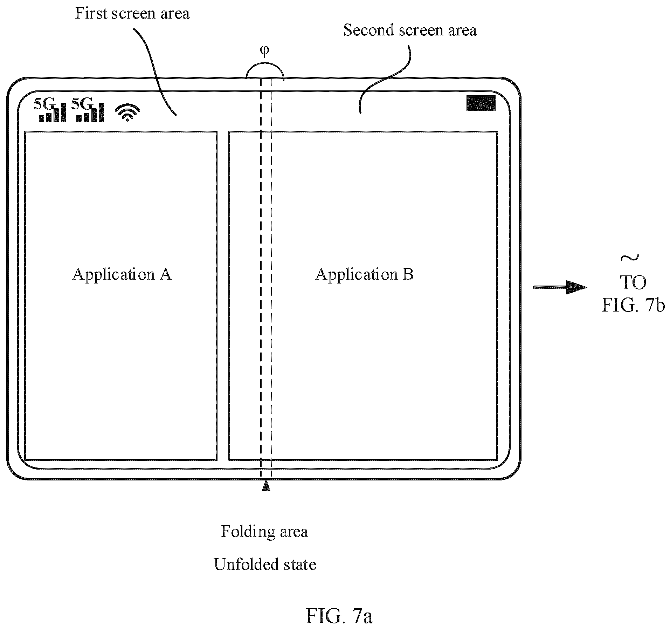

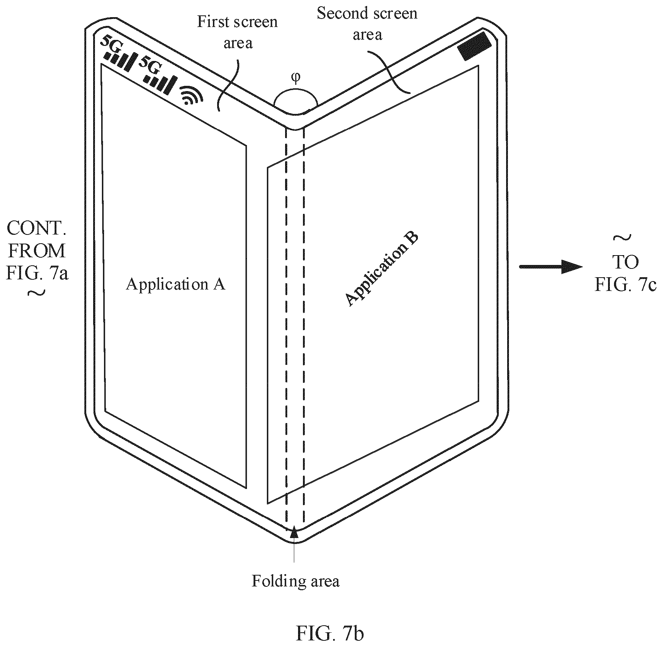

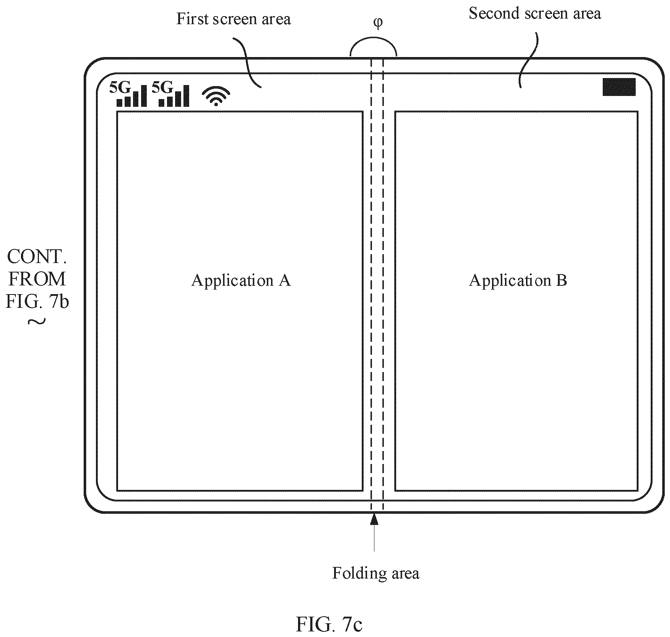

FIG. 7a to FIG. 7c are a diagram of an example of interfaces displayed after a foldable mobile phone is unfolded and folded according to an embodiment of this application. FIG. 7a is a diagram of the foldable mobile phone in a flattened state (for example, an inward folding angle φ of a rear surface of a screen is 180°, or a difference between a value of φ and 180° is less than a preset threshold). Application A (which may also be referred to as application program A) and application B (which may also be referred to as application program B) are displayed in the interfaces. A display interface of the foldable mobile phone is divided by a folding area into two parts: a first screen area and a second screen area. A display interface occupied by application B includes the first screen area and the second screen area, and a display interface occupied by application A is only a part of the first screen area. That is, an area of the display interface occupied by application B is greater than an area of the display interface occupied by application A. FIG. 7b is a diagram in which a folding angle φ (that is, an inward folding angle of the rear surface of the screen is φ) is formed after the mobile phone in the flattened state shown in FIG. 7a is folded in an outward folding manner around a hinge in a folding area. The outward folding manner may be understood as folding in directions in which the first screen area and the second screen area face away from each other. FIG. 7c is a diagram of an interface displayed after the mobile phone shown in FIG. 7b is restored to the flattened state shown in FIG. 7a. As shown in FIG. 7c, after the mobile phone is folded and reset, application A and application B are arranged in a hardware folding manner of the mobile phone, that is, application A is displayed in the first screen area, and application B is displayed in the second screen area.

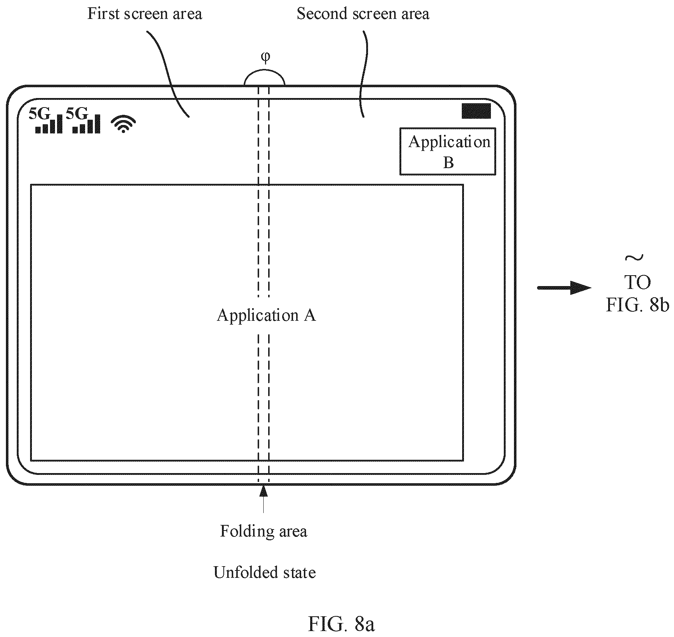

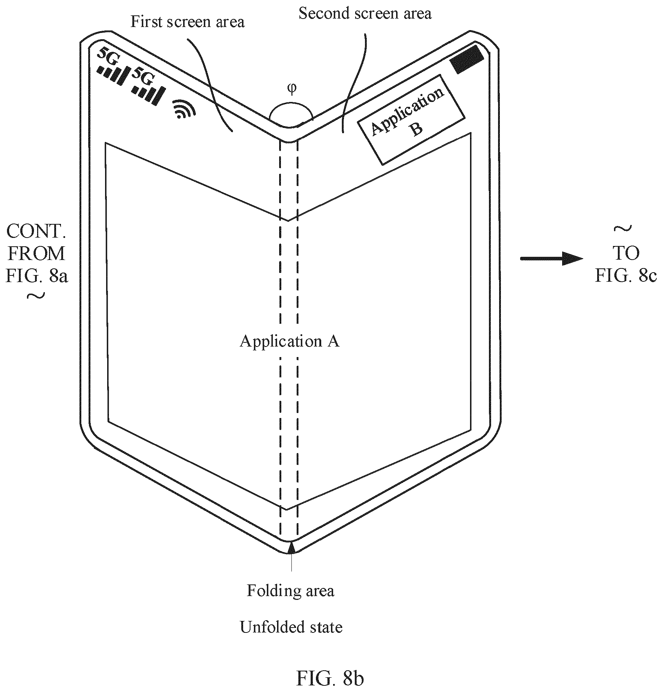

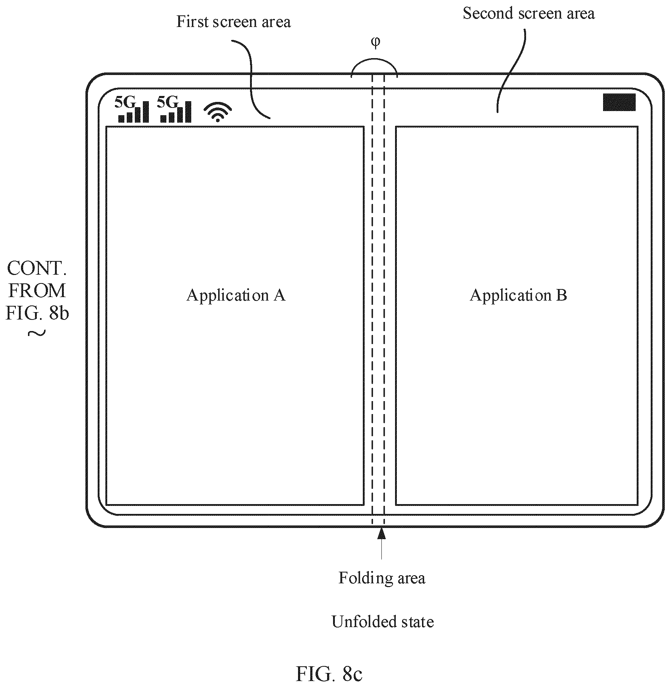

FIG. 8a to FIG. 8c are a diagram of an example of interfaces displayed after a foldable mobile phone is unfolded and folded according to an embodiment of this application. As shown in FIG. 8a, when the foldable mobile phone is in a flattened state, a folding area on a screen divides the screen into a first screen area and a second screen area, and a folding angle (an inward folding angle of a rear surface of the screen) formed between rear surfaces of the first screen area and the second screen area after flattening is φ. For example, a value of φ may be 180°, or a difference between a value of φ and 180° is less than a preset threshold. Two applications A and B are displayed in the interfaces. A display interface occupied by application A includes the first screen area and the second screen area, and a display interface occupied by application B is displayed in a small window. FIG. 8b is a diagram in which a folding angle φ (that is, an inward folding angle of the rear surface of the screen is φ) is formed after a user folds the mobile phone in the flattened state shown in FIG. 8a in an outward folding manner around a hinge in a folding area. FIG. 8c is a diagram of an interface displayed after the mobile phone shown in FIG. 8b is restored to the flattened state shown in FIG. 8a. As shown in FIG. 8c, after the mobile phone is folded and reset, application A and application B are arranged in a hardware folding manner of the mobile phone, that is, application A is displayed in the first screen area, and application B is displayed in the second screen area.

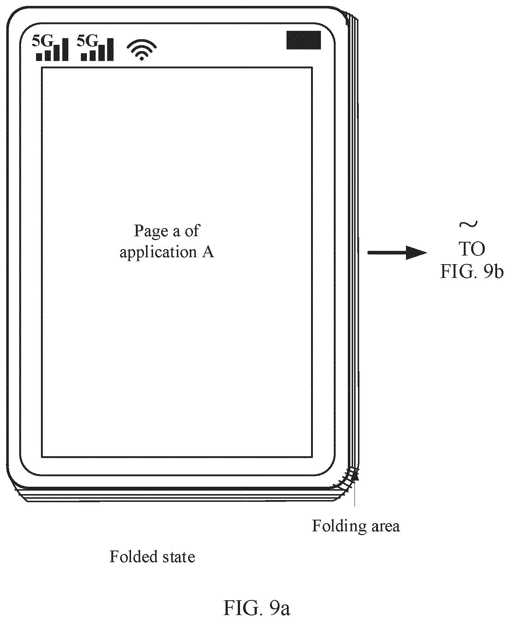

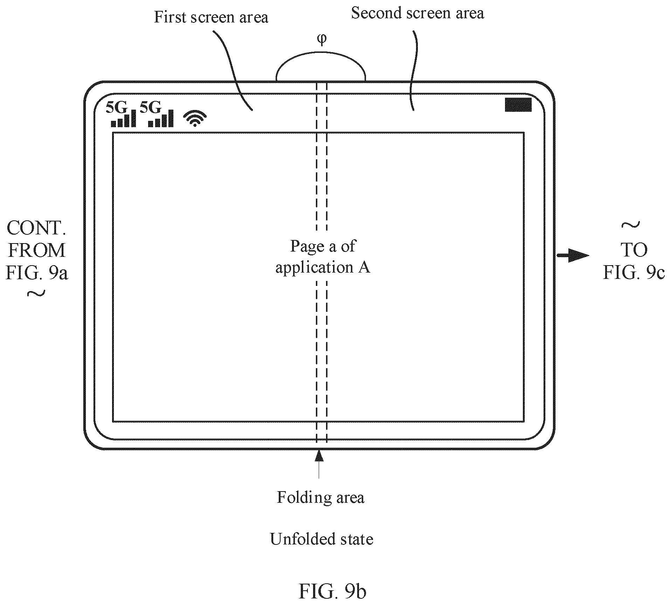

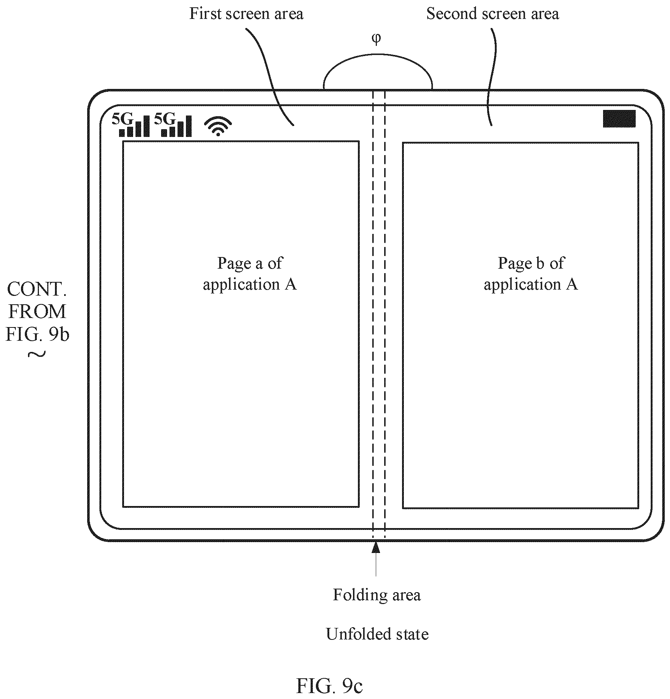

FIG. 9a to FIG. 9c are a diagram of an example of interfaces displayed after a foldable mobile phone is unfolded and folded according to an embodiment of this application. As shown in FIG. 9a, when the foldable mobile phone is in a folded state, application A is displayed in an interface, and the displayed interface is page a of application A. For example, page a of application A may be a level-1 page of application A. It is assumed that at current time, in the mobile phone, only application A runs in the foreground, and there is no other running application in the background. FIG. 9b is a diagram of unfolding the mobile phone shown in FIG. 9a to an unfolded state (a flattened state) around a hinge in a folding area. For example, a folding angle formed between rear surfaces of the first screen area and the second screen area after flattening is φ, and a value of φ may be 180°, or a difference between a value of φ and 180° is less than a preset threshold. After the mobile phone is flattened, page a of application A is displayed in the first screen area and the second screen area. If the user continues to open another interface of application A, for example, page b of application A, as shown in FIG. 9c, page a of application A is displayed in the first screen area, and page b of application A is displayed in the second screen area, that is, a display manner of parallel view is used. In embodiments of this application, the display manner of parallel view may be understood as: displaying different pages of one application on a display at the same time. For example, page b of application A may be a level-2 page of application A.

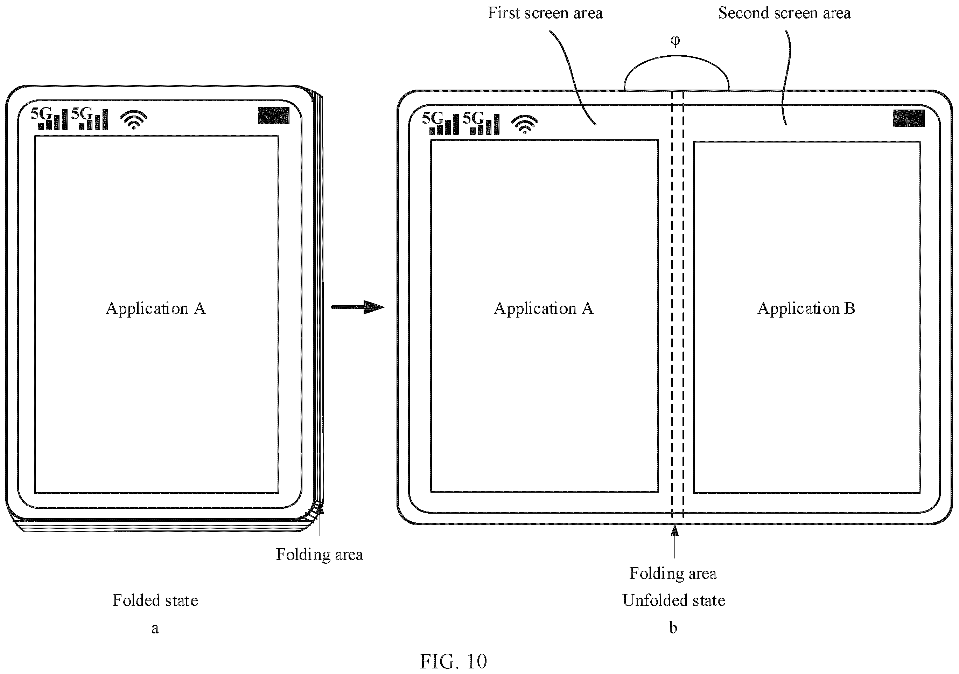

FIG. 10 is a diagram of an example of interfaces displayed after a foldable mobile phone is unfolded and folded according to an embodiment of this application. As shown in a in FIG. 10, when the foldable mobile phone is in a folded state, application A is displayed in an interface. It is assumed that the mobile phone still has another running application (for example, including application B and application C) in the background at current time. b in FIG. 10 is a diagram of unfolding the mobile phone shown in a in FIG. 10 to an unfolded state (a flattened state) around a hinge in a folding area. For example, a folding angle φ formed between rear surfaces of the first screen area and the second screen area after unfolding is 180°, or a difference between a value of φ and 180° is less than a preset threshold. After the mobile phone is flattened, application A is displayed in the first screen area. In a plurality of applications running in the background, an application (for example, application B) last used by the user is displayed in the second screen area. Alternatively, in another possible implementation, a plurality of applications running in the background may be displayed in the second screen area in a screen splitting manner.

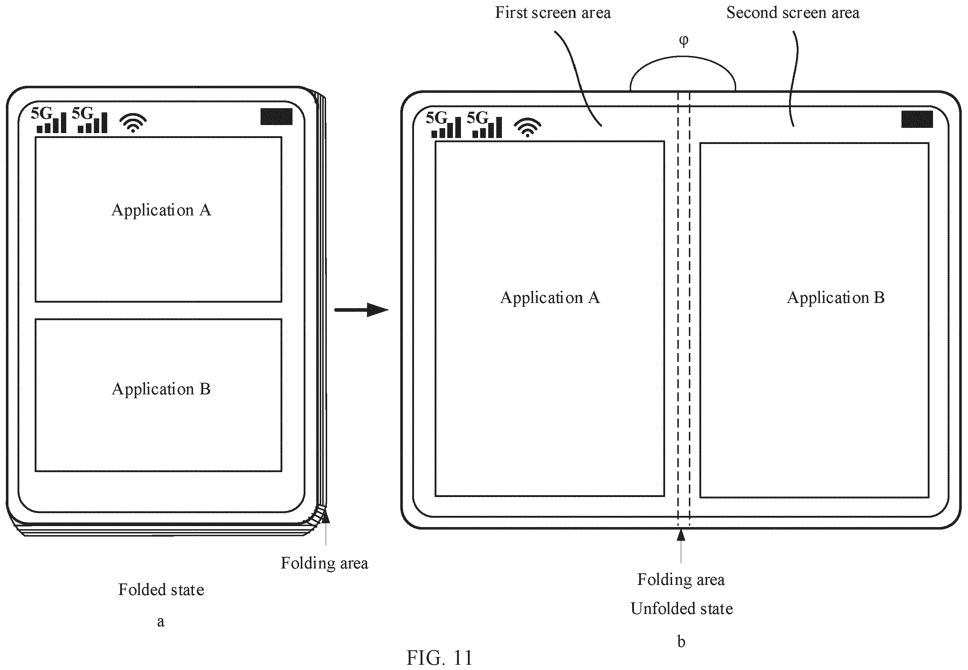

FIG. 11 is a diagram of an example of interfaces displayed after a foldable mobile phone is unfolded and folded according to an embodiment of this application. As shown in a in FIG. 11, when the foldable mobile phone is in a folded state, application A and application B are displayed in an interface. Application A and application B are displayed in a screen splitting manner. As shown in b in FIG. 11, after a user unfolds the mobile phone to an unfolded state around a folding area, a screen of the mobile phone is divided by the folding area into two parts: a first screen area and a second screen area. b in FIG. 11 is a diagram of unfolding the mobile phone shown in a in FIG. 11 to an unfolded state (a flattened state) around a hinge in a folding area. For example, a folding angle φ formed between rear surfaces of the first screen area and the second screen area after unfolding is 180°, or a difference between a value of φ and 180° is less than a preset threshold. After the mobile phone is flattened, application A is displayed in the first screen area, and application B is displayed in the second screen area.

Optionally, in some embodiments of this application, based on a folding manner (for example, an inward folding manner or an outward folding manner) and a placement manner of a user for a foldable mobile phone, a quantity of users, and the like, use statuses (modes) of the foldable mobile phone may be classified into four modes: a sharing mode, an efficiency mode, an immersive mode, and a privacy mode.

The sharing mode is mainly used for a plurality of users to simultaneously view or use a same interface in different screen areas, that is, at least one same display interface is shared between different users, so that a plurality of users can simultaneously view a same page (interface) from different angles. For the sharing mode, a folding manner of the foldable mobile phone may be an outward folding manner.

The efficiency mode is mainly used for one user to simultaneously use different applications in different display areas, or for a plurality of users to simultaneously use different applications in different display areas. In this way, a plurality of users can simultaneously use different applications, or one user can simultaneously use different applications. For the efficiency mode, a folding manner of the foldable mobile phone may be an outward folding manner or an inward folding manner.

The immersive mode is mainly used for one user to immersively use one application in one screen area, or for one user to immersively use different pages of one application in a plurality of screen areas. Optionally, a screen display area that cannot be seen by the user may be screen-off, and display no interface. This is convenient for one user to immersively use different pages of one application, and power of the electronic device can be saved. For the immersive mode, a folding manner of the foldable mobile phone may be an outward folding manner or an inward folding manner.

The privacy mode is mainly used to ensure that main application information that pops up in a screen area for a main user and that is not displayed in the screen area is not shared with another user in the sharing mode. For example, the main application information that is not displayed in the screen area may include a system notification message, an application layer input notification message, a floating window, a floating bubble, or the like. That is, only a main application displayed in the screen area is shared with another user, so as to better protect privacy of the main user. For the privacy mode, a folding manner of the foldable mobile phone may be an outward folding manner.

The following describes different modes with reference to specific examples. In the following examples, an example in which a foldable electronic device is a foldable mobile phone is used for description. However, it should be understood that this should not constitute a limitation on the foldable electronic device in embodiments of this application.

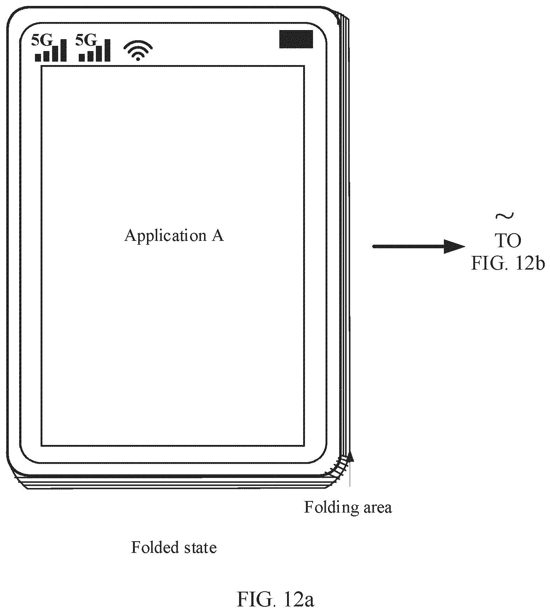

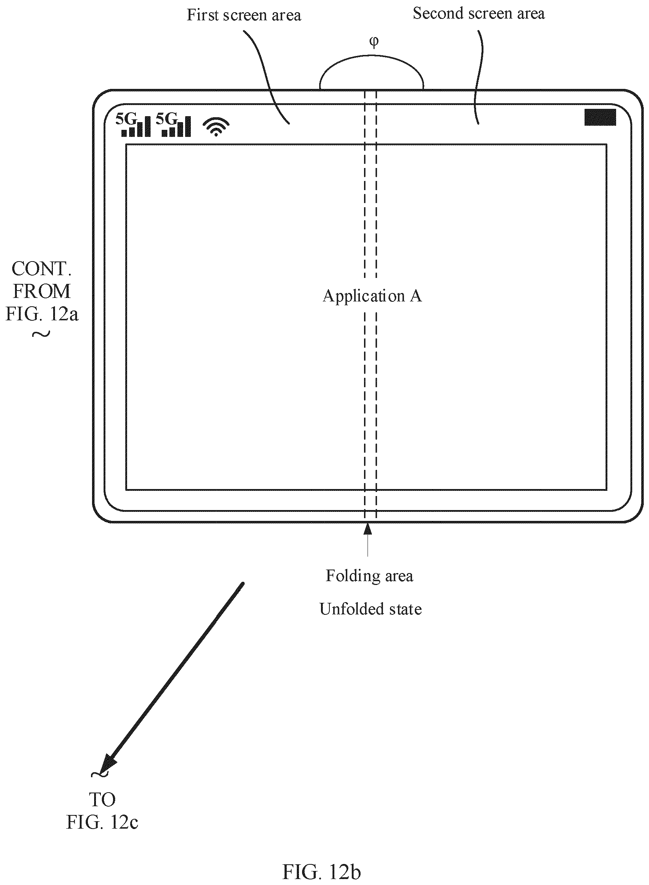

FIG. 12a to FIG. 12c are a diagram of an example of interfaces displayed by a foldable mobile phone in a sharing mode according to an embodiment of this application. As shown in FIG. 12a, when the foldable mobile phone is in a folded state, application A is displayed in an interface. FIG. 12b is a diagram of unfolding the mobile phone shown in FIG. 12a to an unfolded state (a flattened state) around a hinge in a folding area. For example, a folding angle formed between rear surfaces of the first screen area and the second screen area after unfolding is φ, and a value of φ may be 180°, or a difference between a value of φ and 180° is less than a preset threshold. As shown in FIG. 12b, after the mobile phone is flattened around the folding area, application A is displayed in the first screen area and the second screen area. FIG. 12c is a diagram in which a folding angle φ (that is, an inward folding angle of the rear surface of the screen is φ) is formed after the mobile phone in the flattened state shown in FIG. 12b is folded around the hinge in the folding area in directions in which the first screen area and the second screen area face away from each other (outward folding manner), and an interface displayed by the mobile phone changes to that shown in FIG. 12c. Application A is separately displayed in the first screen area and the second screen area, and a direction of application A displayed in the first screen area is the same as a direction of application A displayed in the second screen area. The mobile phone in the unfolded state shown in FIG. 12c is vertically placed on a desktop (that is, the hinge in the folding area is perpendicular to the desktop (placement plane)). Two users may separately watch the foldable mobile phone from different directions. For example, one user faces the first screen area, and the other user faces the second screen area. In this way, it may be convenient for two or more users to use the foldable mobile phone from different angles. In other words, after the mobile phone in the flattened state is folded by a specific angle, an application (for example, application A) currently opened by the user is mirrored and copied, and an interface of the application is separately displayed in the first screen area and the second screen area. After the mobile phone shown in FIG. 12c is restored to the flattened state of the mobile phone shown in FIG. 12b, a display interface of the mobile phone is the same as the display interface shown in FIG. 12b, and application A is displayed in the first screen area and the second screen area, that is, an interface displayed by the mobile phone in the flattened state is restored.

It should be noted that, in embodiments of this application, "the hinge in the folding area is perpendicular to the desktop (placement plane)" may be understood as that an axis of the hinge in the folding area is perpendicular to the desktop (placement plane). For example, in a placement manner shown in FIG. 12c, both the first screen area and the second screen area of the mobile phone are perpendicular to the desktop. In other words, the placement manner of the mobile phone is that the hinge in the folding area is perpendicular to the desktop (placement plane).

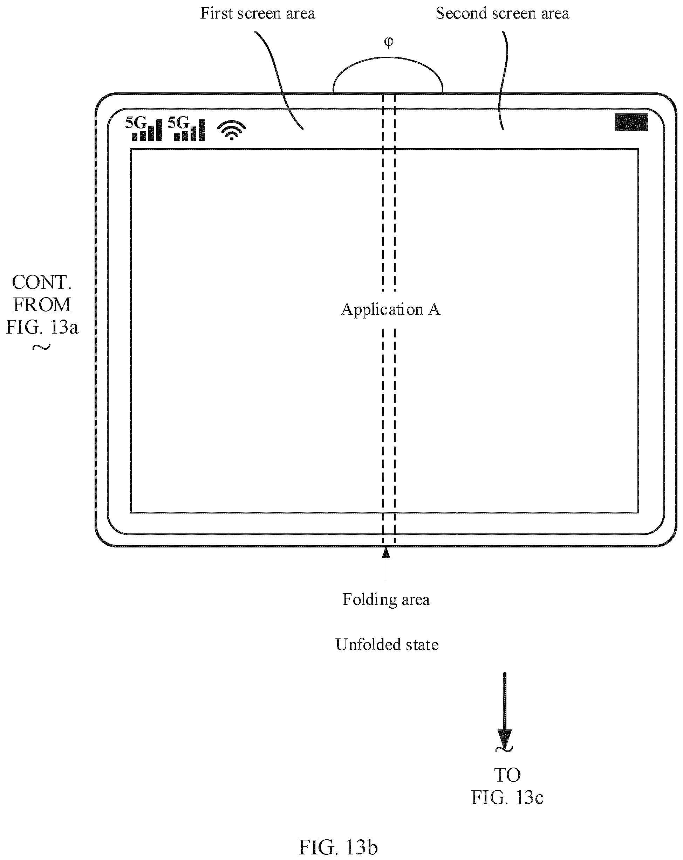

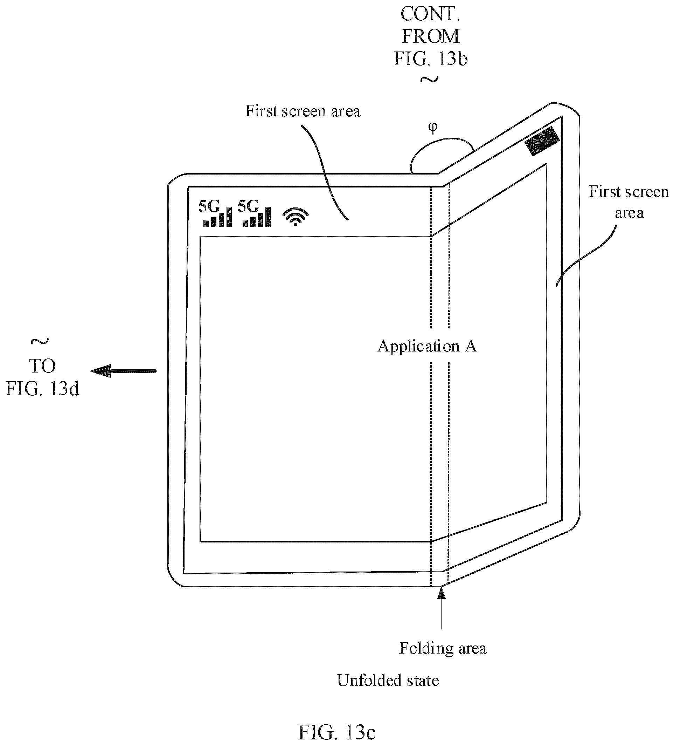

FIG. 13a to FIG. 13d are a diagram of an example of interfaces displayed by a foldable mobile phone in a sharing mode according to an embodiment of this application. As shown in FIG. 13a, when the foldable mobile phone is in a folded state, application A is displayed in an interface. FIG. 13b is a diagram of unfolding the mobile phone shown in FIG. 13a to an unfolded state (a flattened state) around a hinge in a folding area. For example, a folding angle formed between rear surfaces of the first screen area and the second screen area after unfolding is φ, and a value of φ may be 180°, or a difference between a value of φ and 180° is less than a preset threshold. As shown in FIG. 13b, after the mobile phone is flattened, application A is displayed in the first screen area and the second screen area. FIG. 13c is a diagram in which a folding angle φ (that is, an inward folding angle of the rear surface of the screen is φ) is formed after the mobile phone in the flattened state shown in FIG. 13b is folded around the hinge in the folding area in directions in which the first screen area and the second screen area face away from each other (outward folding manner). Application A is displayed in the first screen area and the second screen area. Then, after the unfolded state of the mobile phone shown in FIG. 13c is restored to the flattened state of the mobile phone shown in FIG. 13b, an interface displayed by the mobile phone changes to that shown in FIG. 13d. Application A is separately displayed in the first screen area and the second screen area, and a direction of application A displayed in the first screen area is opposite to a direction of application A displayed in the second screen area, so that two users view application A in different directions. For example, the mobile phone in the unfolded state shown in FIG. 13 d is placed horizontally on a desktop (that is, the hinge in the folding area is parallel to the desktop), two users view the mobile phone in different directions, and the two users are face-to-face. In this way, it may be convenient for two or more users to use the foldable mobile phone from different angles. In other words, after the mobile phone in the unfolded state is folded by a specific angle and then restored to the original unfolded state, an application currently opened on the mobile phone is mirrored and copied, and the copied application is displayed in a plurality of screen areas of the mobile phone in different directions.

It should be noted that, in a placement manner shown in FIG. 13c, both the first screen area and the second screen area of the mobile phone are perpendicular to the desktop, that is, the placement manner of the mobile phone is that the hinge in the folding area is perpendicular to the desktop (placement plane).

In embodiments of this application, that the hinge in the folding area is parallel to the desktop (placement plane) may be understood as that an axis of the hinge in the folding area is parallel to the desktop (placement plane), for example, a placement manner shown in FIG. 14f. For example, in a placement manner shown in FIG. 13d, both the first screen area and the second screen area of the mobile phone are parallel to the desktop, that is, the placement manner of the mobile phone is that the hinge in the folding area is parallel to the desktop (placement plane). It should be understood that, when the hinge in the folding area is parallel to the desktop (placement plane), a plurality of screen areas of the mobile phone may not be parallel to the desktop. For example, as shown in FIG. 14f, it is also a placement manner in which the hinge in the folding area is parallel to the desktop (placement plane).

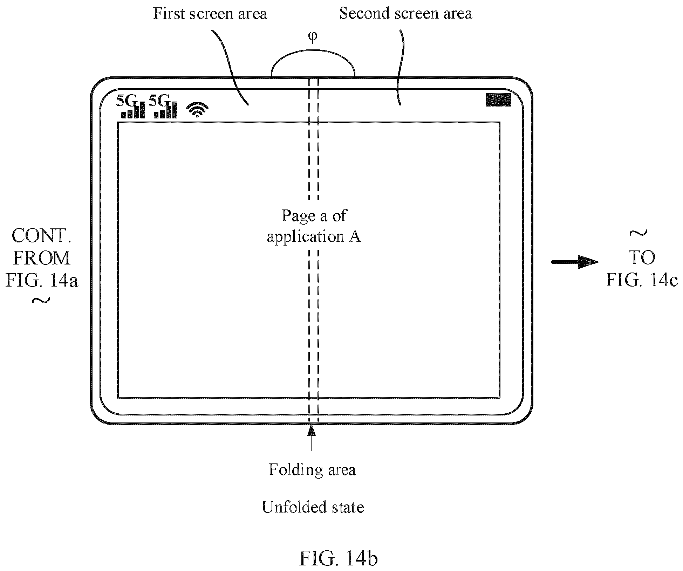

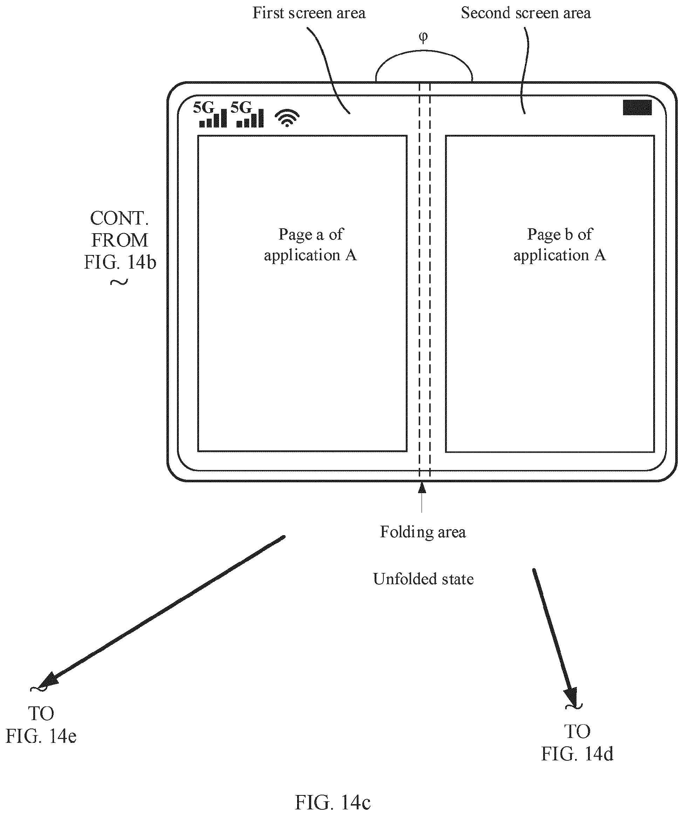

FIG. 14a to FIG. 14f are a diagram of an example of interfaces displayed by a foldable mobile phone in a sharing mode according to an embodiment of this application. As shown in FIG. 14a, when the foldable mobile phone is in a folded state, page a of application A is displayed in a first screen area. FIG. 14b is a diagram in which the mobile phone shown in FIG. 14a is unfolded to an unfolded state (a flattened state) around a hinge in a folding area. For example, a folding angle formed between rear surfaces of the first screen area and the second screen area after unfolding is φ. For example, a value of φ may be 180°, or a difference between a value of φ and 180° is less than a preset threshold. After the mobile phone is flattened, page a of application A is displayed in the first screen area and the second screen area. After the mobile phone is unfolded, if the user continues to open another interface of application A, for example, page b of application A, as shown in FIG. 14c, page a of application A is displayed in the first screen area, and page b of application A is displayed in the second screen area, that is, a display manner of parallel view is used.

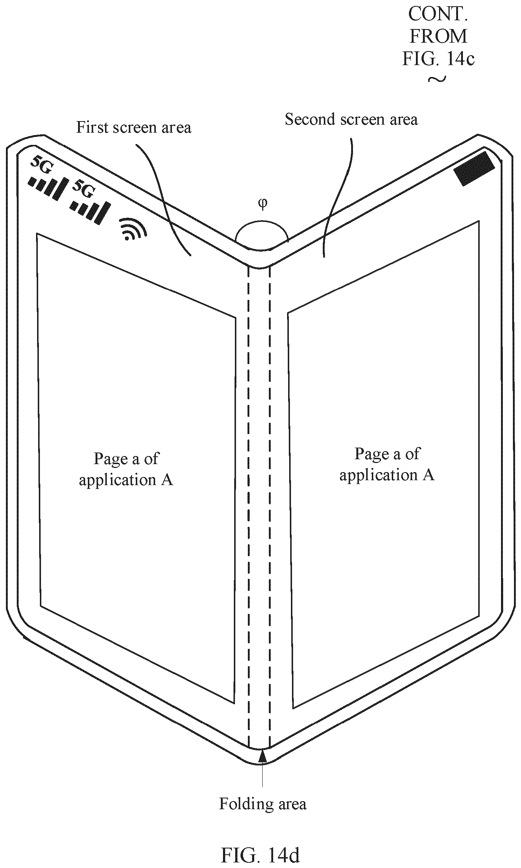

In a possible implementation, a folding angle φ (that is, an inward folding angle of the rear surface of the screen is φ) is formed after the mobile phone in the flattened state shown in FIG. 14c is folded around the hinge in the folding area in directions in which the first screen area and the second screen area face away from each other (outward folding manner), and a folded state of the mobile phone is shown in FIG. 14d. Page a of application A is separately displayed in the first screen area and the second screen area, and a direction of page a of application A displayed in the first screen area is the same as a direction of page a of application A displayed in the second screen area. The mobile phone in the folded state shown in FIG. 14d is placed on a desktop (that is, the hinge in the folding area is perpendicular to the desktop), and two users view the mobile phone in different directions. For example, one user faces the first screen area, and the other user faces the second screen area. In this way, two or more users can view a same display interface (page a of application A) of the foldable mobile phone from different angles.

In another possible implementation, a folding angle φ (that is, an inward folding angle of the rear surface of the screen is φ) is formed after the mobile phone in the flattened state shown in FIG. 14c is folded around the hinge in the folding area in directions in which the first screen area and the second screen area face away from each other (outward folding manner), and a folded state of the mobile phone is shown in FIG. 14e or FIG. 14f. The mobile phone in the folded state shown in FIG. 14e or FIG. 14f is placed on a desktop (that is, the hinge in the folding area is parallel to the desktop). Page a of application A is separately displayed in the first screen area and the second screen area, and a direction of page a of application A displayed in the first screen area is opposite to a direction of page a of application A displayed in the second screen area. FIG. 14f and FIG. 14e separately show interfaces displayed in the first screen area and the second screen area. In this way, two users can perform viewing in different directions. For example, one user faces the first screen area, and the other user faces the second screen area. In other words, after the mobile phone in the flattened state is folded by a specific angle, a page of an application (page a of application A) currently opened by the user is mirrored and copied, and a same interface of the application is separately displayed in the first screen area and the second screen area.

Optionally, in some other embodiments, in FIG. 14d or FIG. 14e and FIG. 14f, both the first screen area and the second screen area may display page b of application A, or a page to be displayed may be determined based on a user selection or a system default setting. This is not limited in embodiments of this application.

If the mobile phone in the folded state shown in FIG. 14f and FIG. 14e or the mobile phone in the folded state shown in FIG. 14d is restored to the flattened state of the mobile phone shown in FIG. 14c, a display interface of the mobile phone may be the same as the display interface of the mobile phone in the flattened state shown in FIG. 14c, that is, the interface displayed by the mobile phone in the flattened state is restored.

FIG. 15a and FIG. 15b are a diagram of an example of interfaces displayed by a foldable mobile phone in a sharing mode according to an embodiment of this application. As shown in FIG. 15a, the foldable mobile phone is a two-fold mobile phone, and there are two folding areas on a screen of the mobile phone. FIG. 15a is a diagram of the mobile phone in a flattened state. Three display areas (screen areas) of the mobile phone respectively display page a of application A (which, for example, may be a level-1 page of application A), page b of application A (which, for example, may be a level-2 page of application A), and page c of application A (which, for example, may be a level-3 page of application A). A folding angle φ (that is, an inward folding angle of a rear surface of the screen is φ) is formed after the mobile phone in the flattened state shown in FIG. 15a is folded around hinges in the two folding areas in directions in which a first screen area and a second screen area face away from each other (outward folding manner) and in directions in which the second screen area and a third screen area face away from each other (outward folding manner). A state after folding is shown in b in FIG. 15. Page a of application A is copied once each time folding is performed. The mobile phone in the folded state shown in FIG. 15b is placed on a desktop (that is, the hinge in the folding area is perpendicular to the desktop, or planes on which the three screen areas of the mobile phone are located are parallel to the desktop). After being mirrored and copied, page a of application A is separately displayed in the second screen area and the third screen area, that is, the three display areas of the mobile phone all display page a of application A. In this way, a plurality of users can perform viewing in different directions. For example, one user faces the first screen area, another user faces the second screen area, and another user faces the third screen area, so that a plurality of users can use the foldable mobile phone from different angles. In other words, after the mobile phone in the flattened state is folded by a specific angle, a page of an application currently opened by the user is mirrored and copied, and a same interface of the application is separately displayed in the first screen area, the second screen area, and the third screen area. Optionally, page b or page c of application A may alternatively be displayed in all the three display areas. For example, a page to be displayed may be determined based on a user selection or a system default setting.

After the folded state of the mobile phone shown in FIG. 15b is restored to the flattened state of the mobile phone shown in FIG. 15a, a display interface of the mobile phone is the same as the display interface shown in FIG. 15a, and the three screen areas of the mobile phone respectively display page a of application A, page b of application A, and page c of application A, that is, an original display state is restored. That is, the mobile phone adjusts display content and display directions of different display areas based on a current placement manner and folding manner. For example, a sensor (for example, including a gravity sensor, a gyroscope, or an angle sensor) on the mobile phone adjusts display content and display directions of the first screen area, the second screen area, and the third screen area based on a placement manner and a folding manner shown in FIG. 15b, so as to facilitate a plurality of users to use the foldable mobile phone from different angles.

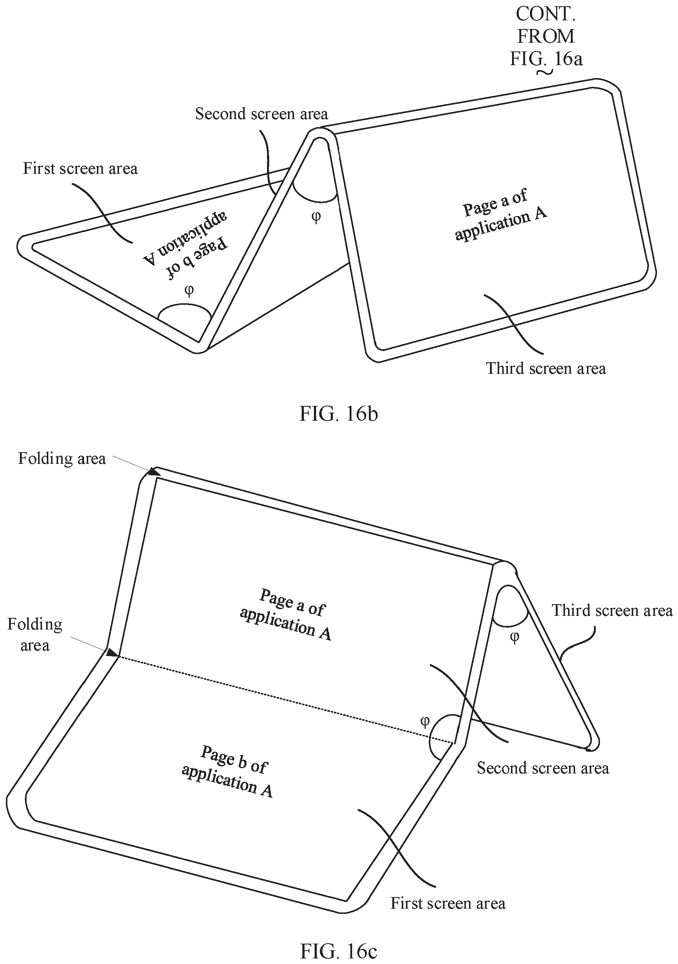

FIG. 16a to FIG. 16c are a diagram of an example of interfaces displayed by a foldable mobile phone in a sharing mode according to an embodiment of this application. As shown in FIG. 16a, the foldable mobile phone is a two-fold mobile phone, and there are two folding areas on a screen of the mobile phone. FIG. 16a is a diagram of the mobile phone in a flattened state. Three display areas of the mobile phone respectively display page a of application A (which, for example, is a level-1 page of application A), page b of application A (which, for example, is a level-2 page of application A), and page c of application A (which, for example, is a level-3 page of application A). A folding angle φ (that is, an inward folding angle of a front surface of the screen is φ) and a folding angle φ (that is, an inward folding angle of a rear surface of the screen is φ) are formed after the mobile phone in the flattened state shown in FIG. 16a is folded around hinges in the two folding areas in directions in which a first screen area and a second screen area face each other (inward folding manner) and in directions in which the second screen area and a third screen area face away from each other (outward folding manner). A state after folding is shown in FIG. 16b or FIG. 16c. The mobile phone in the folded state shown in FIG. 16b or FIG. 16c is placed on a desktop (that is, the hinge in the folding area is parallel to the desktop), and page a of application A is mirrored and copied and then displayed in the third screen area and the second screen area. The third screen area and the second screen area face different directions, and a direction of page a of application A displayed in the third screen area is opposite to a direction of page a of application A displayed in the second screen area. FIG. 16b and FIG. 16c respectively show interfaces displayed when the three display areas of the mobile phone are viewed from different angles. Both the third screen area and the second screen area display page a of application A, and the first screen area displays page b of application A. In this way, a plurality of users can separately view page a of application A from different directions. For example, one user faces the first screen area and the second screen area, and another user faces the third screen area, so that a plurality of users can use the foldable mobile phone from different angles. In other words, after the mobile phone in the flattened state is folded by a specific angle, a page of an application currently opened by the user is mirrored and copied, and the mobile phone adjusts display content and display directions of different display areas based on a current placement manner and folding manner. For example, a sensor (for example, including a gravity sensor, a gyroscope, or an angle sensor) on the mobile phone adjusts display content and display directions of the first screen area, the second screen area, and the third screen area based on a placement manner and a folding manner shown in FIG. 16b or FIG. 16c, so as to facilitate a plurality of users to use the foldable mobile phone from different angles.

It should be noted that in the embodiment shown in FIG. 16a to FIG. 16c, an example in which the first screen area is parallel to the desktop is used for description. In some other embodiments, the third screen area may be parallel to the desktop, and both the first screen area and the second screen area display page a of application A. In addition, the copied display interface may alternatively be page b of application A or page c of application A. This is not limited in this application.

Optionally, in some embodiments, if page a of application A is a video play interface, when the folded state of the mobile phone is shown in FIG. 16b or FIG. 16c, the second screen area and the third screen area may play the video interface, and the first screen area may be used to perform operations such as pause and fast forward. In this case, the interface displayed in the first screen area may be similar to the interface displayed in the second screen area in b in FIG. 5, and the interface displayed in the second screen area may be similar to the interface displayed in the first screen area in b in FIG. 5.

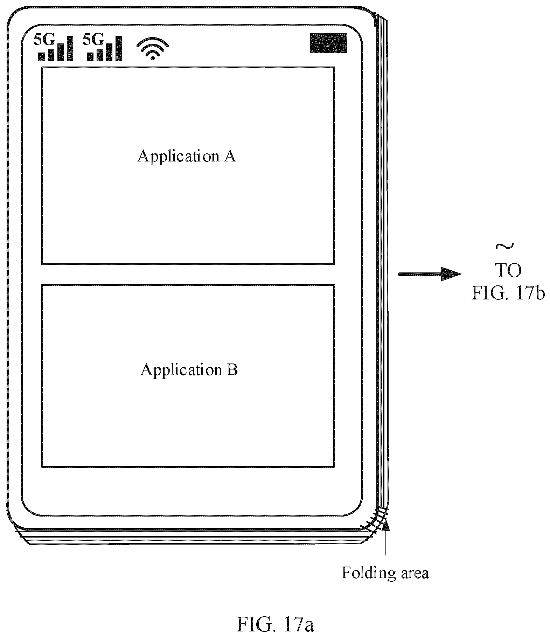

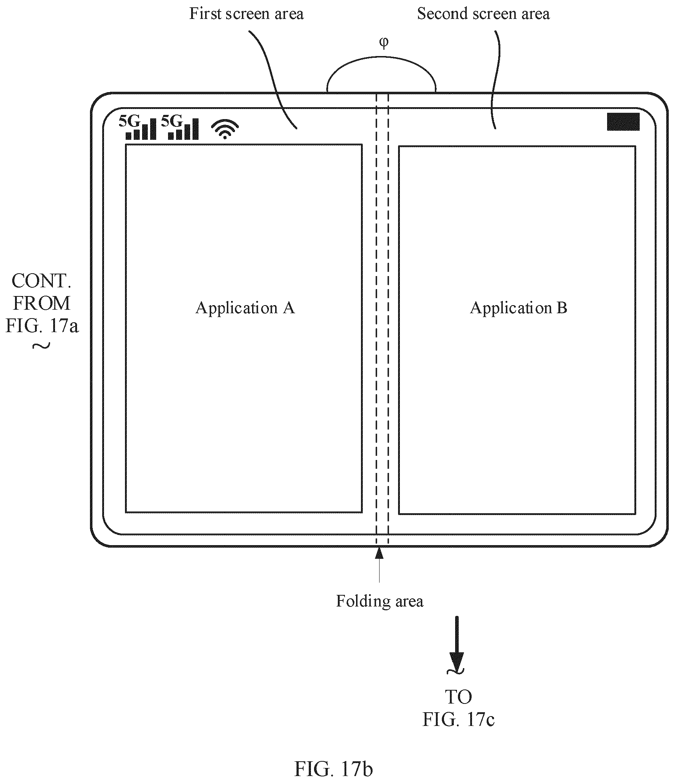

FIG. 17a to FIG. 17d are a diagram of an example of interfaces displayed by a foldable mobile phone in an efficiency mode according to an embodiment of this application. As shown in FIG. 17a, when the foldable mobile phone is in a folded state, application A and application B are displayed in an interface. Application A and application B are displayed in a screen splitting manner. FIG. 17b is a diagram of unfolding the mobile phone shown in FIG. 17a to an unfolded state (a flattened state) around a hinge in a folding area. For example, a folding angle formed between rear surfaces of the first screen area and the second screen area after unfolding is φ, and a value of φ may be 180°, or a difference between a value of φ and 180° is less than a preset threshold. After the mobile phone is flattened, application A is displayed in the first screen area, and application B is displayed in the second screen area. A folding angle φ (that is, an inward folding angle of a rear surface of a screen is φ) is formed after the mobile phone in the flattened state shown in FIG. 17b is folded around the hinge in the folding area in directions in which the first screen area and the second screen area face away from each other (outward folding manner). A state after folding is shown in FIG. 17c, application A is displayed in the first screen area, and application B is displayed in the second screen area. Then, the mobile phone in the folded state shown in FIG. 17c is restored to the flattened state, and an interface displayed on the mobile phone changes to that shown in FIG. 17d. The mobile phone in the unfolded state shown in FIG. 17d is placed horizontally on a desktop (that is, the hinge in the folding area is parallel to the desktop). Application A is displayed in the first screen area, application B is displayed in the second screen area, and a direction of application A displayed in the first screen area is opposite to a direction of application B displayed in the second screen area, so that two users separately use different applications in different directions. For example, one user faces the first screen area and uses application A, and the other user faces the second screen area and uses application B, so that two or more users use the foldable mobile phone from different angles. In other words, after the mobile phone in the flattened state is folded by a specific angle and restored to the flattened state, the mobile phone adjusts display content and display directions of different display areas based on a current placement manner and folding manner. For example, a sensor (for example, including a gravity sensor, a gyroscope, or an angle sensor) on the mobile phone adjusts display content and display directions of the first screen area and the second screen area based on a placement manner and a folding manner shown in FIG. 17d, so as to facilitate a plurality of users to use the foldable mobile phone from different angles.

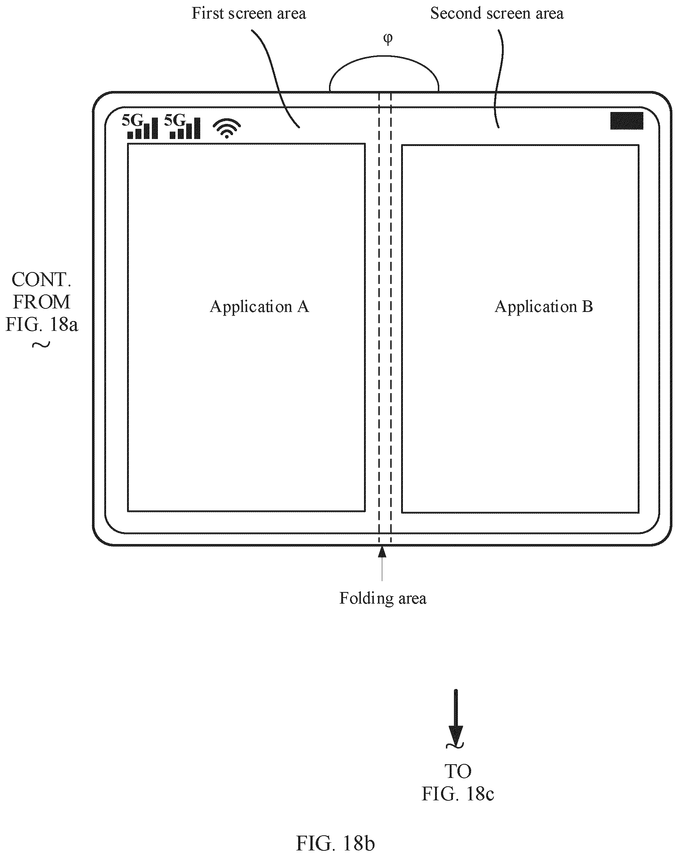

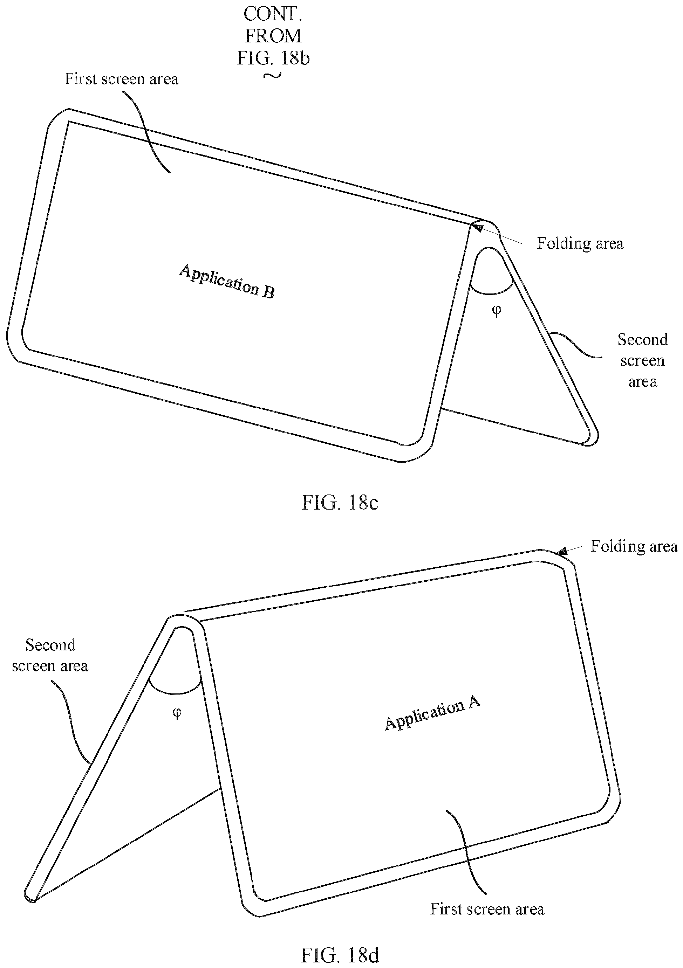

FIG. 18a to FIG. 18d are a diagram of an example of interfaces displayed by a foldable mobile phone in an efficiency mode according to an embodiment of this application. As shown in FIG. 18a, when the foldable mobile phone is in a folded state, application A and application B are displayed in an interface. Application A and application B are displayed in a screen splitting manner. FIG. 18b is a diagram of unfolding the mobile phone shown in FIG. 18a to an unfolded state (a flattened state) around a hinge in a folding area. For example, a folding angle formed between rear surfaces of the first screen area and the second screen area after unfolding is φ, and a value of φ may be 180°, or a difference between a value of φ and 180° is less than a preset threshold. As shown in FIG. 18b, after the mobile phone is flattened around the folding area, a screen of the mobile phone is divided by the folding area into two parts: the first screen area and the second screen area. After the mobile phone is flattened, application A is displayed in the first screen area, and application B is displayed in the second screen area. A folding angle φ (that is, an inward folding angle of a rear surface of the screen is φ) is formed after the mobile phone in the flattened state shown in FIG. 18b is folded around the hinge in the folding area in directions in which the first screen area and the second screen area face away from each other (outward folding manner). A state after folding is shown in FIG. 18c or FIG. 18d. The mobile phone in the folded state shown in FIG. 18c or FIG. 18d is placed on a desktop (that is, the hinge in the folding area is parallel to the desktop). FIG. 18c and FIG. 18d respectively show interfaces displayed when the two display areas of the mobile phone are viewed from different angles, application A is displayed in the first screen area, and application B is displayed in the second screen area. The first screen area and the second screen area face different directions, so that a plurality of users separately use different applications in different directions. For example, one user faces the first screen area, and another user faces the second screen area, so that a plurality of users can use the foldable mobile phone from different angles. In other words, after the mobile phone in the flattened state is folded by a specific angle, the mobile phone adjusts display content and display directions of different display areas based on a current placement manner and folding manner. For example, a sensor (for example, including a gravity sensor, a gyroscope, or an angle sensor) on the mobile phone adjusts display content and display directions of the first screen area and the second screen area based on a placement manner and a folding manner shown in FIG. 18c or FIG. 18d, so as to facilitate a plurality of users to use the foldable mobile phone from different angles.

FIG. 19 is a diagram of an example of interfaces displayed by a foldable mobile phone in an efficiency mode according to an embodiment of this application. As shown in a in FIG. 19, the foldable mobile phone is a two-fold mobile phone, and there are two folding areas on a screen of the mobile phone. a in FIG. 19 is a diagram of the mobile phone in a flattened state. Three screen areas of the mobile phone respectively display page a of application A (which, for example, is a level-1 page of application A), page b of application A (which, for example, is a level-2 page of application A), and application B. A folding angle φ (that is, an inward folding angle of a front surface of the screen is φ) and a folding angle φ (that is, an inward folding angle of a rear surface of the screen is φ) are formed after the mobile phone in the flattened state shown in a in FIG. 19 is folded around hinges in the two folding areas in directions in which a first screen area and a second screen area face each other (inward folding manner) and in directions in which the second screen area and a third screen area face away from each other (outward folding manner). A state after folding is shown in b or c in FIG. 19. The mobile phone in the folded state shown in b or c in FIG. 19 is placed on a desktop (that is, the hinge in the folding area is parallel to the desktop). b and c in FIG. 19 respectively show interfaces displayed when the three display areas of the mobile phone are viewed from different angles. The third screen area displays application B, the first screen area displays page b of application A, and the second screen area displays page a of application A. In this way, a plurality of users can separately use different applications (application A and application B) in different directions. For example, one user faces the first screen area and the second screen area and uses application A, and another user faces the third screen area and uses application B, so that a plurality of users can use different applications of the foldable mobile phone from different angles.

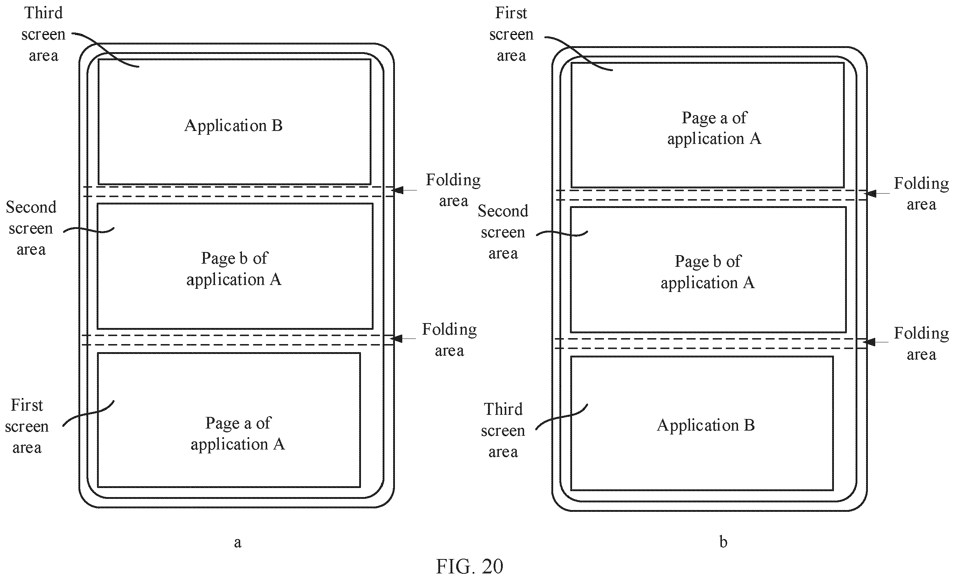

After the mobile phone in the placement manner shown in b or c in FIG. 19 is flattened, for example, after the mobile phone in the placement manner shown in c in FIG. 19 is flattened by using the second screen area that displays page a of application A as a viewing direction, interfaces displayed in the three screen areas after flattening are shown in a in FIG. 20, and the three screen areas are arranged from top to bottom. Application B is displayed in the uppermost third screen area, page b of application A is displayed in the middle second screen area, page a of application A is displayed in the lowermost first screen area, and an order of the interfaces displayed in the three screen areas is restored to a display order in an original state (a display order shown in a in FIG. 19). In other words, an interface order in which the three screen areas shown in a in FIG. 20 are displayed from top to bottom is the same as an interface order in which the three screen areas shown in a in FIG. 19 are displayed from right to left. It can be learned from comparison between a in FIG. 20 and a in FIG. 19 that, as a placement manner of the mobile phone changes, a direction of a display interface in each screen area of the mobile phone is adjusted based on the placement manner of the mobile phone.

The mobile phone in the placement manner shown in b in FIG. 19 is flattened by using the third screen area that displays application B as a viewing direction. Interfaces displayed in the three screen areas after flattening are shown in b in FIG. 20. The three screen areas are arranged from top to bottom. Page a of application A is displayed in the uppermost first screen area, page b of application A is displayed in the middle second screen area, and application B is displayed in the lowermost third screen area. An order of the interfaces displayed in the three screen areas is restored to a display order in an original state (a display order shown in a in FIG. 19). In other words, an interface order in which the three screen areas shown in b in FIG. 20 are displayed from top to bottom is the same as an interface order in which the three screen areas shown in a in FIG. 19 are displayed from left to right. It can be learned from comparison between b in FIG. 20 and c in FIG. 19 that, as a placement manner of the mobile phone changes, a direction of a display interface in each screen area of the mobile phone is adjusted based on the placement manner of the mobile phone. In addition, it can be learned from comparison between a and b in FIG. 20 that when the user unfolds the screen in different angle of view directions, an interface displayed in each screen area of the mobile phone is adjusted to adapt to the angle of view direction of the user.

It should be noted that in the embodiment shown in FIG. 19, an example in which the first screen area is parallel to the desktop is used for description. In some other embodiments, the third screen area may be parallel to the desktop, that is, the second screen area displays page a of application A, the third screen area displays page b of application A, and the first screen area displays application B.

Optionally, in some embodiments, if page a of application A is a video play interface, when the folded state of the mobile phone is shown in b or c in FIG. 19, the second screen area may play the video interface, and the first screen area may be used to perform operations such as pause and fast forward. In this case, the interface displayed in the first screen area may be similar to the interface displayed in the second screen area in b in FIG. 5, and the interface displayed in the second screen area may be similar to the interface displayed in the first screen area in b in FIG. 5.

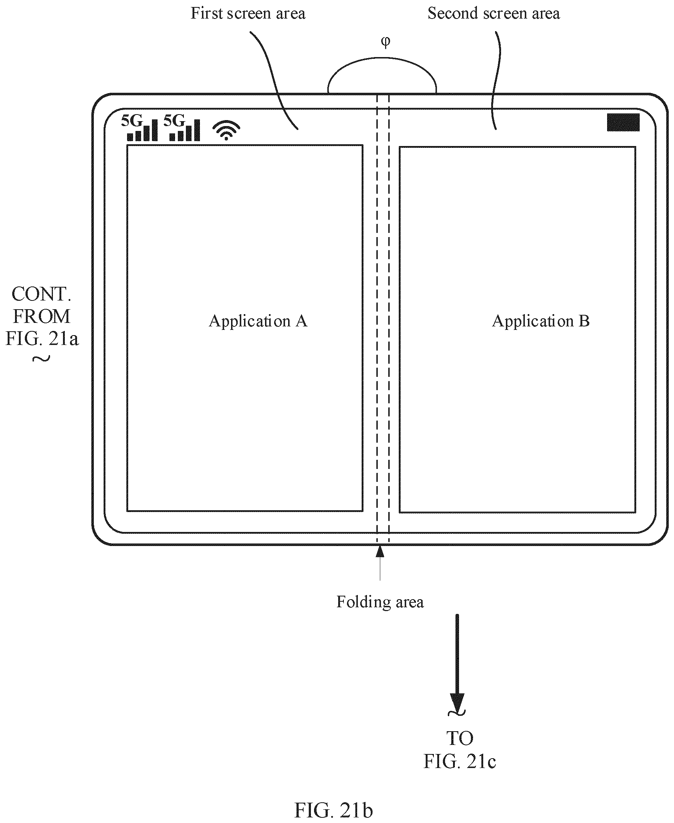

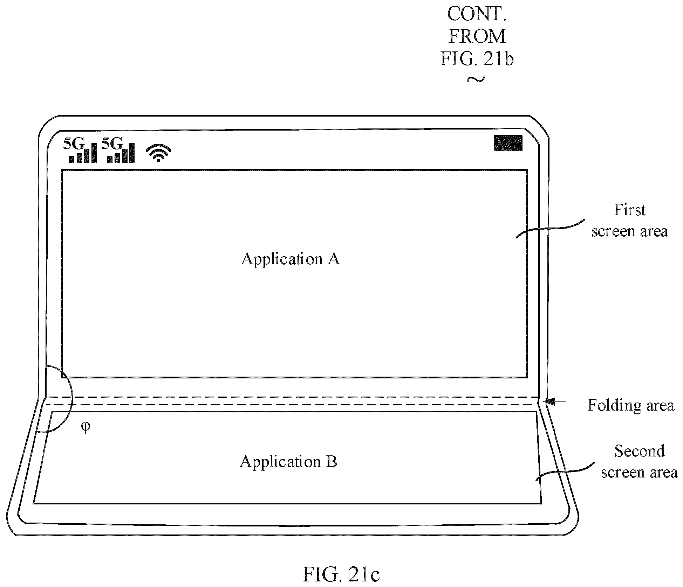

FIG. 21a to FIG. 21c are a diagram of an example of interfaces displayed by a foldable mobile phone in an efficiency mode according to an embodiment of this application. As shown in FIG. 21a, when the foldable mobile phone is in a folded state, application A and application B are displayed in an interface. Application A and application B are displayed in a screen splitting manner. FIG. 21b is a diagram of unfolding the mobile phone shown in FIG. 21a to an unfolded state (a flattened state) around a hinge in a folding area. For example, a folding angle formed between rear surfaces of the first screen area and the second screen area after unfolding is φ, and a value of φ may be 180°, or a difference between a value of φ and 180° is less than a preset threshold. After the mobile phone is flattened, application A is displayed in the first screen area, and application B is displayed in the second screen area. A folding angle φ (that is, an inward folding angle of a front surface of the screen is φ) is formed after the mobile phone in the flattened state shown in FIG. 21b is folded around the hinge in the folding area in directions in which the first screen area and the second screen area face each other (inward folding manner). A state after folding is shown in FIG. 21c. The mobile phone in the folded state shown in FIG. 21c is placed on a desktop (that is, the hinge in the folding area is parallel to the desktop). Application A is displayed in the first screen area, and application B is displayed in the second screen area, so that one user can simultaneously use a plurality of applications.

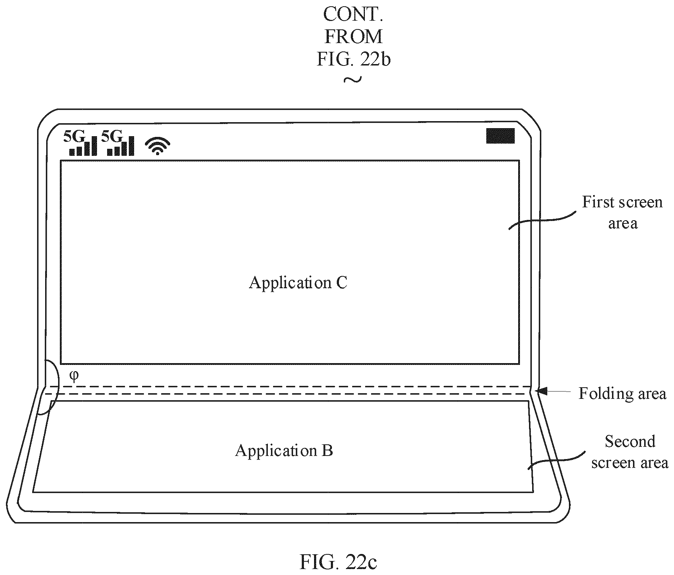

FIG. 22a to FIG. 22c are a diagram of an example of interfaces displayed by a foldable mobile phone in an efficiency mode according to an embodiment of this application. In a folding manner (a folding angle φ (an inward folding angle of a front surface of the screen is φ) is formed after folding around a hinge in a folding area in directions in which a first screen area and a second screen area face each other (inward folding manner)) and a placement manner (the hinge in the folding area is parallel to a desktop) shown in FIG. 22a, application A is displayed in the first screen area, and application B is displayed in the second screen area, so that one user can simultaneously use a plurality of applications. In addition, an application in any display area may be replaced with another application that is running in the background by using a simple operation of the user. For example, as shown in FIG. 22a, the user slides up on a side edge of the first display area by using a finger. After the user performs an operation, an interface displayed in the first display area is shown in FIG. 22b. The first display area displays a task card or a small window of application C that runs in the background. If the user wants to use application C, the user may tap the task card or the small window of application C, and application C is displayed in the first display area in full screen, as shown in FIG. 22c.

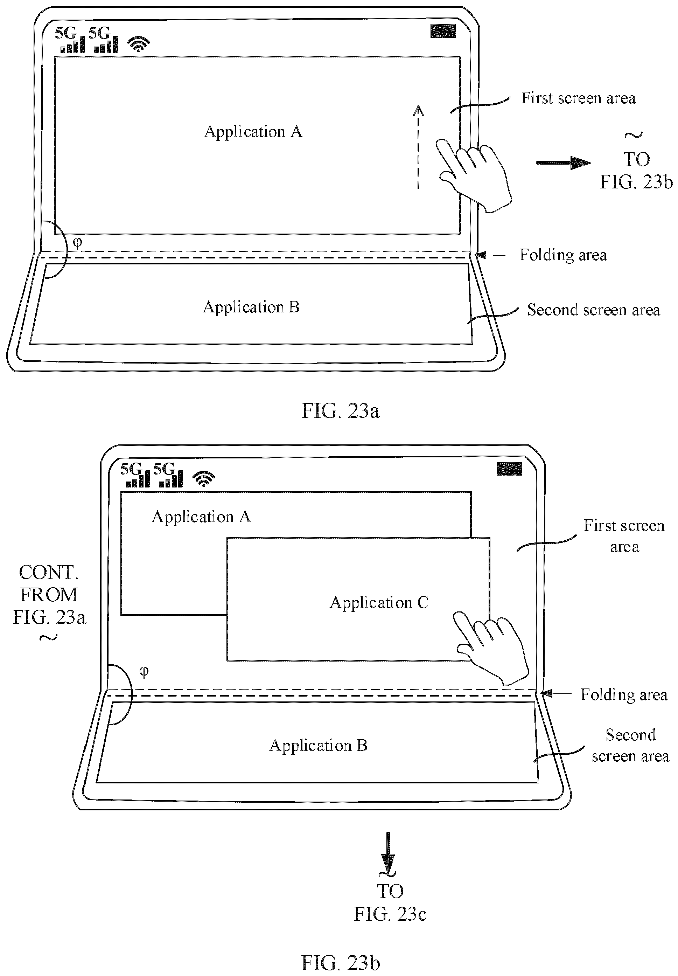

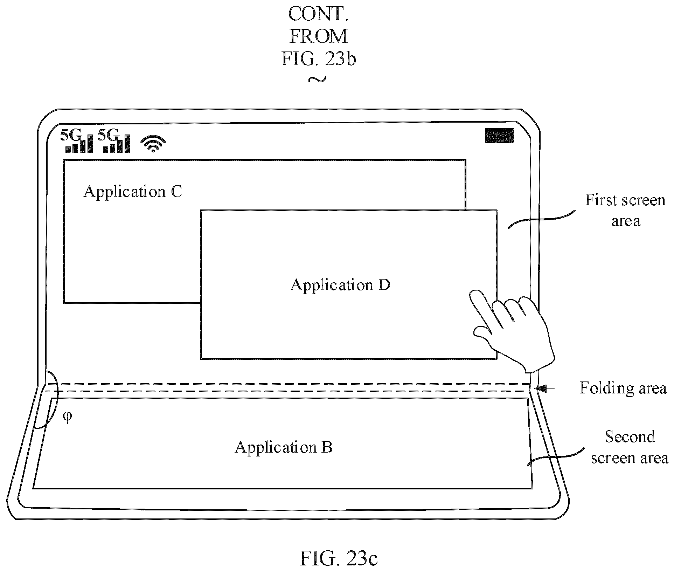

FIG. 23a to FIG. 23c are a diagram of an example of interfaces displayed by a foldable mobile phone in an efficiency mode according to an embodiment of this application. In a folding manner (a folding angle φ (an inward folding angle of a front surface of the screen is φ) is formed after folding around a hinge in a folding area in directions in which a first screen area and a second screen area face each other (inward folding manner)) and a placement manner (the hinge in the folding area is parallel to a desktop) shown in FIG. 23a, application A is displayed in the first screen area, and application B is displayed in the second screen area, so that one user can simultaneously use a plurality of applications. In addition, an application in any display area may be replaced with another application that is running in the background by using a simple operation of the user. For example, as shown in FIG. 23a, the user slides up on a side edge of the first display area by using a finger. After the user performs an operation, an interface displayed in the first display area is shown in FIG. 23b. The first display area displays a task card or a small window of application C that runs in the background. If the user does not want to use application C, the user may continue to slide up on the side edge of the first display area by using the finger. After the user performs an operation, an interface displayed in the first display area is shown in FIG. 23 c. The first display area displays a task card or a small window of application D that runs in the background. If the user does not want to use application D, the user may continue to slide up on the side edge of the first display area by using the finger, until the application is switched to an application that the user wants to use. If the user wants to use application D, the user may tap the task card or the small window of the application D, and application D is displayed in the first display area in full screen.

It should be understood that, in the examples shown in FIG. 22a to FIG. 22c and FIG. 23a to FIG. 23c, an operation manner of the user is not limited. For example, the user may alternatively use a finger to slide down, slide left, slide right, touch the screen, or tap the screen for a plurality of times or the first time on the side edge of the first display area. This is not limited in embodiments of this application.

FIG. 24a and FIG. 24b are a diagram of an example of interfaces displayed by a foldable mobile phone in an efficiency mode according to an embodiment of this application. In a folding manner (a folding angle φ (an inward folding angle of a front surface of the screen is φ) is formed after folding around a hinge in a folding area in directions in which a first screen area and a second screen area face each other (inward folding manner)) and a placement manner (the hinge in the folding area is parallel to a desktop) shown in FIG. 24a, application A is displayed in the first screen area, and application B is displayed in the second screen area, so that one user can simultaneously use a plurality of applications. In addition, after an application in any display area is closed or exited by the user, the display area displays a list of recommended applications associated with application closed or exited by the user (or may display a list of applications running in the background of the mobile phone). For example, as shown in FIG. 24a, after the user taps an "Exit" control of application A displayed in the first screen area, an interface displayed in the first display area is shown in FIG. 24b. Icons of a plurality of applications, for example, application C, application D, and application E shown in FIG. 24b, associated with application A are displayed in the first display area. The user may select, according to a requirement of the user, an application that the user wants to use, and tap an icon corresponding to the application, so that the application is displayed in the first display area in full screen.

FIG. 25 is a diagram of an example of interfaces displayed by a foldable mobile phone in an immersive mode according to an embodiment of this application. In a folding manner (a folding angle φ (an inward folding angle of a front surface of the screen is φ) is formed after folding around a hinge in a folding area in directions in which a first screen area and a second screen area face each other (inward folding manner)) and a placement manner (the hinge in the folding area is parallel to a desktop) shown in FIG. 25. Page a of application A is displayed in the first screen area, and page b of application A is displayed in the second screen area, so that one user can simultaneously view different interfaces of one application.

FIG. 26 is a diagram of an example of interfaces displayed by a foldable mobile phone in an immersive mode according to an embodiment of this application. a in FIG. 26 is a diagram of unfolding the mobile phone around a hinge in a folding area to an unfolded state (a flattened state). For example, a folding angle formed between rear surfaces of the first screen area and the second screen area after unfolding is φ, and a value of φ may be 180°, or a difference between a value of φ and 180° is less than a preset threshold. After the mobile phone is flattened, a screen of the mobile phone is divided by the folding area into two parts: the first screen area and the second screen area. Application A is displayed in the first screen area, and application B is displayed in the second screen area. A folding angle φ (that is, an inward folding angle of a rear surface of a screen is φ) is formed after the mobile phone in the flattened state shown in a in FIG. 26 is folded around the hinge in the folding area in directions in which the first screen area and the second screen area face away from each other (outward folding manner). A state after folding is a folded state shown in b or c in FIG. 26. The mobile phone in the folded state shown in b or c in FIG. 26 is placed on a desktop (that is, the hinge in the folding area is parallel to the desktop). It is assumed that only one user is using the mobile phone. For example, the user faces the second screen area. b and c in FIG. 26 respectively show interfaces displayed when the two display areas of the mobile phone are viewed from different angles. Application B is displayed in the second screen area facing the user (that is, a screen area that can be seen by the user), and the first screen area that cannot be seen by the user is screen-off (application A is displayed when the screen is not off). In this way, it is ensured that the user can normally use the mobile phone, and power of the mobile phone can be saved. After the folded state of the mobile phone shown in b or c in FIG. 26 is restored to the flattened state, as shown in d in FIG. 26, a display interface of the mobile phone is the same as the display interface shown in a in FIG. 26. Application A is displayed in the first screen area, and application B is displayed in the second screen area, so that the user can use the two applications at the same time, that is, enter an efficiency mode.

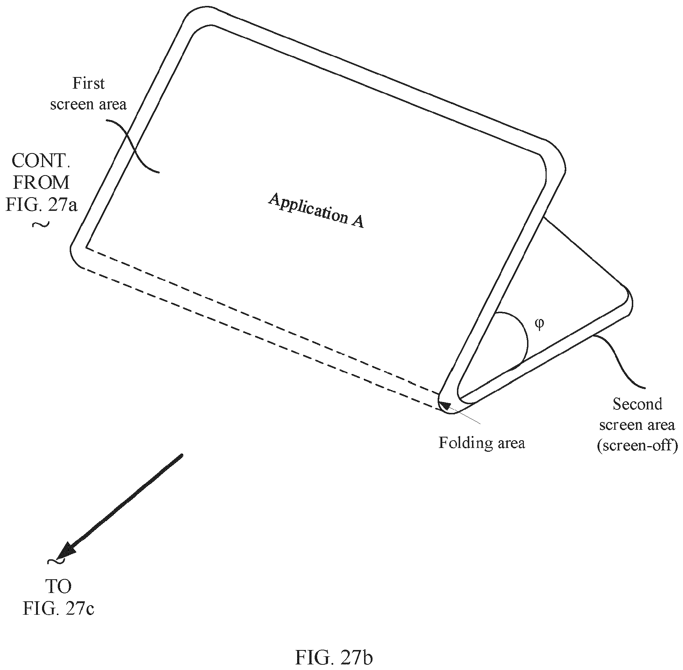

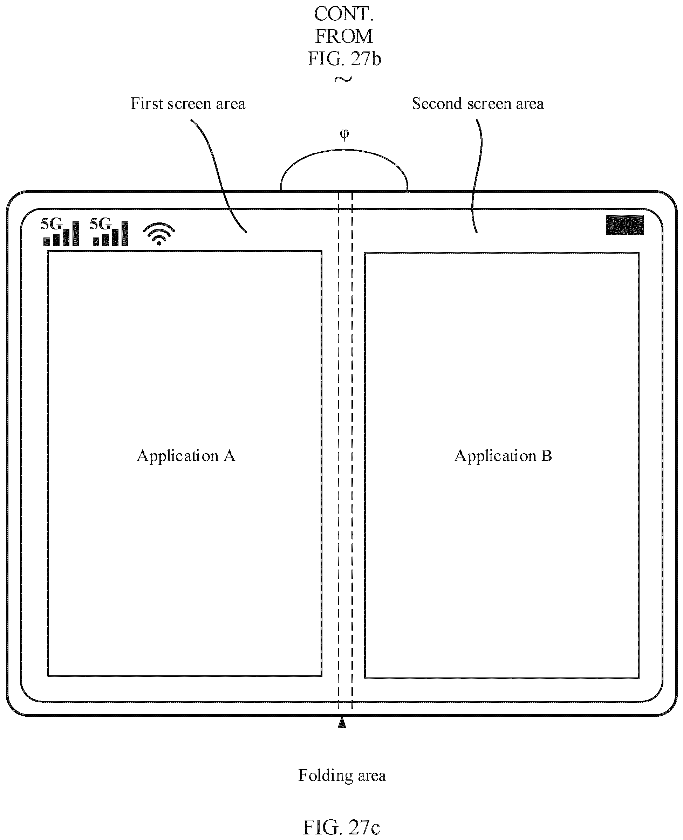

FIG. 27a to FIG. 27c are a diagram of an example of interfaces displayed by a foldable mobile phone in an immersive mode according to an embodiment of this application. FIG. 27a is a diagram of unfolding the mobile phone around a hinge in a folding area to an unfolded state (a flattened state). For example, a folding angle formed between rear surfaces of the first screen area and the second screen area after unfolding is φ. A value of φ may be 180°, or a difference between a value of φ and 180° is less than a preset threshold. After the mobile phone is flattened, application A is displayed in the first screen area, and application B is displayed in the second screen area. A folding angle φ (that is, an inward folding angle of a rear surface of a screen is φ) is formed after the mobile phone in the flattened state shown in FIG. 27a is folded around the hinge in the folding area in directions in which the first screen area and the second screen area face away from each other (outward folding manner). A state after folding is a folded state shown in FIG. 27b. The mobile phone in the folded state shown in FIG. 27b is placed on a desktop (that is, the hinge in the folding area is parallel to the desktop). Assuming that only one user is using the mobile phone, for example, the user faces the first screen area, application A is displayed in the first screen area facing the user (that is, the first screen area that can be seen by the user), and the second screen area that cannot be seen by the user (that is, the second screen area facing the desktop) is screen-off. In this way, it is ensured that the user can normally use the mobile phone, and power of the mobile phone can be saved. After the folded state of the mobile phone shown in FIG. 27b is restored to the flattened state, as shown in FIG. 27c, a display interface of the mobile phone is the same as the display interface shown in FIG. 27a. Application A is displayed in the first screen area, and application B is displayed in the second screen area, so that the user can use the two applications at the same time, that is, enter an efficiency mode.

FIG. 28a and FIG. 28b are a diagram of an example of interfaces displayed by a foldable mobile phone in an immersive mode according to an embodiment of this application. The foldable mobile phone is a two-fold mobile phone. A folding angle φ (that is, an inward folding angle of a front surface of the screen is φ) and a folding angle φ (that is, an inward folding angle of a rear surface of the screen is φ) are formed after the mobile phone is folded around hinges in two folding areas in directions in which a first screen area and a second screen area face each other (inward folding manner) and in directions in which the second screen area and a third screen area face away from each other (outward folding manner). A state after folding is shown in FIG. 28a or FIG. 28b. The mobile phone in the folded state shown in FIG. 28a or FIG. 28b is placed on a desktop (that is, the hinge in the folding area is parallel to the desktop). FIG. 28a and FIG. 28b respectively show interfaces displayed when the three display areas of the mobile phone are viewed from different angles. It is assumed that only one user is using the mobile phone. If the user faces the first screen area and the second screen area, the first screen area displays page b of application A, and the second screen area displays page a of application A. The third screen area that cannot be seen by the user is screen-off (when the screen is not off, another application or page a of application A may be displayed), and the user immersively uses application A. In this way, it is ensured that the user can normally use the mobile phone, and power of the mobile phone can be saved.

In the example shown in FIG. 28a and FIG. 28b, if another user faces the third screen area at the same time, the third screen area is not off. In this case, the mobile phone switches to an efficiency mode or a sharing mode.

For example, if the third screen area displays page a of application A, that is, the third screen area and the second screen area display a same interface, and a direction of page a of application A displayed in the third screen area is opposite to a direction of page a of application A displayed in the second screen area, the mobile phone is in the sharing mode, so that a plurality of users can use a same application of the foldable mobile phone from different angles.

For another example, if the third screen area displays application B, that is, the third screen area and the second screen area display different interfaces, and a direction of application B displayed in the third screen area is opposite to a direction of page a of application A displayed in the second screen area, the mobile phone is in the efficiency mode, so that a plurality of users can use different applications of the foldable mobile phone from different angles.

FIG. 29a and FIG. 29b are a diagram of an example of interfaces displayed by a foldable mobile phone used by a single person in an efficiency mode according to an embodiment of this application. The foldable mobile phone is a two-fold mobile phone. A folding angle φ (that is, an inward folding angle of a front surface of the screen is φ) and a folding angle φ (that is, an inward folding angle of a rear surface of the screen is φ) are formed after the mobile phone is folded around hinges in two folding areas in directions in which a first screen area and a second screen area face each other (inward folding manner) and in directions in which the second screen area and a third screen area face away from each other (outward folding manner). A state after folding is shown in FIG. 29a or FIG. 29b. The mobile phone in the folded state shown in FIG. 29a or FIG. 29b is placed on a desktop (that is, the hinge in the folding area is parallel to the desktop). FIG. 29a and FIG. 29b respectively show interfaces displayed when the three display areas of the mobile phone are viewed from different angles. It is assumed that only one user is using the mobile phone. If the user faces the first screen area and the second screen area, the first screen area displays application A, and the second screen area displays application B. The third screen area that cannot be seen by the user is screen-off, that is, in the efficiency mode, so that one user can use a plurality of applications at the same time. In this way, it is ensured that the user can normally use the mobile phone, and power of the mobile phone can be saved.

In the example shown in FIG. 29a and FIG. 29b, if another user faces the third screen area at the same time, the third screen area is not off. In this case:

If the third screen area displays application B, that is, the third screen area and the second screen area display a same interface, and a direction of application B displayed in the third screen area is opposite to a direction of application B displayed in the second screen area, the mobile phone is in the sharing mode, so that a plurality of users can use a same application of the foldable mobile phone from different angles.

If the third screen area displays application C, that is, the third screen area and the second screen area display different interfaces, and a direction of application C displayed in the third screen area is opposite to a direction of application B displayed in the second screen area, the mobile phone is used by two persons in the efficiency mode, so that a plurality of users can use different applications of the foldable mobile phone from different angles.

FIG. 30 is a diagram of an example of interfaces displayed by a foldable mobile phone in a privacy mode according to an embodiment of this application. The foldable mobile phone is a two-fold mobile phone. A folding angle φ (that is, an inward folding angle of a front surface of the screen is φ) and a folding angle φ (that is, an inward folding angle of a rear surface of the screen is φ) are formed after the mobile phone is folded around hinges in two folding areas in directions in which a first screen area and a second screen area face each other (inward folding manner) and in directions in which the second screen area and a third screen area face away from each other (outward folding manner). A state after folding is shown in a or b in FIG. 30. The mobile phone in the folded state shown in a or b in FIG. 30 is placed on a desktop (that is, the hinge in the folding area is parallel to the desktop). a and b in FIG. 30 respectively show interfaces displayed when the three display areas of the mobile phone are viewed from different angles. It is assumed that one user faces the second screen area and the first screen area, and another user faces the third screen area. Both the third screen area and the second screen area display page a of application A, and the first screen area displays page b of application A (or may display a page of application B). A direction of page a of application A displayed in the third screen area is opposite to a direction of page a of application A displayed in the second screen area. It is assumed that the user facing the second screen area and the first screen area is a main user, a system notification message is displayed in only the screen area facing the main user. For example, as shown in a in FIG. 30, the system notification message is displayed in only the second screen area, and the system notification message is not displayed in the third screen area facing a secondary user.

The main user facing the first screen area and the second screen area may tap the "system notification message". After the main user taps the "system notification message", a displayed interface is shown in c or d in FIG. 30. An application corresponding to the notification message may be displayed in a floating window (or in a small window manner) in the second screen area facing the main user, and the third screen area facing the secondary user maintains an original display interface and does not display the application corresponding to the notification message. That is, the system notification message is not shared with the screen area facing the secondary user, so that privacy of the main user can be better protected, and user experience can be improved.

Optionally, in embodiments of this application, in a possible implementation, the privacy mode may be set by controlling a manner of composing a display interface in a display area in the sharing mode. For example, in the example shown in FIG. 30, when the mobile phone composes, based on the second screen area, the interface displayed in the third screen area, if a main application that is not displayed in the second screen area, such as a system notification message, an application layer input notification message, a floating window, or a floating bubble, exists in the interface displayed in the second screen area, when the mobile phone composes the interface displayed in the third screen area, the pages of the main application that is not displayed in the second screen area do not participate in composition of the interface displayed in the third screen area, that is, the third screen area displays only a page of the main application that is displayed in the second screen area.

Optionally, in embodiments of this application, in another possible implementation, the privacy mode may be set by setting attributes of different screens in advance, or the privacy mode may be set by setting attributes of different screens based on a folding status of the mobile phone.

For example, a screen area may be preset as a privacy area, and another display area may be preset as a sharing area. Alternatively, when the mobile phone is in a folding status and a placement manner shown in FIG. 31a and FIG. 31b (the same as the folding status and the placement manner shown in FIG. 30), FIG. 31a and FIG. 31b respectively show interfaces displayed when the three display areas of the mobile phone are viewed from different angles. The first screen area may be set as a sharing area, and the second screen area may be set as a privacy area. An interface displayed in the privacy area is not shared with another user. Only an interface displayed in the sharing area is shared with another user. In this case, through setting, notification messages such as a system notification message, an application layer input notification message, a floating window, and a floating bubble may be displayed in only the privacy area (the second screen area), but not displayed in the sharing area (the first screen area). For example, in the example shown in FIG. 31a and FIG. 31b, in the sharing mode, the mobile phone can only compose, based on the sharing area (the first screen area), the interface displayed in the third screen area, that is, the third screen area and the first screen area display a same interface (for example, both display application B), and are synchronous, and the interface displayed in the second screen area is not shared with another user.

In some embodiments, the sharing mode, the efficiency mode, the immersive mode, and the privacy mode provided in embodiments of this application may be set in a setting menu of the mobile phone to enter a corresponding mode, or controls corresponding to different modes may be set on a display of the mobile phone, and a user may enter a corresponding mode by tapping a corresponding control.

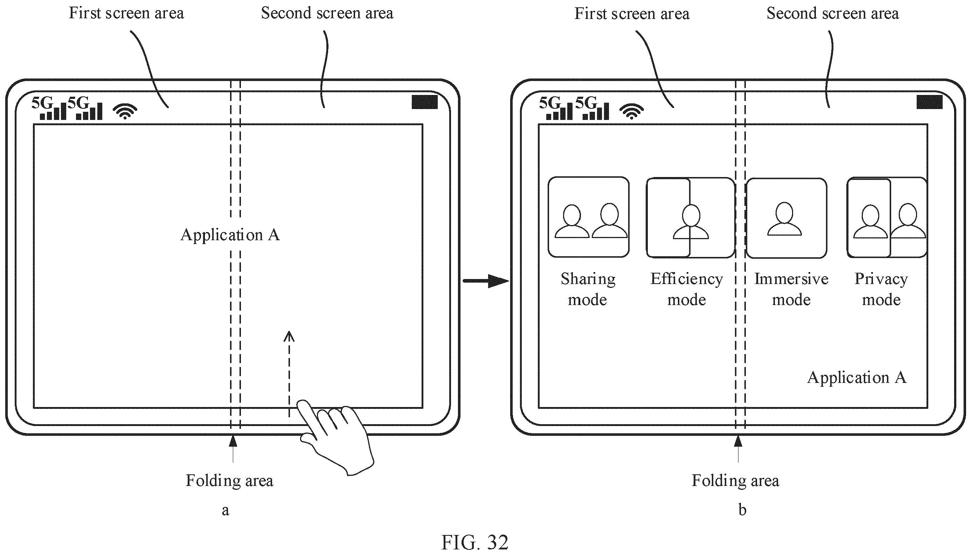

For example, FIG. 32 is a diagram of an example of interfaces displayed by a mobile phone when a user selects different modes. As shown in a in FIG. 32, application A is displayed in a display interface of the mobile phone. The user may perform an up-slide operation at the bottom of the display interface, the displayed interface changes to that shown in b in FIG. 32, and icons corresponding to the sharing mode, the efficiency mode, the immersive mode, and the privacy mode are displayed. The user may tap any icon according to a requirement of the user, so that the mobile phone enters a corresponding mode. In a process of using the mobile phone, the user may change a current mode at any time according to a requirement. For example, the user may perform an operation such as sliding up at the bottom of the display interface. After the user performs the operation, the mobile phone may display icons corresponding to different modes for the user to select.

Alternatively, in another possible implementation, the mobile phone may determine a placement manner, a folding manner, a folding angle, and the like of the mobile phone based on data detected by a sensor (for example, including a gravity sensor, a gyroscope, an angle sensor, or a folding sensor) in the mobile phone. A processor in the mobile phone may further determine a quantity of applications currently running in the foreground of the mobile phone, and automatically enter a mode based on the placement manner, the folding manner, and the folding angle of the mobile phone, the quantity of applications currently running in the foreground, and the like. That is, a correspondence between a use mode and a placement manner, a folding manner, and a folding angle of the mobile phone, a quantity of applications currently running in the foreground, and the like may be preset.

For example, for a one-fold mobile phone, if a folding manner of the mobile phone is an outward folding manner, a folding angle is greater than zero degrees and is less than or equal to 180 degrees, and only one application is running in the foreground, for example, the mobile phone is in a placement manner shown in FIG. 14d or FIG. 14e and FIG. 14f, the mobile phone automatically enters a sharing mode or an immersive mode.

For another example, for a one-fold mobile phone, if a folding manner of the mobile phone is an outward folding manner, a folding angle is greater than zero degrees and is less than or equal to 180 degrees, and only one application is running in the foreground, for example, the mobile phone is in a placement manner shown in FIG. 14e or FIG. 14f, and an interface such as a system notification message, an application layer input notification message, a floating window, or a floating bubble is displayed in a screen area, the mobile phone automatically enters a privacy mode.

For another example, for a one-fold mobile phone, if a folding manner of the mobile phone is an outward folding manner, a folding angle is greater than zero degrees and is less than or equal to 180 degrees, and two applications run at the same time in the foreground, for example, the mobile phone is a placement manner shown in FIG. 17d or FIG. 18c or FIG. 18d, the mobile phone automatically enters an efficiency mode.

For another example, for a one-fold mobile phone, if a folding manner of the mobile phone is an inward folding manner, and a folding angle is greater than zero degrees and is less than 180 degrees, for example, the mobile phone is in a placement manner shown in FIG. 22a or FIG. 25, the mobile phone automatically enters an efficiency mode or an immersive mode.

The following describes, with reference to specific examples, a display and control method for a foldable electronic device provided in embodiments of this application.

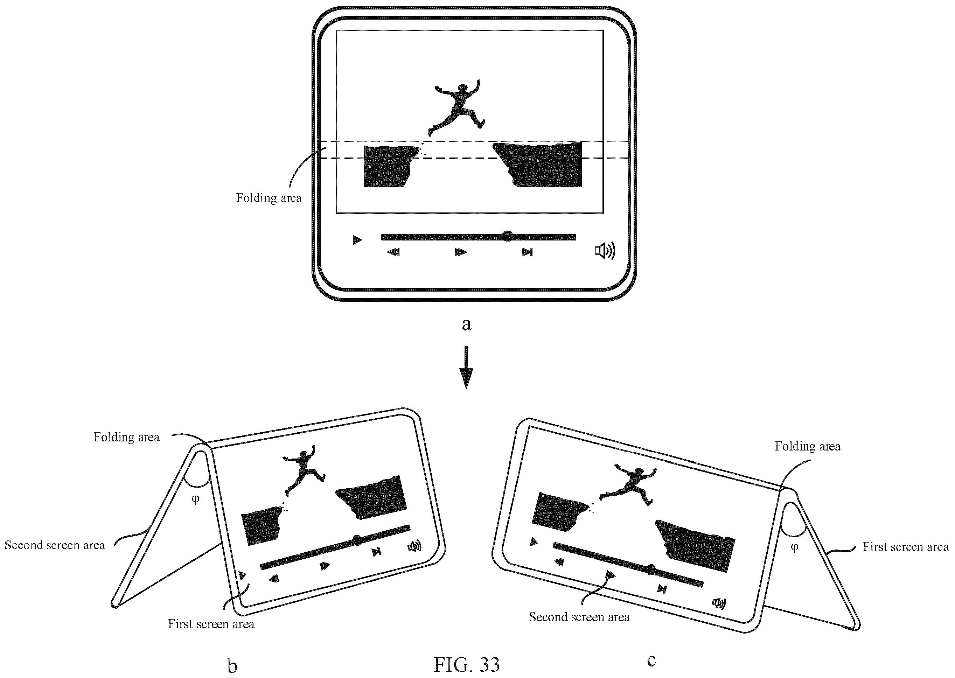

FIG. 33 is a diagram of an example of interfaces displayed by a foldable mobile phone in a sharing mode according to an embodiment of this application. a in FIG. 33 is a diagram of a mobile phone being flattened, and a video application is displayed on a display of the mobile phone. A sensor in the mobile phone detects a folding angle and a placement manner of a screen. A folding angle φ (that is, an inward folding angle of a rear surface of the screen is φ) is formed after the mobile phone in the flattened state shown in a in FIG. 33 is folded in an outward folding manner around a hinge in a folding area. A state after folding is shown in b and c in FIG. 33. The mobile phone in the folded state shown in b or c in FIG. 33 is placed on a desktop (that is, the hinge in the folding area is parallel to the desktop). If the sensor (for example, an angle sensor or a folding sensor) in the mobile phone detects that the inward folding angle φ of the rear surface of the screen is greater than zero or greater than a preset threshold, the mobile phone may automatically enter the sharing mode. Optionally, a time length in which φ is greater than zero or greater than the preset threshold is greater than or equal to a preset time length (for example, 1s). A screen management module in the mobile phone may divide the screen into a first screen area and a second screen area around the folding area. The sensor (for example, a gravity sensor) in the mobile phone may determine a current folding manner (outward folding manner), placement manner, and the like of the mobile phone, so as to determine to display, in the first screen area in landscape mode or portrait mode based on the placement manner, an application displayed on the screen. For example, the current placement manner of the mobile phone is shown in b and c in FIG. 33. In this case, it may be determined that a video application displayed on the screen is displayed in the first screen area in landscape mode, and various operations performed by a user on the screen are processed in the first screen area.

As shown in b in FIG. 33, an interface (the video application) displayed in the first screen area is the same as the interface displayed by the mobile phone in the flattened state shown in a in FIG. 33. When the second screen area displays an interface, the interface displayed in the first screen area is copied to the second screen area for display. In addition, the mobile phone may determine, based on the current placement manner, a direction of the interface displayed in the second screen area, for example, the placement manner shown in b and c in FIG. 33 (the hinge in the folding area is parallel to the desktop, and the inward folding angle φ of the rear surface of the screen is greater than zero degrees and less than 180 degrees). Optionally, a time length in which φ is greater than zero or greater than a preset threshold further needs to be greater than or equal to a preset time length (for example, 1s). The video application is separately displayed in the first screen area and the second screen area. In addition, a direction of the video application displayed in the first screen area is opposite to a direction of the video application displayed in the second screen area. In this way, two users can perform viewing in different directions. For example, one user faces the first screen area, and the other user faces the second screen area.

In a possible implementation, both a user facing the first screen area and a user facing the second screen area may operate the application on the screen, and display content of the two screen areas is synchronized. For example, after the user facing the first screen area performs an operation (for example, tap, touch, or slide) on the video application in the first screen area, the video application in the first screen area changes a display interface in response to the operation of the user, and after the interface displayed in the first screen area changes, the interface displayed in the second screen area also changes accordingly, that is, keeps synchronous with a state displayed in the first screen area (the same interface is displayed). After the user facing the second screen area performs an operation (for example, tap, touch, or slide) on the video application in the second screen area, the operation of the user may be transferred to the first screen area by using a mapping relationship between the second screen area and the first screen area, the video application in the first screen area changes a display interface in response to the operation of the user, and after the interface displayed in the first screen area changes, the interface displayed in the second screen area also changes accordingly, that is, keeps synchronous with a state displayed in the first screen area. In other words, when a main control right of the screen is in the first screen area (that is, the screen area facing the main user), the first screen area may process an operation performed by the user on the second screen area.

In another possible implementation, only a screen area (for example, the first screen area) facing the main user can respond to a user operation, and the video application cannot be operated on a shared screen (for example, the second screen area). After the main user performs an operation on the first screen area, to change the interface displayed in the first screen area, the interface displayed in the second screen area also changes accordingly.

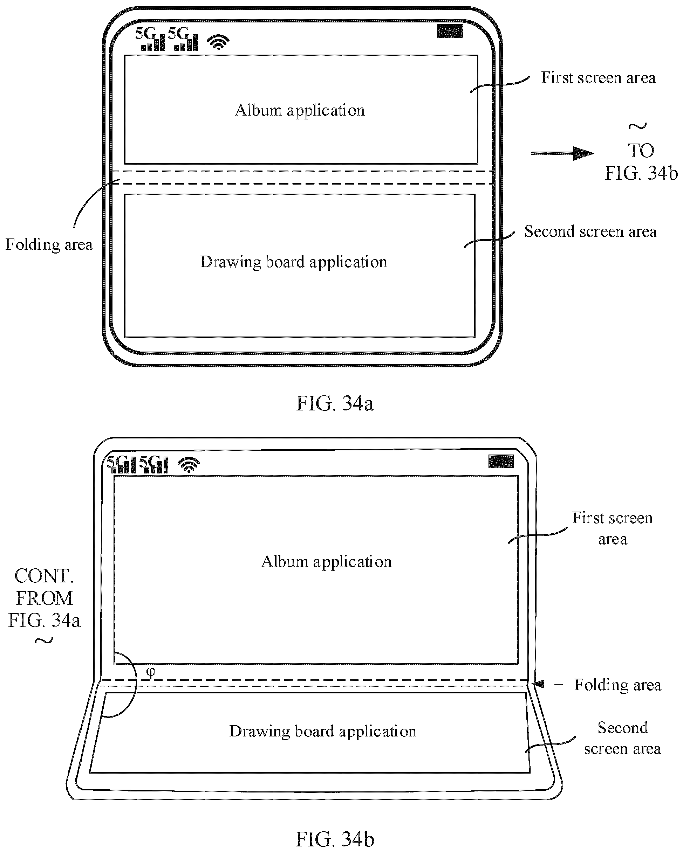

FIG. 34a and FIG. 34b are a diagram of an example of interfaces displayed by a foldable mobile phone in an efficiency mode according to an embodiment of this application. FIG. 34a is a diagram of the mobile phone being flattened. An album application and a drawing board application are displayed in a display interface of the mobile phone, and the two applications are displayed in different positions of a folding area. That is, the two applications are displayed on two sides of the folding area respectively. A sensor (for example, an angle sensor) in the mobile phone detects a folding angle and a placement manner of a screen. After a user folds the mobile phone around a hinge in the folding area in an inward folding manner, a folding angle φ (that is, an inward folding angle of a front surface of the screen is φ) is formed, for example, the mobile phone is in a folded state shown in FIG. 34b. The mobile phone in the folded state shown in FIG. 34b is placed on a desktop (that is, the hinge in the folding area is parallel to the desktop). The sensor (for example, an angle sensor or a folding sensor) in the mobile phone detects that the inward folding angle φ of the screen is greater than zero or greater than a preset threshold, and the mobile phone may automatically enter the efficiency mode. Optionally, that the mobile phone automatically enters the efficiency mode further needs to meet the following condition: A time length in which φ is greater than zero or greater than the preset threshold is greater than or equal to a preset time length (for example, 1s). A screen management module in the mobile phone may divide the screen into a first screen area and a second screen area around the folding area. The sensor (for example, a gravity sensor, an angle sensor, or a folding sensor) in the mobile phone may determine a current folding manner and placement manner of the mobile phone, so as to determine to respectively display, in the first screen area and the second screen area in landscape mode or portrait mode based on the placement manner, the album application and the drawing board application displayed on the screen. For example, the current placement manner of the mobile phone is shown in FIG. 34b, and the user faces the first screen area and the second screen area. In this case, it may be determined that the album application and the drawing board application that are displayed on the screen are respectively displayed in the first screen area and the second screen area in landscape mode. In addition, a direction of the album application displayed in the first screen area is the same as a direction of the drawing board application displayed in the second screen area, so that the user can simultaneously use different applications.

An operation performed by the user on the album application on the first screen and an operation performed by the user on the drawing board application on the second screen do not affect each other. That is, the first screen area may process the operation performed by the user on the first screen area, and the second screen area may process the operation performed by the user on the second screen area.

Optionally, the user folds the mobile phone around the hinge in the folding area in an outward folding manner to form a folding angle φ (that is, an inward folding angle of the rear surface of the screen is φ), and then places the folded mobile phone on the desktop. For example, a folding manner and a placement manner are shown in FIG. 18c or FIG. 18d. In this case, if one user (a first user) faces the first screen area, and another user (a second user) faces the second screen area, an operation performed by the first user on an application (for example, the album application) on the first screen and an operation performed by the second user on an application (for example, the drawing board application) on the second screen do not affect each other. That is, the first screen area may process the operation performed by the first user on the first screen area, and the second screen area may process the operation performed by the second user on the second screen area.

Optionally, the user may further replace, by using a simple operation, an application in any display area with another application that is running in the background. In addition, after an application in any display area is closed or exited by the user, the display area may display a list of recommended applications associated with application closed or exited by the user (or may display a list of applications running in the background of the mobile phone). For a specific process, refer to descriptions corresponding to FIG. 22a to FIG. 22c to FIG. 24a and FIG. 24b. For brevity, details are not described herein again.

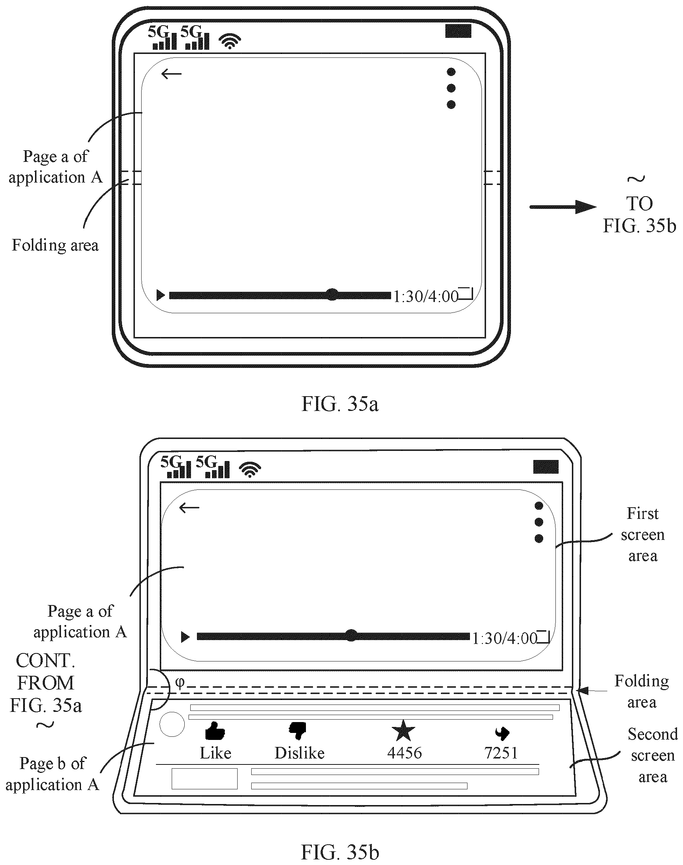

FIG. 35a and FIG. 35b are a diagram of an example of interfaces displayed by a foldable mobile phone in an immersive mode according to an embodiment of this application. FIG. 35a is a diagram of the mobile phone being flattened. A user currently runs only application A in the foreground, and page a of application A is displayed in an entire display interface. A sensor (for example, an angle sensor) in the mobile phone detects a folding angle and a placement manner of a screen. After a user folds the mobile phone around a hinge in the folding area in an inward folding manner, a folding angle φ (that is, an inward folding angle of a front surface of the screen is φ) is formed, for example, the mobile phone is in a folded state shown in FIG. 35b. The mobile phone in the folded state shown in FIG. 35b is placed on a desktop (that is, the hinge in the folding area is parallel to the desktop). The sensor (for example, an angle sensor or a folding sensor) in the mobile phone detects that the inward folding angle φ of the screen is greater than zero or greater than a preset threshold, and the mobile phone may automatically enter the immersive mode. Optionally, that the mobile phone automatically enters the immersive mode further needs to meet the following condition: A time length in which φ is greater than zero or greater than the preset threshold is greater than or equal to a preset time length (for example, 1s). A screen management module in the mobile phone may divide the screen into a first screen area and a second screen area around the folding area. The sensor (for example, a gravity sensor) in the mobile phone may determine a current placement manner of the mobile phone, so as to determine to display, in the first screen area, page a of application A displayed on the screen.

As shown in FIG. 35b, when the user taps a control in the first screen area to open a new page (for example, page b of application A), page b of application A is displayed in the second screen area. In addition, a display direction in the first screen area is the same as a display direction in the second screen area, so that the user immersively uses a same application.

An operation performed by the user on page a of application A on the first screen and an operation performed by the user on page a of application A on the second screen do not affect each other. That is, the first screen area may process the operation performed by the user on the first screen area, and the second screen area may process the operation performed by the user on the second screen area.

According to the display and control method for a foldable electronic device provided in this application, the foldable electronic device may determine the folding manner and the placement manner of the foldable electronic device based on data detected by a sensor (for example, an angle sensor, a gravity sensor, a folding sensor, or a gyroscope), so as to adjust display content and a display direction of each screen area based on the folding manner and the placement manner of the foldable electronic device, so that requirements of a plurality of users for simultaneously using and controlling the foldable electronic device are met, user operations are simplified, and user experience is improved.

It should be understood that, in embodiments of this application, the foregoing examples, the interfaces displayed by the foldable mobile phone, the operations of the user, and the like are merely examples, and do not constitute a specific limitation on embodiments of this application. For example, in some other embodiments of this application, the icons displayed in the interfaces of the foldable mobile phones provided above may include more or fewer icons than those displayed in the interfaces shown in any one of the foregoing figures, or some icons may be combined, or some icons may be split, or there may be different icons. This is not limited in embodiments of this application.

Based on the foregoing application scenarios and the foregoing examples, the following describes a display and control method for a foldable electronic device provided in this application.

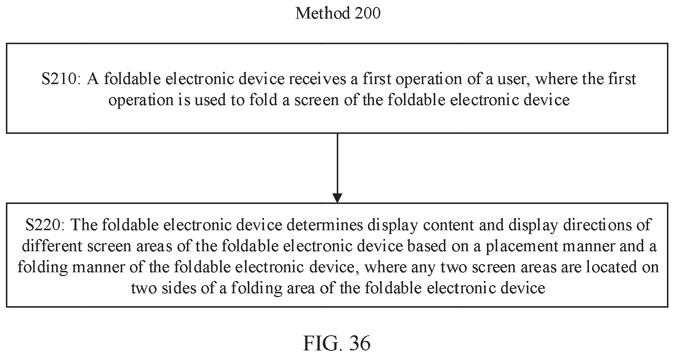

FIG. 36 is a schematic flowchart of a display and control method for a foldable electronic device according to an embodiment of this application. As shown in FIG. 36, the method 200 includes the following steps.

S210: A foldable electronic device receives a first operation of a user, where the first operation is used to fold a screen of the foldable electronic device.

S220: The foldable electronic device determines display content and display directions of different screen areas of the foldable electronic device based on a placement manner and a folding manner of the foldable electronic device, where any two screen areas are located on two sides of a folding area of the foldable electronic device.

According to the display and control method for a foldable electronic device provided in this application, a plurality of users can use a same application or different applications on a same foldable electronic device, requirements of the plurality of users for simultaneously using and controlling the foldable electronic device are met, user operations are simplified, and user experience is improved.

In some example embodiments, the foldable electronic device includes a first screen area and a second screen area, a manner of folding the first screen area and the second screen area around a hinge in a folding area is an outward folding manner, the hinge in the folding area is perpendicular to a placement plane, and the first screen area and the second screen area display a same interface and have a same display direction. For example, refer to specific descriptions corresponding to FIG. 12a to FIG. 12c. For brevity, details are not described herein again. In this implementation, two or more users can simultaneously view a same page (interface) from different angles (directions), thereby simplifying user operations and improving user experience.

In some example embodiments, the foldable electronic device includes a first screen area and a second screen area, a manner of folding the first screen area and the second screen area around a hinge in a folding area is an outward folding manner, the hinge in the folding area is parallel to a placement plane, and the first screen area and the second screen area display a same interface and have opposite display directions. For example, refer to specific descriptions corresponding to FIG. 13a to FIG. 13d and FIG. 14a to FIG. 14f. For brevity, details are not described herein again. In this implementation, two or more users can simultaneously view a same page (interface) from different angles (directions), thereby improving user experience.

In some example embodiments, the foldable electronic device further includes a third screen area, a manner of folding the second screen area and the third screen area around a hinge in a folding area is an outward folding manner, and the third screen area and the second screen area display a same interface and have a same display direction. For example, refer to specific descriptions corresponding to FIG. 15a and FIG. 15b. For brevity, details are not described herein again. In this implementation, two or more users can simultaneously view a same page (interface) from different angles (directions), thereby improving user experience.

In some example embodiments, in a process in which a first application is displayed in the first screen area, when a first message is displayed in the first screen area, the first message is not displayed in the second screen area or the third screen area. For example, refer to specific descriptions corresponding to FIG. 30 or FIG. 31a and FIG. 31b. For brevity, details are not described herein again. In this implementation, privacy of a main user can be better protected.

In some example embodiments, the first message includes at least one of a system notification message, an application layer input notification message, a floating window, and a floating bubble.

In some example embodiments, the foldable electronic device includes a first screen area, a second screen area, and a third screen area, a manner of folding the first screen area and the second screen area around a hinge in a folding area is an inward folding manner, a manner of folding the second screen area and the third screen area around a hinge in a folding area is an outward folding manner, the hinge in the folding area is parallel to a placement plane, the first screen area and the second screen area display a same application or different applications and have a same display direction, and the third screen area and the second screen area display a same interface and have opposite display directions. For example, refer to specific descriptions corresponding to FIG. 16a to FIG. 16c. For brevity, details are not described herein again. In this implementation, a plurality of users can simultaneously view a same page (interface) from different angles (directions), thereby improving user experience.

In some example embodiments, in a process in which a first application is displayed in the first screen area or the second screen area, when a first message is displayed in the first screen area or the second screen area, the first message is not displayed in the third screen area. For example, refer to specific descriptions corresponding to FIG. 30 or FIG. 31a and FIG. 31b. For brevity, details are not described herein again. In this implementation, privacy of a main user can be better protected, and user experience can be improved.

In some example embodiments, the foldable electronic device includes a first screen area and a second screen area, a manner of folding the first screen area and the second screen area around a hinge in a folding area is an outward folding manner, the hinge in the folding area is perpendicular to a placement plane, and the first screen area and the second screen area separately display interfaces of different applications and have a same display direction. For example, refer to specific descriptions corresponding to FIG. 17c. For brevity, details are not described herein again. In this implementation, a plurality of users can simultaneously use different applications, thereby improving user experience.

In some example embodiments, the foldable electronic device includes a first screen area and a second screen area, a manner of folding the first screen area and the second screen area around a hinge in a folding area is an outward folding manner, the hinge in the folding area is parallel to a placement plane, and the first screen area and the second screen area separately display interfaces of different applications and have opposite display directions. For example, refer to specific descriptions corresponding to FIG. 17d and FIG. 18a to FIG. 18d. For brevity, details are not described herein again. In this implementation, a plurality of users can simultaneously use different applications, thereby improving user experience.

In some example embodiments, the foldable electronic device includes a first screen area, a second screen area, and a third screen area, a manner of folding the first screen area and the second screen area around a hinge in a folding area is an inward folding manner, a manner of folding the second screen area and the third screen area around a hinge in a folding area is an outward folding manner, the hinge in the folding area is parallel to a placement plane, the first screen area and the second screen area display a same application or different applications and have a same display direction, and the third screen area and the second screen area separately display interfaces of different applications and have opposite display directions. For example, refer to specific descriptions corresponding to FIG. 19. For brevity, details are not described herein again. In this implementation, a plurality of users can simultaneously use different applications, thereby improving user experience.

In some example embodiments, the foldable electronic device includes a first screen area and a second screen area, a manner of folding the first screen area and the second screen area around a hinge in a folding area is an inward folding manner, the hinge in the folding area is parallel to a placement plane, and the first screen area and the second screen area separately display interfaces of different applications and have a same display direction. For example, refer to specific descriptions corresponding to FIG. 21a to FIG. 21c. For brevity, details are not described herein again. In this implementation, one user can simultaneously use different applications, thereby improving user experience.

In some example embodiments, the method further includes: The foldable electronic device receives a second operation performed by the user on the first screen area or the second screen area; and in response to the second operation, display, in the first screen area or the second screen area, another application running in a background of the foldable electronic device, or another application associated with an application displayed in the first screen area or the second screen area. For example, refer to specific descriptions corresponding to FIG. 22a to FIG. 22c to FIG. 24a and FIG. 24b. For brevity, details are not described herein again. In this implementation, a currently used application can be quickly switched, and an operation is simple and easy to implement, thereby improving user experience.

In some example embodiments, the foldable electronic device includes a first screen area and a second screen area, a manner of folding the first screen area and the second screen area around a hinge in a folding area is an inward folding manner, the hinge in the folding area is parallel to a placement plane, and the first screen area and the second screen area display different interfaces of a same application and have a same display direction. For example, refer to specific descriptions corresponding to FIG. 25. For brevity, details are not described herein again. In this implementation, one user can simultaneously view or use different interfaces of a same application, thereby improving user experience.

In some example embodiments, the foldable electronic device includes a first screen area and a second screen area, a manner of folding the first screen area and the second screen area around a hinge in a folding area is an outward folding manner, the hinge in the folding area is parallel to a placement plane, the first screen area displays a first interface, and the second screen area is screen-off. For example, refer to specific descriptions corresponding to FIG. 26 and FIG. 27a to FIG. 27c. For brevity, details are not described herein again. In this implementation, one user can immersively use one application, thereby improving user experience, and saving power of the foldable electronic device.

In some example embodiments, the method further includes: after the foldable electronic device is restored to a flattened state, separately displaying interfaces of different applications or displaying different interfaces of a same application in the first screen area and the first screen area. For example, refer to specific descriptions corresponding to FIG. 26 and FIG. 27a to FIG. 27c. For brevity, details are not described herein again. In this implementation, after the foldable electronic device is restored to the flattened state, one user can simultaneously view or use different applications, and an operation is simple and easy to implement, thereby improving user experience.

In some example embodiments, the foldable electronic device includes a first screen area, a second screen area, and a third screen area, a manner of folding the first screen area and the second screen area around a hinge in a folding area is an inward folding manner, a manner of folding the second screen area and the third screen area around a hinge in a folding area is an outward folding manner, the hinge in the folding area is parallel to a placement plane, the first screen area and the second screen area separately display different interfaces of a same application or the first screen area and the second screen area separately display interfaces of different applications and have a same display direction, and the third screen area is screen-off. For example, refer to specific descriptions corresponding to FIG. 28a and FIG. 28b and FIG. 29a and FIG. 29b. For brevity, details are not described herein again. In this implementation, one user can simultaneously use a same application or different applications, and an operation is simple and easy to implement, thereby improving user experience, and saving power of the foldable electronic device.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing procedures (method embodiments) may be unnecessary, or some new steps may be added. Alternatively, any two or more of the foregoing embodiments are combined. A modified, changed, or combined solution also falls within the scope of embodiments of this application.

It should be further understood that division into manners, cases, categories, and embodiments in embodiments of this application is merely intended for ease of description, and should not constitute a particular limitation. Features in the manners, categories, cases, and embodiments may be combined without contradiction.

It should be further understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes, and should not constitute any limitation on an implementation process of embodiments of this application.

It should be further understood that the foregoing descriptions of embodiments of this application emphasize differences between the embodiments. For same or similar parts that are not mentioned, mutual reference may be made. For brevity, details are not described herein again.

In the embodiments, functional module division may be performed on a foldable electronic device according to the foregoing method embodiments. For example, functional modules corresponding to functions may be obtained through division, or two or more functions may be integrated into one processing module. The integrated module may be implemented in a form of hardware. It should be noted that division into the modules in the embodiments is an example, and is merely logical function division. In actual implementation, there may be another division manner.

It should be noted that related content of each step in the foregoing method embodiments may be cited to a function description of a corresponding functional module, and details are not described herein again.

The foldable electronic device provided in embodiments of this application is configured to perform the display and control method for a foldable electronic device provided in any one of the foregoing embodiments, and therefore can achieve a same effect as the foregoing implementation method. When an integrated unit is used, the foldable electronic device may include a processing module, a storage module, and a communication module. The processing module may be configured to control and manage an action of the foldable electronic device, for example, may be configured to support the foldable electronic device in performing a step performed by a processing unit. The storage module may be configured to support storage of program code, data, and the like. The communication module may be configured to support communication between the foldable electronic device and another device.

The processing module may be a processor or a controller. The processing module may implement or execute logical blocks, modules, and circuits in various examples described with reference to content disclosed in this application. Alternatively, the processor may be a combination of processors implementing a computing function, for example, a combination of one or more microprocessors, or a combination of digital signal processing (digital signal processing, DSP) and a microprocessor. The storage module may be a memory. The communication module may be specifically a device, for example, a radio frequency circuit, a Bluetooth chip, or a Wi-Fi chip, that interacts with another terminal device.

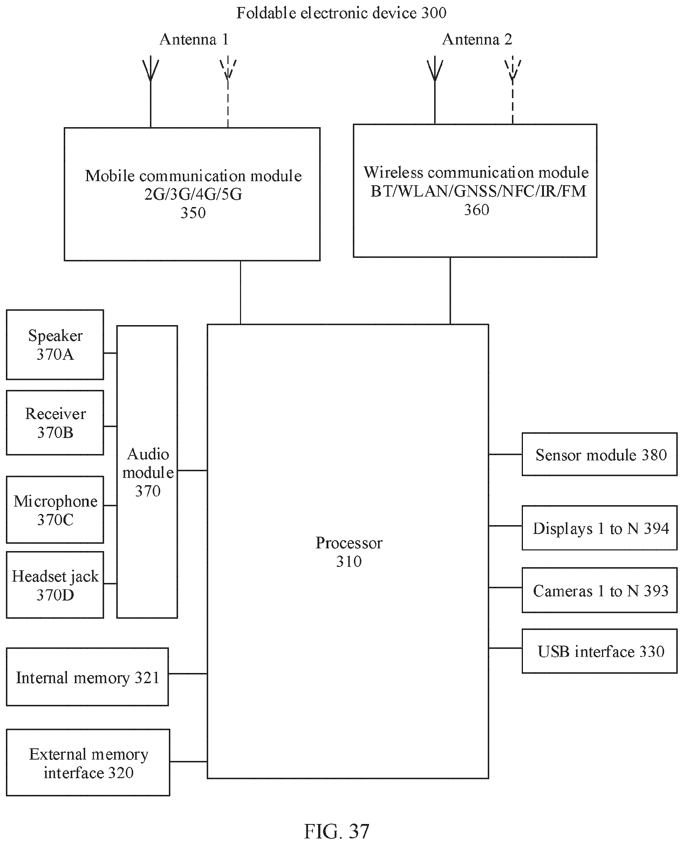

FIG. 37 is a diagram of a structure of a foldable electronic device 300 according to this application. The foldable electronic device may be any foldable electronic device (for example, a foldable mobile phone or a foldable tablet computer) in the foregoing embodiments. As shown in FIG. 37, the foldable electronic device 300 may include a processor 310, an external memory interface 320, an internal memory 321, a universal serial bus (universal serial bus, USB) interface 330, an antenna 1, an antenna 2, a mobile communication module 350, a wireless communication module 360, an audio module 370, a speaker 370A, a receiver 370B, a microphone 370C, a headset jack 370D, a sensor module 380, and the like. The foldable electronic device 300 is configured to perform a step performed by any foldable electronic device in the foregoing task examples or any displayed interface.

It may be understood that the structure shown in this embodiment of this application does not constitute a specific limitation on the foldable electronic device 300. In some other embodiments of this application, the foldable electronic device 300 may include more or fewer components than those shown in the figure, or combine some components, or split some components, or have different component arrangements. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 310, to store instructions and data. In some embodiments, the memory in the processor 310 is a cache. The memory may store instructions or data just used or cyclically used by the processor 310. If the processor 310 needs to use the instructions or data again, the instructions or data may be directly invoked from the memory. This avoids repeated access, and reduces waiting time of the processor 310, so that system efficiency is improved. For example, the processor may determine a quantity of applications currently running in the foreground of the electronic device.

A wireless communication function of the foldable electronic device 300 may be implemented by using the antenna 1, the antenna 2, the mobile communication module 350, the wireless communication module 360, the modem processor, the baseband processor, and the like.

The antenna 1 and the antenna 2 are configured to transmit and receive electromagnetic wave signals. Each antenna in the foldable electronic device 300 may be configured to cover one or more communication bands. Different antennas may be multiplexed to improve antenna utilization. For example, the antenna 1 may be multiplexed into a diversity antenna of a wireless local area network. In some other embodiments, the antenna may be used in combination with a tuning switch.

The mobile communication module 350 may provide a solution for wireless communication, including 2G/3G/4G/5G and the like, that is applied to the foldable electronic device 300. The mobile communication module 350 may include at least one filter, a switch, a power amplifier, a low noise amplifier (low noise amplifier, LNA), and the like. The mobile communication module 350 may receive an electromagnetic wave by using the antenna 1, perform processing such as filtering and amplification on the received electromagnetic wave, and send a processed electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules of the mobile communication module 350 may be disposed in the processor 310. In some embodiments, at least some functional modules of the mobile communication module 350 may be disposed in a same component as at least some modules of the processor 310.

The wireless communication module 360 may provide a solution for wireless communication that is applied to the foldable electronic device 300 and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 360 may be one or more components that integrate at least one communication processing module. The wireless communication module 360 receives an electromagnetic wave through the antenna 2, performs frequency modulation and filtering on an electromagnetic wave signal, and sends a processed signal to the processor 310. The wireless communication module 360 may further receive a to-be-sent signal from the processor 310, perform frequency modulation and amplification on the to-be-sent signal, and convert the to-be-sent signal into an electromagnetic wave for radiation through the antenna 2.

In some embodiments, in the foldable electronic device 300, the antenna 1 is coupled to the mobile communication module 350, and the antenna 2 is coupled to the wireless communication module 360, so that the foldable electronic device 300 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), LTE, BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The foldable electronic device 300 implements a display function by using the GPU, the display 394, the application processor, and the like. The GPU is a microprocessor for image processing, and is connected to the display 394 and the application processor. The GPU is configured to perform mathematical and geometric calculation and render graphics. The processor 310 may include one or more GPUs that execute program instructions to generate or change display information.

The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the foldable electronic device 300 may include one or N displays 394, where N is a positive integer greater than 1.

In some embodiments of this application, when the display panel uses a material such as an OLED, an AMOLED, or an FLED, the display 394 in FIG. 37 can be bent. Herein, that the display 394 can be bent means that the display can be bent to any angle at any part, and can maintain the folding angle. For example, the display 394 can be folded left and right from the middle, or can be folded up and down from the middle. In this embodiment of this application, the display that can be bent is referred to as a foldable display. The foldable display may be one screen, or may be a display formed by combining a plurality of screens. This is not limited herein.

For example, the foldable display may include at least two physical forms: an unfolded form and a folded form. As shown in FIG. 1b, the foldable display is in an unfolded form, that is, an included angle φ between left and right ends of a middle folding area of the foldable display that can be folded left and right from the middle (or upper and lower ends of a middle bending part of the foldable display, provided that the foldable display is folded up and down) is 180 degrees (that is, in a flattened state). As shown in FIG. 1c, the foldable display is in an unfolded form, that is, an included angle φ between left and right ends of the foldable display that can be folded left and right from a folding area of the foldable display is between 180 degrees and a first angle, where the first angle is greater than 0 degrees and less than 180 degrees. For example, the first angle may be 90 degrees.

In embodiments of this application, the foldable display may be a one-fold display (that is, have only one folding area), or may be a multi-fold display (have two or more folding areas). In addition, a folding manner may be an inward folding manner or an outward folding manner, or a combination of an inward folding manner and an outward folding manner.

In some embodiments, the foldable electronic device 300 may determine, by using one or more of a gravity sensor, an acceleration sensor, and a gyroscope, whether the foldable display is in a folded form or an unfolded form, and may further determine whether the foldable display is in a portrait mode or a landscape mode. The foldable electronic device 300 may further detect an included angle φ of bending of the foldable display by using an angle sensor, and determine, by using a folding sensor, whether a folding manner of the foldable electronic device is inward folding (folding in directions in which two screen areas face each other) or outward folding (folding in directions in which two screen areas face away from each other). Then, the foldable electronic device 300 may determine, based on the included angle of bending, whether the foldable display is in a folded form or an unfolded form. The foldable electronic device 300 may further determine an orientation of the foldable display in the folded form by using one or more of the gravity sensor, the acceleration sensor, and the gyroscope, and then determine a display area of interface content output by a display system. For example, when a first screen area of the foldable display faces upward relative to the ground, the foldable electronic device 300 may display, in the first screen area, the interface content output by the display system.

In some embodiments, for the foldable electronic device 300, the angle sensor may be disposed in a folding area of the foldable display. The foldable electronic device 300 may measure an included angle between two ends of a middle bending part of the foldable display by using the angle sensor disposed in the folding area of the foldable display. When the included angle is greater than or equal to a preset angle, the folding area may recognize, by using the angle sensor, that the foldable display enters an unfolded state. When the included angle is less than or equal to the preset angle, the folding area may recognize, by using the angle sensor, that the foldable display enters a folded form.

In some other embodiments, the folding area may alternatively recognize, by using a physical switch disposed in the folding area of the foldable display, whether the foldable display is in a folded form. For example, when the foldable electronic device 300 receives a folding operation performed by a user on the foldable display, the physical switch disposed on the electronic device is triggered to be turned on, and the foldable electronic device 300 may determine that the foldable display is in a folded form. When the foldable electronic device 300 receives an unfolding operation performed by a user on the foldable display, the physical switch disposed on the electronic device is triggered to be turned off, and the foldable electronic device 300 may determine that the foldable display is in an unfolded form. The foregoing example is merely used to explain this application, and should not constitute a limitation.

The foldable electronic device 300 may implement a photographing function by using the ISP, the camera 393, the video codec, the GPU, the display 394, the application processor, and the like.

The ISP is configured to process data fed back by the camera 393. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 393.

The camera 393 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the foldable electronic device 300 may include one or N cameras 393, where N is a positive integer greater than 1.

The digital signal processor is configured to process a digital signal. In addition to processing a digital image signal, the digital signal processor may further process another digital signal. For example, when the foldable electronic device 300 selects a frequency, the digital signal processor is configured to perform Fourier transform or the like on frequency energy.

The video codec is configured to compress or decompress a digital video. The foldable electronic device 300 may support one or more types of video codecs. In this way, the foldable electronic device 300 may play or record videos in a plurality of coding formats, for example, moving picture experts group (moving picture experts group, MPEG)-1, MPEG-2, MPEG-3, and MPEG-4.

The external memory interface 320 may be configured to connect to an external memory card, such as a micro SD card, to extend a storage capability of the foldable electronic device 300. The external memory card communicates with the processor 310 through the external memory interface 320, to implement a data storage function. For example, files such as music or videos are stored in the external memory card.

The internal memory 321 may be configured to store computer executable program code, where the executable program code includes instructions. The processor 310 performs various function applications and data processing of the foldable electronic device 300 by running the instructions stored in the internal memory 321. The internal memory 321 may include a program storage area and a data storage area. The program storage area may store an operating system, an application program required by at least one function (for example, a sound play function or an image play function), and the like. The data storage area may store data (such as audio data or a phone book) created in a use process of the foldable electronic device 300. In addition, the internal memory 321 may include a high-speed random access memory, and may further include a non-volatile memory, such as at least one magnetic disk storage component, a flash memory component, and a universal flash storage (universal flash storage, UFS).

The foldable electronic device 300 may implement an audio function, such as music playing and recording, by using the audio module 370, the speaker 370A, the receiver 370B, the microphone 370C, the headset jack 370D, the application processor, and the like.

The audio module 370 is configured to convert digital audio information into an analog audio signal for output, and is also configured to convert analog audio input into a digital audio signal. The audio module 370 may be further configured to encode and decode audio signals. In some embodiments, the audio module 370 may be disposed in the processor 310, or some functional modules of the audio module 370 may be disposed in the processor 310.

The speaker 370A, also referred to as a "loudspeaker", is configured to convert an audio electrical signal into a sound signal. The foldable electronic device 300 may be used to listen to music or answer a call in a hands-free mode over the speaker 370A.

The receiver 370B, also referred to as an "earpiece", is configured to convert an audio electrical signal into a sound signal. When a call is answered or a voice message is listened to by using the foldable electronic device 300, the receiver 370B may be put close to a human ear to listen to a voice.

The microphone 370C, also referred to as a "mike" or a "mic", is configured to convert a sound signal into an electrical signal. When making a call or sending a voice message, the user may make a sound near the microphone 370C through the mouth, to enter a sound signal to the microphone 370C. At least one microphone 370C may be disposed on the foldable electronic device 300. In some other embodiments, two microphones 370C may be disposed on the foldable electronic device 300. In addition to sound signal collection, a noise reduction function may be further implemented. In some other embodiments, three, four, or more microphones 370C may be alternatively disposed on the foldable electronic device 300, to collect a sound signal, implement noise reduction, recognize a sound source, implement a directional recording function, and the like.

The headset jack 370D is configured to connect to a wired headset. The headset jack 370D may be the USB interface 330, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor module 380 may include a pressure sensor, a gyroscope sensor, an angle sensor, a folding sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, and the like.

Certainly, the foldable electronic device 300 may further include a charging management module, a power management module, a battery, a button, an indicator, one or more SIM card interfaces, and the like. This is not limited in embodiments of this application.

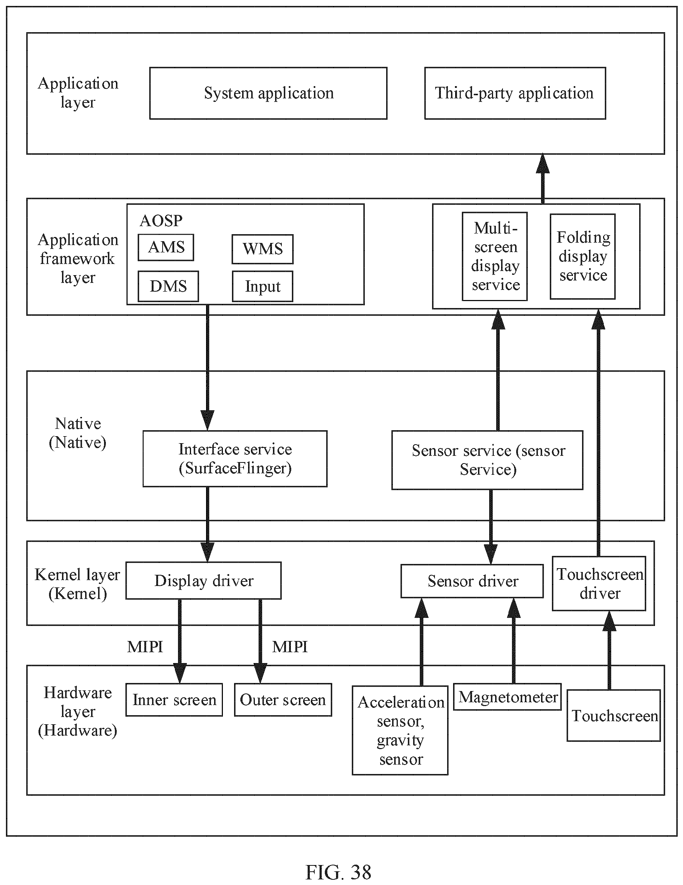

FIG. 38 is a block diagram of a software structure of a foldable electronic device according to an embodiment of this application.

In a layered architecture, software is divided into several layers, and each layer has a clear role and task. The layers communicate with each other through a software interface. In some embodiments, an Android system is divided into five layers, which are respectively an application layer, an application framework layer, a native (Native) layer, a kernel layer, and a hardware (Hardware) layer from top to bottom.

The application layer may include a series of application packages.

As shown in FIG. 38, applications include a system application and a third-party application. For example, the applications may include applications such as Camera, Gallery, Calendar, Phone, Map, Navigation, WLAN, Bluetooth, Music, Video, Game, Shopping, Travel, and Instant messaging (such as Messages). In addition, the application packages may further include system applications such as a home screen (namely, a desktop), a leftmost screen, a control center, and a notification center. In embodiments of this application, the application packages may further include a super favorites application, and the super favorites application may be a system application. The application packages may further include an application of a task flow manager, and the application is configured to invoke and manage the task flow manager.

The application framework layer provides an application programming interface (application programming interface, API) and a programming framework for applications at the application layer. The application framework layer includes some predefined functions. For example, in FIG. 38, an Android open source project (android open source project, AOSP) is used as an example. Upper-layer applications are some applications that use a FRAMEWORK interface and that can be in direct contact with a user. The applications run on the foldable electronic device and are windows for interaction between the user and the foldable electronic device.

For example, the AOSP may include an activity manager service (Activity Manager Service, AMS) module, a display manager service (display Manager Service, DMS) module, a window manager service (Window Manager Service, WMS), an input manager module (Input), and the like.

The AMS module is configured to manage activities that are running in the system, including a process (process), an application, a service (service), task (task) information, and the like.

The input manager module may provide an input manager service (Input Manager Service, IMS), and the IMS may be used to manage system input, for example, touchscreen input, button input, and sensor input. The IMS obtains an event from an input device node, and assigns the event to an appropriate window through interaction with the WMS.

The DMS module is one of system services that are responsible for screen display (Display) management. Some other functions including screen brightness adjustment are also related to the DMS.

The WMS module is configured to manage a window program. The window manager may obtain a display size, determine whether there is a status bar, lock a screen, take a screenshot, and the like.

As shown in FIG. 38, the application framework layer may further include a multi-screen display service, a folding display service, and the like. The multi-screen display service is used to provide a user with display interfaces of a plurality of different screen areas of the foldable electronic device, that is, control display rules of the plurality of different screen areas. The folding display service is used to provide different display manners and display interfaces of the foldable electronic device in a folded state and an unfolded state, that is, control display rules of a plurality of different screen areas of the foldable electronic device in a screen folding process.

The native layer includes an interface service (SurfaceFlinger), a sensor service (sensor Service), and the like. Each application may correspond to one or more graphical interfaces, and each interface is referred to as one surface. In Android implementation, SurfaceFlinge is a service, provides an interface composition (surface composer) function within a system range, and can combine 2D and 3D surfaces of various applications.

The sensor service may provide processing of data of a plurality of different sensors on the foldable electronic device.

The kernel layer is a layer between hardware and software. The kernel layer includes at least a display driver, a sensor driver, a touchscreen driver, and the like. For example, the kernel layer may further include a camera driver, an audio driver, a touch chip driver, an input (input) system, and the like.

The hardware layer is an interface layer between an operating system software component and an operating system hardware component, and provides an interface for interaction between upper-layer software and lower-layer hardware. For example, the lower-layer hardware may include an inner screen, an outer screen, an acceleration sensor (accelerometer sensor, A), a gyroscope sensor (gyroscope sensor, G), a gravity sensor, a magnetometer, a touchscreen sensor, a distance sensor, an angle sensor, and the like.

The display driver interacts with the inner screen and the outer screen through a mobile industry processor interface (mobile industry processor interface, MIPI).

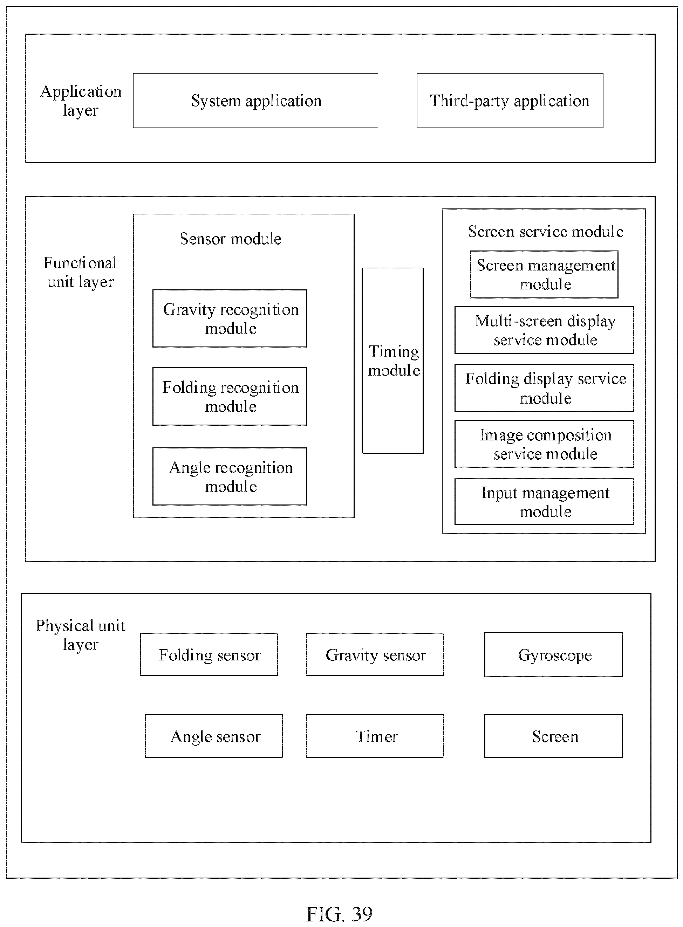

FIG. 39 is a block diagram of a structure of software and hardware of a foldable electronic device according to an embodiment of this application.

As shown in FIG. 39, the foldable electronic device includes an application layer, a functional unit layer, and a physical unit layer. The application layer and the functional unit layer are software structures, and the physical unit layer is a hardware layer.

As shown in FIG. 39, applications include a system application and a third-party application. For example, the applications may include applications such as Camera, Gallery, Calendar, Phone, Map, Navigation, WLAN, Bluetooth, Music, Video, Game, Shopping, Travel, and Instant messaging (such as Messages).

The functional unit layer includes a sensor module, a timer module, and a screen service module.

The sensor module is configured to obtain and process data detected by various sensors. For example, the sensor module may include a gravity recognition module, a folding recognition module, an angle recognition module, and the like. The gravity recognition module may recognize a placement manner of the foldable electronic device based on data detected by a gravity sensor. The folding recognition module is configured to determine a use status, for example, a folded state or an unfolded state, of the foldable electronic device and determine a folding manner (an inward folding manner or an outward folding manner) based on data detected by a folding sensor. The angle recognition module may determine a folding angle of the electronic device and the like based on a parameter detected by an angle sensor. The timer module provides a timing service for a user. For example, duration in which the foldable electronic device is at a specific folding angle φ is recorded.

The screen service module may include a screen management module, a multi-screen display service module, a folding display service module, an image composition service module, an input management module, and the like. The multi-screen display service module is configured to provide a user with display interfaces of a plurality of different screen areas of the foldable electronic device, and the folding display service module is configured to provide different display manners and display interfaces of the foldable electronic device in a folded state and an unfolded state. The image composition service module is configured to compose interfaces displayed in different screen areas. The input management module parses a touch event by using a touchscreen, and inputs the touch event into a corresponding screen area or service for execution.

The physical unit layer may include various types of physical hardware, for example, may include various sensors (a folding sensor, a gravity sensor, a gyroscope, an angle sensor, and the like), a timer, a screen, a folding hinge in a folding area, a camera, a speaker, an antenna, a CPU, and the like.

It may be understood that the structure shown in this application does not constitute a specific limitation on the foldable electronic device. In some other embodiments, the foldable electronic device may include more or fewer components than those shown in the figure, or combine some components, or split some components, or have different component arrangements. The components shown in the figure may be implemented by hardware, software, or a combination of software and hardware. This is not limited in this application.

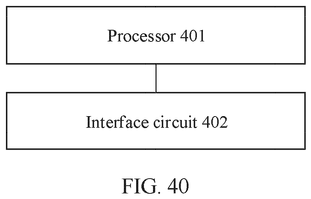

An embodiment of this application further provides a chip system. As shown in FIG. 40, the chip system includes at least one processor 401 and at least one interface circuit 402. The processor 401 and the interface circuit 402 may be interconnected by using a line. For example, the interface circuit 402 may be configured to receive a signal from another apparatus (for example, the memory of any one of the foregoing foldable electronic devices). For another example, the interface circuit 402 may be configured to send a signal to another apparatus (for example, the processor 401). For example, the interface circuit 402 may read the instructions stored in the memory, and send the instructions to the processor 401. When the instructions are executed by the processor 401, the electronic device can perform steps performed by any foldable electronic device in the foregoing embodiments. Certainly, the chip system may further include another discrete component. This is not specifically limited in this embodiment of this application.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in a form of software invoked by a processing element. In an example, a unit in any one of the foregoing apparatuses may be one or more integrated circuits configured to implement the foregoing methods, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these integrated circuit forms. For another example, when the unit in the apparatus is implemented in a form of scheduling a program by a processing element, the processing element may be a general-purpose processor, for example, a central processing unit (central processing unit, CPU) or another processor that can invoke the program. For another example, the units may be integrated together and implemented in a form of a system-on-a-chip (system-on-a-chip, SOC).

An embodiment of this application further provides an apparatus. The apparatus is included in a foldable electronic device, and the apparatus has a function of implementing behavior of the foldable electronic device in any one of the foregoing embodiments. The function may be implemented by using hardware, or may be implemented by using hardware executing corresponding software. The hardware or the software includes at least one module or unit corresponding to the foregoing function.

This application further provides a foldable electronic device, and the foldable electronic device includes the apparatus provided in the foregoing embodiments of this application.

An embodiment of this application further provides a computer-readable storage medium, configured to store computer program code. The computer program includes instructions used to perform the step of displaying an interface by the foldable electronic device in any one of the foregoing embodiments provided in embodiments of this application. The readable medium may be a read-only memory (read-only memory, ROM) or a random access memory (random access memory, RAM). This is not limited in embodiments of this application.

This application further provides a computer program product. The computer program product includes instructions. When the instructions are executed, a foldable electronic device is enabled to perform the step performed by the foldable electronic device or the step of displaying an interface in any one of the foregoing embodiments.

An embodiment of this application further provides a chip. The chip includes a processing unit and a communication unit. The processing unit may be, for example, a processor, and the communication unit may be, for example, an input/output interface, a pin, a circuit, or the like. The processing unit may execute computer instructions, so that the foldable electronic device performs any display and control method for a foldable electronic device provided in the foregoing embodiments of this application.

Optionally, the computer instructions are stored in a storage unit.

Optionally, the storage unit is a storage unit in the chip, for example, a register or a cache. Alternatively, the storage unit may be a storage unit that is in the terminal and that is located outside the chip, for example, a ROM, another type of static storage device that can store static information and instructions, or a random RAM. The processor mentioned in any one of the foregoing parts may be a CPU, a microprocessor, an ASIC, or one or more integrated circuits configured to control program execution of the foregoing display and control method for a foldable electronic device. The processing unit and the storage unit may be decoupled, are disposed on different physical devices respectively, and are connected in a wired or wireless manner, to implement respective functions of the processing unit and the storage unit, to support the system chip in implementing various functions in the foregoing embodiments. Alternatively, the processing unit and the memory may be coupled to a same device.

The foldable electronic device, the apparatus, the computer-readable storage medium, the computer program product, or the chip provided in the embodiments is configured to perform the corresponding method provided above. Therefore, for beneficial effects that can be achieved, refer to beneficial effects in the corresponding method provided above. Details are not described herein again.

An embodiment of this application further provides a graphical user interface on a foldable electronic device. The foldable electronic device has a display, a camera, a memory, and one or more processors. The one or more processors are configured to execute one or more computer programs stored in the memory. The graphical user interface includes a graphical user interface displayed when the foldable electronic device performs a step performed by the foldable electronic device in any one of the foregoing embodiments.

It may be understood that to implement the foregoing functions, the electronic device or the like includes corresponding hardware structures and/or software modules for performing the functions. A person skilled in the art should be easily aware that, with reference to the example units and algorithm steps described in the embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the electronic device or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that division into the modules in embodiments of this application is an example, and is merely logical function division. In actual implementation, there may be another division manner.

It may be clearly learned by a person skilled in the art from the foregoing description of the implementations that, for convenience and brevity of description, division into only the foregoing functional modules is used as an example for description. In actual application, the foregoing functions may be allocated to different functional modules for implementation according to a requirement, that is, an internal structure of an apparatus is divided into different functional modules, to complete all or some of the functions described above. For a specific working process of the foregoing described system, apparatus, and unit, refer to a corresponding process in the foregoing method embodiments, and details are not described herein again.

Functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of this application. However, the protection scope of this application is not limited thereto. Any change or replacement within the technical scope disclosed in this application shall fall within the protection scope of this application. Therefore, the protection scope of this application shall be subject to the protection scope of the claims.

## Claims

1. A display and control method for a foldable electronic device, wherein the method is applied to a foldable electronic device, and the method comprises:
receiving (S210) a first operation of a user, wherein the first operation is used to fold a screen of the foldable electronic device; and
determining (S220) display content and display directions of different screen areas of the foldable electronic device based on a placement manner and a folding manner of the foldable electronic device, wherein any two screen areas are located on two sides of a folding area of the foldable electronic device; and
wherein the foldable electronic device comprises a first screen area, a second screen area, and a third screen area, a manner of folding the first screen area and the second screen area around a hinge in a folding area is an inward folding manner, a manner of folding the second screen area and the third screen area around a hinge in a folding area is an outward folding manner, the first screen area and the second screen area display a same application or different applications and have a same display direction, and the third screen area and the second screen area display the same interface or separately display interfaces of different applications and have opposite display directions; and
wherein in a process in which a first application is displayed in the first screen area or the second screen area, when a first message is displayed in the first screen area or the second screen area, the first message is not displayed in the third screen area.

2. The method according to claim 1, wherein the method further comprises:
receiving a second operation performed by the user on the first screen area or the second screen area; and
in response to the second operation, displaying, in the first screen area or the second screen area, another application running in a background of the foldable electronic device, or another application associated with an application displayed in the first screen area or the second screen area.

3. A foldable electronic device (300), wherein the foldable electronic device comprises a processor (310) and a memory (321), the memory (321) is configured to store instructions, and the processor (310) is configured to read the instructions to perform the method according to any one of claims 1 to 2.

## Patentansprüche

1. Anzeige- und Steuerverfahren für eine faltbare elektronische Vorrichtung, wobei das Verfahren in einer faltbaren elektronischen Vorrichtung angewandt wird und wobei das Verfahren umfasst:
Empfangen (S210) einer ersten Operation eines Benutzers, wobei die erste Operation verwendet wird, um einen Bildschirm der faltbaren elektronischen Vorrichtung zu falten; und
Ermitteln (S220) von Anzeigeinhalten und von Anzeigerichtungen von verschiedenen Bildschirmbereichen der faltbaren elektronischen Vorrichtung basierend auf einer Platzierungsweise und einer Faltweise der faltbaren elektronischen Vorrichtung, wobei sich zwei beliebige Bildschirmbereiche auf zwei Seiten eines Faltbereichs der faltbaren elektronischen Vorrichtung befinden; und
wobei die faltbare elektronische Vorrichtung einen ersten Bildschirmbereich, einen zweiten Bildschirmbereich und einen dritten Bildschirmbereich umfasst, wobei eine Art des Faltens des ersten Bildschirmbereichs und des zweiten Bildschirmbereichs um ein Scharnier in einem Faltbereich eine einwärts gerichtete Faltweise ist, wobei eine Art des Faltens des zweiten Bildschirmbereichs und des dritten Bildschirmbereichs um ein Scharnier in einem Faltbereich eine auswärts gerichtete Faltweise ist, wobei der erste Bildschirmbereich und der zweite Bildschirmbereich eine gleiche Anwendung oder unterschiedliche Anwendungen anzeigen und eine gleiche Anzeigerichtung aufweisen, und wobei der dritte Bildschirmbereich und der zweite Bildschirmbereich die gleiche Oberfläche anzeigen oder Oberflächen von unterschiedlichen Anwendungen separat anzeigen und entgegengesetzte Anzeigerichtungen aufweisen; und
wobei bei einem Prozess, bei dem eine erste Anwendung in dem ersten Bildschirmbereich oder dem zweiten Bildschirmbereich angezeigt wird und wenn eine erste Nachricht in dem ersten Bildschirmbereich oder dem zweiten Bildschirmbereich angezeigt wird, die erste Nachricht nicht in dem dritten Bildschirmbereich angezeigt wird.

2. Verfahren nach Anspruch 1, wobei das Verfahren ferner umfasst:
Empfangen einer zweiten Operation, die von dem Benutzer auf dem ersten Bildschirmbereich oder dem zweiten Bildschirmbereich durchgeführt wird; und
als Reaktion auf die zweite Operation, Anzeigen, in dem ersten Bildschirmbereich oder dem zweiten Bildschirmbereich, einer anderen Anwendung, die in einem Hintergrund der faltbaren elektronischen Vorrichtung ausgeführt wird, oder einer anderen Anwendung, die mit einer Anwendung assoziiert ist, die in dem ersten Bildschirmbereich oder dem zweiten Bildschirmbereich angezeigt wird.

3. Faltbare elektronische Vorrichtung (300), wobei die faltbare elektronische Vorrichtung einen Prozessor (310) und einen Speicher (321) umfasst, wobei der Speicher (321) konfiguriert ist, um Anweisungen zu speichern und wobei der Prozessor (310) konfiguriert ist, um die Anweisungen zum Durchführen des Verfahrens nach einem der Ansprüche 1 bis 2 zu lesen.

## Revendications

1. Procédé d'affichage et de commande d'un dispositif électronique pliable, dans lequel le procédé est appliqué à un dispositif électronique pliable, et le procédé comprend :
la réception (S210) d'une première opération d'un utilisateur, la première opération étant utilisée pour plier un écran du dispositif électronique pliable ; et
la détermination (S220) d'un contenu d'affichage et de directions d'affichage de différentes zones d'écran du dispositif électronique pliable sur la base d'une manière de placement et d'une manière de pliage du dispositif électronique pliable, deux zones d'écran quelconques étant situées sur deux côtés d'une zone de pliage du dispositif électronique pliable ; et
dans lequel le dispositif électronique pliable comprend une première zone d'écran, une deuxième zone d'écran, et une troisième zone d'écran, une manière de pliage de la première zone d'écran et de la deuxième zone d'écran autour d'une charnière dans une zone de pliage est une manière de pliage vers l'intérieur, une manière de pliage de la deuxième zone d'écran et de la troisième zone d'écran autour d'une charnière dans une zone de pliage est une manière de pliage vers l'extérieur, la première zone d'écran et la deuxième zone d'écran affichent une même application ou des applications différentes et ont une même direction d'affichage, et la troisième zone d'écran et la deuxième zone d'écran affichent la même interface ou séparément des interfaces d'affichage de différentes applications et ont des directions d'affichage opposées ; et
dans lequel dans un processus dans lequel une première application est affichée dans la première zone d'écran ou la deuxième zone d'écran, lorsqu'un premier message est affiché dans la première zone d'écran ou dans la deuxième zone d'écran, le premier message n'est pas affiché dans la troisième zone d'écran.

2. Procédé selon la revendication 1, dans lequel le procédé comprend en outre :
la réception d'une deuxième opération réalisée par l'utilisateur sur la première zone d'écran ou la deuxième zone d'écran ; et
en réponse à la deuxième opération, l'affichage, dans la première zone d'écran ou dans la deuxième zone d'écran, d'une autre application s'exécutant sur un arrière plan du dispositif électronique pliable, ou d'une autre application associée à une application affichée dans la première zone d'écran ou dans la deuxième zone d'écran.

3. Dispositif électronique pliable (300), dans lequel le dispositif électronique pliable comprend un processeur (310) et une mémoire (321), la mémoire (321) est configurée pour stocker des instructions, et le processeur (310) est configuré pour lire les instructions pour réaliser le procédé selon l'une quelconque des revendications 1 à 2.
